# EUROPEAN PATENT SPECIFICATION

(11) **EP 1 766 929 B1**
(45) Date of publication and mention of the grant of the patent: **20.04.2011**
(21) Application number: 05766185.2
(22) Date of filing: 11.07.2005
(51) Int. Cl.: H04L 29/06

(54) **Network mobility management method and corresponding apparatusses**
Netzwerk-Mobilitätsverwaltungsverfahren und entsprechende Vorrichtungen
Procédé de géstion de la mobilité d'un réseau et appareils correspondants

(30) Priority: 09.07.2004 JP 2004203869; 15.10.2004 JP 2004302260; 15.10.2004 JP 2004302269
(43) Date of publication of application: 28.03.2007
(73) Proprietor: Panasonic Corporation, Kadoma-shi Osaka 571-8501 (JP)
(72) Inventor: HIRANO, Jun Matsushita Ind. Co., Ltd., Chuo-ku Osaka-shi, Osaka 540-6319 (JP); NG, Chan, Wah c/o Panasonic Singapore Lb. Pte. Ltd, Singapore 534415 (SG); TAN, Pek, Yew Panasoni Singapore Lb. Pte. Ltd., Singapore 534415 (SG)
(74) Representative: Grünecker, Kinkeldey, Stockmair & Schwanhäusser Anwaltssozietät
(86) International application number: PCT/JP2005/013195
(87) International publication number: WO 2006/006706

(56) References cited:
- RYUJI WAKIKAWA MASAFUMI WATARI KEIO UNIV /WIDE: "Optimized Route Cache Protocol (ORC)" IETF STANDARD-WORKING-DRAFT, INTERNET ENGINEERING TASK FORCE, IETF, CH, 10 July 2004 (2004-07-10), XP015036593 ISSN: 0000-0004 cited in the application
- NG PANASONIC SINGAPORE LABS J HIRANO PANASONIC C: "Extending Return Routability Procedure for Network Prefix (RRNP)" IETF STANDARD-WORKING-DRAFT, INTERNET ENGINEERING TASK FORCE, IETF, CH, 7 October 2004 (2004-10-07), XP015039491 ISSN: 0000-0004
- ERNST T ET AL: "Mobile Networks Support in Mobile IPv6" IETF STANDARD-WORKING-DRAFT, INTERNET ENGINEERING TASK FORCE, IETF, CH, March 2002 (2002-03), XP015000834 ISSN: 0000-0004
- KYEONGJIN LEE ET AL: "Route optimization for mobile nodes in mobile network based on prefix delegation" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, vol. 3, 6 October 2003 (2003-10-06), pages 2035-2038, XP010702748 ISBN: 0-7803-7954-3

## Description

### TECHNICAL FIELD

This invention relates to the field of communication technology using the Internet Protocol (IP). In particular, it relates to the field of communication technology for a mobile network which moves with a mobile router.

### BACKGROUND ART

Many devices today communicates with each other using the Internet Protocol. In order to provide mobility support to mobile devices, the Internet Engineering Task Force (IETF) has developed the "Mobility Support in IPv6" (refer to the following Non-Patent Document 1). In Mobile IP, each mobile node has a permanent home domain. When the mobile node is attached to its home network, it is assigned a primary global address known as a home-address (HoA). When the mobile node is away, i.e. attached to some other foreign networks, it is usually assigned a temporary global address known as a care-of-address (CoA). The idea of mobility support is such that the mobile node can be reached at the home-address even when it is attached to other foreign networks.

This is done in [Non-Patent Document 1] with an introduction of an entity at the home network known as a home agent (HA). Mobile nodes register their care-of-addr-esses with the home agents using messages known as Binding Updates (BU). This allows the home agent to create a binding between the home-address and the care-of-address of the mobile node. The home agent is responsible to intercept messages that are addressed to the mobile node's home-address, and forward the packet to the mobile node's care-of-address using packet encapsulation (i.e. putting one packet as the payload of a new packet, also known as packet tunneling).

Although this enables mobility support, a problem known as sub-optimal or dog-leg routing results. This is because when a mobile node communicates with a correspondent node (CN), packets sent between them must go through the home agent. For this reason, it is specified in [Non-Patent Document 1] that the mobile node can send a BU to the correspondent node. Once the correspondent node knows the binding between the home-address and.the care-of-address of the mobile node, packets traversing between them can be directly routed to and from the care-of-address of the mobile node (without going through the home agent).

However, security is now a concern. BU sent from a mobile node to its home agent can be secured, because it is assumed that the mobile node and its home agent share a security association. Such an assumption becomes unrealistic for a mobile node and a correspondent node. In other words, it is not easy for BU sent from a mobile node to a correspondent node to be kept secured.

For this, a procedure, known as the Return Routability (RR) procedure is specified in [Non-Patent Document 1]. The RR procedure allows the correspondent node to ascertain that the home-address and the care-of-address specified in a BU are indeed collocated. In essence, the RR procedure requires the mobile node to obtain two securely generated tokens from the correspondent node prior to sending a BU to the correspondent node.

To initiate the RR procedure, the mobile node first sends the correspondent node two different messages : a Home-Test-Init (HoTI) message and a Care-of-Test-Init (CoTI) message.
The HoTI is sent via the home agent with the mobile node's home-address as the packet source, and the CoTI is sent directly with the mobile node's care-of-address as the packet source. The correspondent node, upon receiving the HoTI, will reply with a Home-Test (HoT) message sent to the home-address of the mobile-node that contains a security token, called the Home Keygen Token (HoK).
The HoK is cryptographically generated based on the home-address of the mobile node using a private key. Similarly, the correspondent node, upon receiving the CoTI, will reply with a Care-of-Test (CoT) message sent to the care-of-address of the mobile node that contains a security token, called the Care-of Keygen Token (CoK). The CoK is cryptographically generated based on the care-of-address of the mobile node using a private key.

Once the mobile node receives both the HoT and CoT messages, it can send the correspondent node a BU containing an Authenticator. This Authenticator is a cryptographically generated checksum of the BU using a key that is a concatenation of the HoK and CoK. In this way, when the correspondent node receives the BU, it can independently calculate the checksum and check that the checksum is identical to that carried in the Authenticator. By this check, it is verified that the care-of-address and the home-address specified in the BU are indeed collocated.

With the ever-increasing proliferation of wireless devices, it is foreseeable that a new class of mobility technology will emerge: network mobility, where a whole network of nodes changes its point of attachment in entirety. Extending the concept of mobility support for individual hosts to mobility support for a network of nodes, the objective of a network in motion solution is to provide a mechanism where nodes in a mobile network can be reached by their primary global addresses, no matter where on the Internet the mobile network is attached to.

There exist a few prior attempts to solve the network in motion problem based on Mobile IP. One proposed solution for network in motion is the Mobile Router Support (refer to the following Patent Document 1). In this Patent Document 1, the mobile router controlling a mobile network performs routing of packets to and from the mobile network using some routing protocols when it is in its home domain. When the mobile router and its mobile network move to a foreign domain, the mobile router registers its care-of-address with its home agent. A tunnel is then set up between the mobile router and the home agent. The routing protocol used when the mobile router is at its home domain is again performed over the tunnel. This means that every packet going to the mobile network will be intercepted by the home agent and forwarded to the mobile router through the tunnel. The mobile router then forwards the packet to a host in its mobile network. When a node in its mobile network wishes to send a packet out of the network, the mobile router intercepts the packet and forwards the packet to the home agent through the tunnel. The home agent then sends the packet out to the intended recipient. Another solution disclosed in the following Patent Document 2a or 2b is largely similar, except that only support for IPv6 is specifically stated in Patent Document 2a or 2b.

In the following Patent Document 3, a method of using a multicast address as the care-of-address of the mobile router is disclosed.
This allows the mobile router to be reached using the same care-of-address even after it has moved to a new access network. The IETF is also currently developing solutions for network mobility as disclosed in the following non-Patent Document 2a or 2b. In Non-Patent Document 2a or 2b, it is specified that the mobile router when sending BU to home agent, will specify the network prefix (or the network prefixes) which the nodes in the mobile network is using. These are specified using special options known as Network Prefix Options to be inserted into the BU. These allow the home-agent to build a prefix-based routing table so that the home-agent will forward any packets sent to destinations with these prefixes to the care-of-address of the mobile router.

In the following Non-Patent Document 3, the correspondent router (CR) is disclosed. The correspondent router is an edge router of the network where the correspondent node resides (i.e. the correspondent network). This correspondent router manages a binding about a certain mobile router and is responsible to forward the packet through the tunnel to the network prefix of the mobile network which the mobile router comprises behind.
Non-Patent Document 1: Johnson, D. B., Perkins, C. E., and Arkko, J., "Mobility Support in IPv6", RFC 3775, June 2004
Non-Patent Document 2a: Devarapalli, V., et. al., "NEMO Mobility (NEMO) Basic Support Protocol", IETF Internet Draft: draft-ietf-nemo-basic-support-03.txt, December 2003
Non-Patent Document 2b: Devarapalli, V., et. al., "NEMO Mobility (NEMO) Basic Support Protocol", RFC 3963, February 2005 (This document does not constitute prior art against the invention included in Japan Patent Application No. 2004-203869, No. 2004-302260 and No. 2004-302269.)
Non-Patent Document 3: Ryuji Wakikawa and Masafumi Watari, "Optimized Route Cache Protocol", IETF Internet Draft: draft-wakikawa-nemo-orc-00 . txt, July 2004
Patent Document 1: U.S.Patent No. 6,636,498
Patent Document 2: U.S.Patent Publication No. 2003-117965
Patent Document 3: U.S.Patent Publication No. 2003-95523.

In above-mentioned Patent Document 1, Patent Document 2 and Non-Patent Document 1, however, there is no provision for packets to be sent directly from the mobile network to a correspondent node without going through the home agent. These lead to the same problem of "dog-leg" routing in Mobile IPv6, resulting in higher packet latency.

Although the means of sending the correspondent node a BU that binds the multicast care-of-address to the home-address of the mobile router is mentioned in above-mentioned Patent Document 3, it is unclear how the correspondent node can associate addresses of mobile network nodes in the mobile network behind the mobile router with the home-address of the mobile router.

A naive solution is to simply include a singular or plurality of network prefix options as mentioned in Non-Patent Document 2a or 2b into BU messages sent to correspondent nodes. In this way, the correspondent node will associate addresses from the specified network prefix(es) with the mobile router, and can then send packets with destination from these prefixes directly to the care-of-address of the mobile router. Though this seems to be a plausible solution, careful analysis by the inventors of the present invention reveals that the RR procedure only ensures that the care-of-address is collocated with the home-address of the mobile router. By simply adding the network prefix option in the BU messages, the correspondent node has no means of ascertaining the specified network prefix is indeed handled by the mobile router with the specified home-address. Without such assurance, a malicious attacker can supply the correspondent node with its own (valid) home-address and care-of-address, but claim in the BU that it is handling prefixes that it does not own. This will open the doors to DoS (denial-of-service) and spoofing attack, where the correspondent node sends packets meant for other nodes with address from the attacked prefixes to the attacker.

The same problem occurs for the correspondent router which is described in Non-Patent Document 3. When a malicious correspondent router claims to the mobile router as if the malicious correspondent router were handling network prefix(es) of the correspondent network which indeed it does not handle, the malicious correspondent router can disguise itself as a owner of the correspondent network.

Document by Ernst et al. "Mobile Networks Support in Mobile Ipv6", IETF standard working draft, IETF, CH, March 2002 relates to supporting a mobility of mobile nodes or networks connected via a mobile host including nodes that are stationary within such a mobile network. Accordingly, the mobile nodes and mobile hosts may change their point of attachment. In order to facilitate this, there is a binding between the mobile network prefix a mobile router care-of address. All packets with a destination address corresponding to the mobile network prefix are thus routed to the mobile router care-of address. This document also indicates that there are some security issues open, such as ensuring the ownership of a network prefix.

### DISCLOSURE OF THE INVENTION

In view of the above-mentioned problems, the first object of the present invention is to make a communication node managing a network capable of showing another node that the communication node itself manages the network indeed.

Furthermore, the second object of the present invention is to enable a correspondent node to verify that the mobile router indeed manages a network prefix which is specified in the BU message.

Furthermore, the third object of the present invention is to enable a mobile router communicating with a correspondent router to verify that the correspondent router indeed represents a correspondent network.

In order to achieve the above-mentioned fir st object, according to the present invention, a c ommunication node managing a network informs anoth er communication node of network identification in formation (network prefix) of the network, and ano ther communication node verifies that the network is indeed managed by the communication node by exc hanging the messages. At least one of the messages is sent to an address based on the network identi fication information.

In order to achieve the above-mentioned sec ond object, according to the present invention, th e RR procedure is improved between a.mobile router and a correspondent node, or between a correspond ent router and a mobile router. The improved RR p rocedure is performed before registering the bindi ng of the network prefix(es) of its mobile network , its care-of address and its home-address.

In this improved RR procedure, a mobile rou ter can specify in the HoTI message a part or all the network prefixes which the mobile router owns.
A correspondent node consults the network prefix in the HoTI message, and sends the Network Prefix Test (NPT) message for verifying the validity of the network prefix in addition to the usual HoT me ssage. In case that there is a plurality of netwo rk prefixes, a correspondent node can send the NPT message for each network prefix.

The NPT message contains the token that is cryptographically generated based on the network p refix and is sent to an address which includes the network prefix. The mobile router intercepts all of the NPT messages and stores the token being in cluded in each NPT message. The BU message from t he mobile router to the correspondent node contain s the checksum for verifying the validity. The ch ecksum is generated using tokens which are include d in the HoT, CoT and NPT messages from the corres pondent node. In this way, the correspondent node can verify whether or not the mobile router indee d owns the network prefix the mobile router claims to own, in addition to the binding of the care-of address and the home-address of the mobile router , and the network prefix. Thus the second object of the present invention is achieved. The corresp ondent node, after verifying the network prefix, c an setup routing information so as to forward, by means of packet encapsulation or otherwise, packet s destined to the address from the network prefix directly to the care-of-address of the mobile rout er, without going through the home agent.

In another aspect, in this improved RR proc edure, a correspondent router can specify in the H oTI message or CoT message a part or all the netwo rk prefixes which the correspondent router represe nts by a proxy function. A correspondent node con sults the network prefix in the HoTI message or Co T message, and sends the Network Prefix Test (NPT) message for verifying the validity of the network prefix. In case that there is a plurality of net work prefixes, a correspondent node can send the N PT message for each network prefix.

The NPT message contains the token that is cryptographically generated based on the network p refix and is sent to an address which includes the network prefix. The correspondent router interce pts all of the NPT messages and stores the token b eing included in each NPT message. The BU message from the mobile router to the correspondent node contains the checksum for verifying the validity.
The checksum is generated using tokens which are included in the HoT, CoT and NPT messages from the correspondent node. In this way, the corresponde nt node can verify whether or not the corresponden t router indeed owns t-he network prefix the corres pondent router claims to own, in addition to the b inding of the address of the correspondent router and the network prefix. Thus the third object of the-present invention is achieved The correspond ent node, after verifying the network prefix, can setup routing information so as to forward, by mea ns of packet encapsulation or otherwise, packets d estined to the address from the network prefix dir ectly through the tunnel to the correspondent rout er.

According to one aspect of the present inve ntion to achieve the first object, a communication node managing a network can be capable of showing another node that the communication node itself m anages the network indeed.

According to another aspect of the present invention to achieve the second object, a correspondent node can verify that the mobile router indeed manages a network prefix which is specified in the BU message.

According to another aspect of the present invention to achieve the third object, a mobile router communicating with a correspondent router can verify that the correspondent router indeed represents a correspondent network.

### BRIEF DESCRIPTION OF THE DRAWINGS

Fig. 1 is a diagram showing a communication system in the first embodiment of the present invention;
Fig. 2 is a diagram showing a sequence of the improved RR procedure in the first embodiment of the present invention;
Fig. 3 is a diagram showing an example of the contents of CoTI message 201 in the first embodiment of the present invention;
Fig. 4 is a diagram showing an example of the contents of CoT message 202 in the first embodiment of the present invention;
Fig. 5 is a diagram showing an example of the contents of HoTI message 203 in the first embodiment of the present invention;
Fig. 6 is a diagram showing an example of the contents of HoT message 204 in the first embodiment of the present invention;
Fig. 7 is a diagram showing an example of the contents of NPT message 205 in the first embodiment of the present invention;
Fig. 8 is a diagram showing an example of the contents of BU message 206 in the first embodiment of the present invention;
Fig. 9 is a diagram showing the structure of the XBUL 900 in the first embodiment of the present invention;
Fig. 10 is a flowchart of the algorithm in the first embodiment of the present invention;
Fig. 11 is a diagram showing the hook process attached to the processing of incoming packet in step S1200 in the first embodiment of the present invention;
Fig. 12 is a diagram showing the algorithm used by the correspondent node 130 to check the validity of a received BU message 206 in the first embodiment of the present invention;
Fig. 13 is the message sequence diagram for the reduced bandwidth improved Return Routability procedure in the first embodiment of the present invention;
Fig. 14 is a diagram showing an example of the contents of PHoTI message 253 in the first embodiment of the present invention;
Fig. 15 is a diagram showing an example of the contents of PHoT message 254 in the first embodiment of the present invention;
Fig. 16 is a flow chart showing an example of the process of mobile router 111 in the case that correspondent node 130 generates the NPK token using the destination address in the first embodiment of the present invention;
Fig. 17 is a flow chart showing an example of the operation in the case that mobile router 111 preferably keeps the result of the operation before in the first embodiment of the present invention;
Fig. 18 is a diagram showing a communication system in the second embodiment of the present invention;
Fig. 19 is a diagram showing a sequence to describe the detail of the operation when correspondent router 150 registers the network prefix of the correspondent network it manages with mobile router 111 in the second embodiment of the present invention;
Fig. 20 is a diagram showing the message sequence of the optimized Return Routability procedure between mobile router 111 and correspondent router 150 in the second embodiment of the present invention;
Fig. 21A is a diagram showing a communication system in the third embodiment of the present invention;
Fig. 21B is a diagram showing a communication system which comprises mobile router with mobile network behind;
Fig. 21C is a diagram showing a communication system which comprises fixed router serving as proxy router for the predetermined network;
Fig. 21D is a diagram showing a communication system which comprises a plurality of fixed routers managing the same fixed network. Above proxy router has ability to represent one or more networks such as mobile router, correspondent router or a certain router managing a certain network;
Fig. 22 is a flow chart showing the operation in the third embodiment of the present invention.

### BEST MODE FOR CARRYING OUT THE INVENTION

A system, associated apparatus and method for validating the collocation ot network prefix and care-of-address are disclosed in this specification. To help understand the disclosed invention, the following definitions are used:
(i) A "packet" is a self-contained unit of data of any possible format that could be delivered on a data network. A "packet" normally consists of two portions: a "header" portion and a "payload" portion. The "payload" portion contains data that are to be delivered, and the "header" portion contains information to aid the delivery of the packet. A "header" must have a source address and a destination address to respectively identify the sender and the recipient of the "packet". The "header" may have a single or plurality of "options" that contains extra information.
(ii) A "mobile node" is a network element that changes its point of attachment to the global packet-switched data communications network. It may be used to refer to an end-user terminal, or an intermediate network element that serves as a gateway, a router or an intelligent network hub that can change its point of attachment to the global packet-switched data communications network. The "mobile node" that is an end-user terminal is more specifically referred to as a "mobile host"; whereas the "mobile node" that is an intermediate network element that serves as a gateway a router, or an intelligent network hub is more specifically referred to as a "mobile router".
(iii) A "mobile network" refers to a network of nodes that moves together as a whole, including one or multiple mobile routers which provide connection to the global packet-switched data communications network for the mobile network. Other network elements in the mobile network that relies on these mobile routers for global connectivity are referred to as "mobile network nodes". These mobile network nodes have addresses configured from one or more network prefixes advertised by the mobile router(s).
(iv) A "home-address" is a primary global address assigned to a mobile node that can be used to reach the mobile node regardless of where on the global packet-switched data communications network the mobile node is currently attached to.
   In this document, the abbreviation "HoA" is used to abbreviate "home-address".
(v) A mobile node that is attached to the global data communications network where its home-address is topologically compatible with the addresses used in the vicinity of the point of attachment is referred to as "at home". The vicinity of this point of attachment that is controlled by a single administrative authority is referred to as the "home domain" of the mobile node.
(vi) A mobile node that is attached to the global packet-switched data communications network at a point where the home-address of the said mobile node is topologically incompatible with the addresses used in the vicinity of that point of attachment is referred to as "away", and the vicinity of the said point of attachment is referred to as the "foreign domain".
(vii) A "care-of-address" is a temporary global address assigned to a mobile node that is away such that the assigned "care-of-address" is topologically compatible with the addresses used in the vicinity of the mobile node's point of attachment to the global packet-switched data communications network. In this document, the abbreviation "CoA" is used to abbreviate "care-of-address".
(viii) A "home agent" is a network entity that resides at the home domain of a mobile node that performs registration services of care-of-addresses of the mobile node when it is away, and to forward packets addressed to the home-address of the mobile node to the care-of-address of the mobile node. Note that a home agent is also a router.
(ix) A "correspondent node" is any network element connected to the global packet-switched data communications network that communicates with a mobile node or a mobile network node.
(x) A "network prefix" is a portion, usually the leftmost portion, of an address to be used on a local area network segment. The "network prefix" is usually advertised by a router on that network segment, and nodes on the network segment configure an address based on this network segment. "Network Prefixes" are used to simplify routing information, so that routers can make decision based on the prefix of the destination: packets with destinations from the same network prefix are routed identically.

In the following description, for purpose of explanation, specific numbers, times, structures and other parameters are set forth in order to provide a thorough understanding of the present invention. However, it will be apparent to a person skilled in the art that the present invention may be practiced without these specific details.

### (First Embodiment)

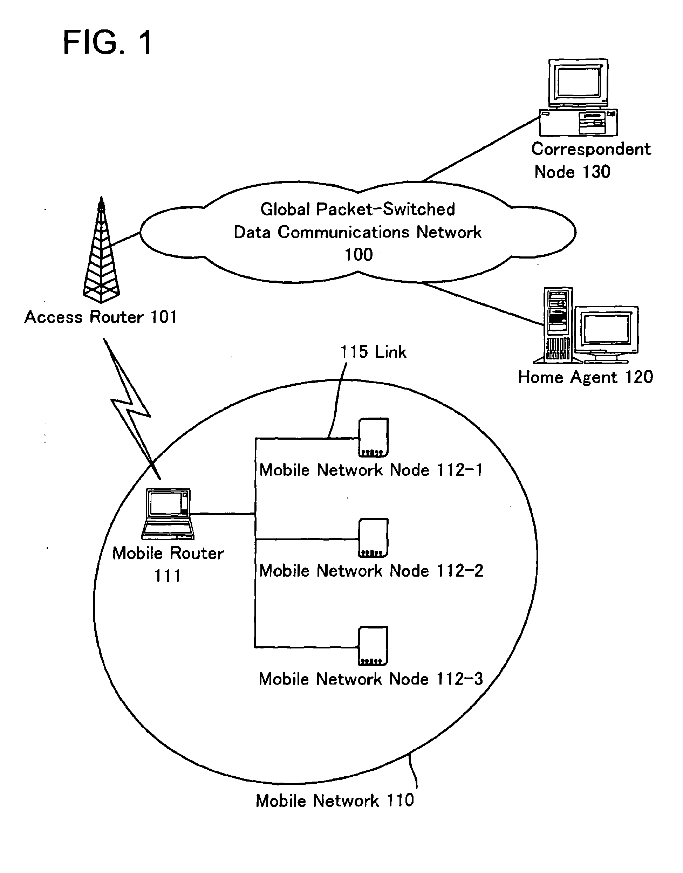

The first embodiment of the present invention is described. Fig. 1 is a diagram showing a communication system in the first embodiment of the present invention. In Fig. 1, a system of communication nodes connected to a global packet-switched data communications network 100 is shown. Mobile router 111 is connected to the global packet-switched data communications network 100 via an access router 101, and it provides global connectivity to the mobile network 110, including one or more mobile network nodes 112. In this Fig. 1, three such mobile network nodes 112-1, 112-2 and 112-3 are illustrated. We use the general reference 112 to refer to any one of the mobile network nodes. Furthermore, only one mobile network 110 behind the mobile router 111 is illustrated in Fig. 1. However, for example, the mobile router 111 can comprise a plurality of mobile networks 110 which have separate network prefixes. In this case, a plurality of network prefixes is provided in the network which the mobile router 111 belongs to. For example, the mobile network node 112-1 and the mobile network node 112-2 can separately configure their address by using separate network prefixes.

The mobile network nodes 112 are connected to mobile router 111 via the local area network segment (link) 115. This link 115 may be wireless or wired. Home agent 120 is the home agent for the mobile router 110, and correspondent node 130 is a network element connected to the global packet-switch data communications network 100 that communicates with a mobile network node 112. According to the present invention, packets exchange between the mobile router 111 and the correspondent node 130 so that the-correspondent node 130 can ascertain that the network prefix(es) and the care-of-address specified by mobile router 111 in a BU message is collocated at the home-address of the mobile router 111. This sequence of packet exchange is an improvement over the Return Routability (RR) procedure disclosed in Non-patent document 1.

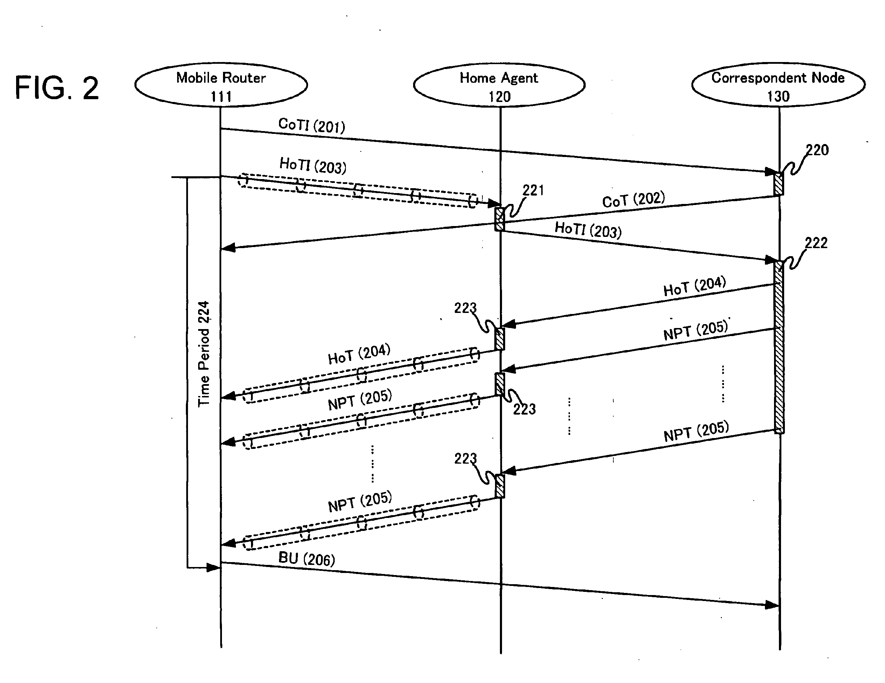

Fig. 2 is a diagram showing a sequence of the improved RR procedure in the first embodiment of the present invention. When the mobile router 111 tries to send a BU message to the correspondent node 130, the RR procedure needs to be initiated. In the RR procedure, mobile router 111 first sends the Home-Test Init (HoTI) message 203 and Care-of-Test Init (CoTI) message 201 to the correspondent node 130. Note that the order of the HoTI message 203 and the CoTI message 201 is not important.

For the CoTI message 201, the mobile router 111 uses its care-of-address as the source. Thus this packet need not go through its home agent 120.

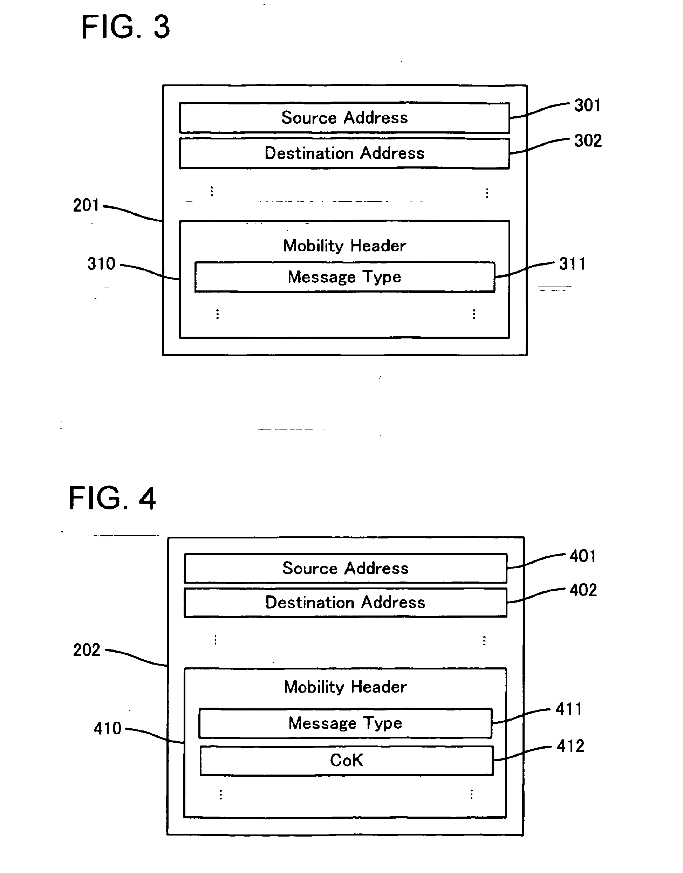

Fig. 3 is a diagram showing an example of the contents of CoTI message 201 in the first embodiment of the present invention. The source address 301 and the destination address 302 specify the care-of-address of mobile router 111 and the address of correspondent node 130 respectively. The mobility header 310, part of the packet 201, contains a message type field 311 that indicates this packet as a CoTI message.

Upon receiving the CoTI message 201, correspondent node 130 replies with a Care-of-Test (CoT) message 202. The period 220 indicates processing delay (processing time). The CoTI message 202 contains the Care-of Keygen Token (CoK) and is addressed to the care-of-address of mobile router 111. This is similar to the original RR procedure in Non-Patent Document 1, and the CoK token of the original RR procedure described in Non-Patent Document 1 can be used as this CoK token.

Fig. 4 is a diagram showing an example of the contents of CoT message 202 in the first embodiment of the present invention. The source address 401 and the destination address 402 specify the address of correspondent node 130 and the care-of-address of mobile router 111 respectively. The mobility header 410, part of the packet 202, contains a message type field 411 that indicates this packet as a CoT message 202 and a CoK field 412 containing the 64 bits CoK that is cryptographically generated based on the care-of-address of mobile router 111 using a private key of correspondent node 130.

For the HoTI message 203, mobile router 111 uses its home-address as the source. Thus the packet will be tunneled to home agent 120, which decapsulates the packet and forwards it to correspondent node 130. The period 221 indicates processing delay (processing time) due to, for example, decapsulation. The HoTI message 203, in addition to carrying the information required in the original RR procedure, also includes extra options that specify the list of network prefixes the mobile network 110 has. This can be in the form of a series of network prefix options as specified in Non-patent document 2a or 2b. Each network prefix option carries the information of one network prefix.

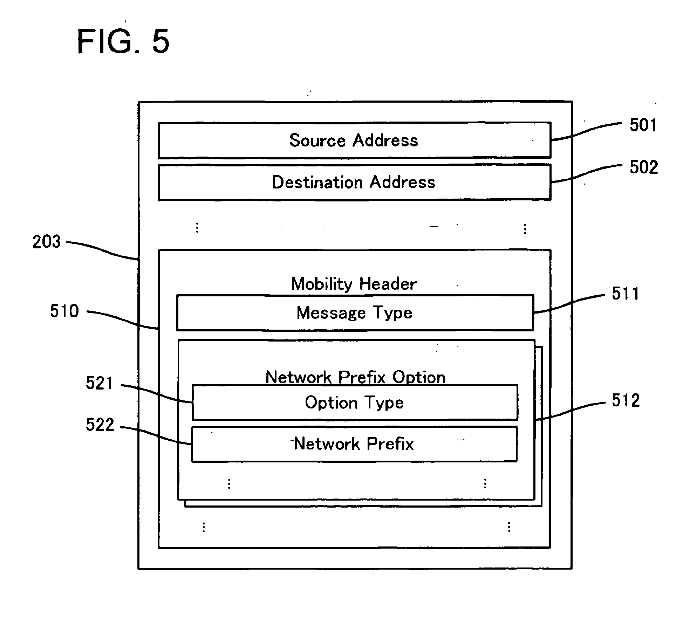

Fig. 5 is a diagram showing an example of the contents of HoTI message 203 in the first embodiment of the present invention. The source address 501 and the destination address 502 specify the home-address of mobile router 111 and the address of correspondent node 130 respectively. The mobility header 510, part of the packet 203, contains a message type field 511 that indicates this packet as a HoTI message. It can also contain one or more network prefix options 512. Each network prefix option 512 includes an option type field 521 that indicates this option as a network prefix option, and a network prefix field 522 that contains one network prefix.

When correspondent node 130 receives the HoTI message 203, it responds with the Home-Test (HoT) message 204. The HoT message 204 includes a Home Keygen Token (HoK) and also the number of network prefixes which correspondent node 130 accepts from the HoTI message 203. The HoK token, as well as the CoK token, of the original RR procedure described in Non-Patent Document 1 can be also used as this HoK token. Moreover, as is described later, it is preferable that correspondent node 130 is arranged to have capability of properly selecting the number of the accepted network prefixes and whether or not it accepts the specific network prefix. The HoT message 204 is addressed to the home-address of mobile router 111, thus it will be encapsulated by home agent 120. The time period 223 indicates processing delay (processing time) due to, for example, encapsulation.

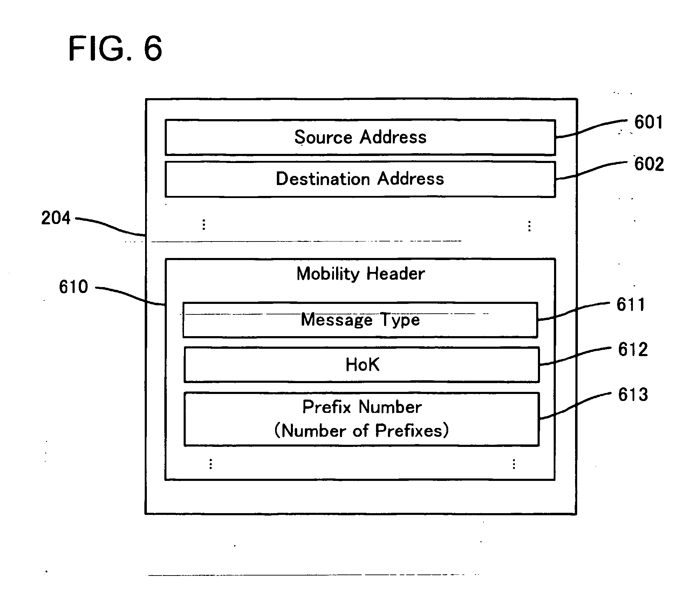

Fig. 6 is a diagram showing an example of the contents of HoT message 204 in the first embodiment of the present invention. The source address 601 and the destination address 602 specify the address of correspondent node 130 and the home-address of mobile router 111 respectively. The mobility header 610, part of the packet 204, contains a message type field 611 that indicates this packe.t as a HoT message 204, and a HoK field 612 containing the 64 bits HoK that is cryptographically generated based on the home-address of mobile router 111 using a private key of correspondent node 130. The mobility header 610 can also include the field (prefix number field) 613 to indicate the number of network prefixes in the HoTI message 203 that are accepted by the correspondent node 130. Note that this field 613 can also be included in the mobility header 610 as an option.

Here, an example case is disclosed that the network prefixes of the mobile network 110 are embedded in the HoTI message 203, and the reply to the network prefixes (such as the above-mentioned prefix number field 613) is embedded in the HoT message 204. However, it is possible that correspondent node 130 can be arranged to obtain the network prefixes of the mobile network 110 which resides behind mobile router 111 by using another message. Information on the network prefixes can be notified and replied by using certain combination of CoTI message 201 and/or HoTI message 203, and CoT message 202 and/or HoT message 204. That is, for example, the network prefixes of the mobile network 110 are embedded in the CoTI message 201, and the reply is embedded in the CoT message 202. Furthermore, information on the network prefixes can be notified and replied by using different messages from CoTI message 201 / CoT message 202 or HoTI message 203 / HoT message.

After sending out the HoT message 204, correspondent node 130 next sends out one or more Network Prefix Test (NPT) message 205 for each network prefix listed in the HoTI message 203 that correspondent node 130 accepts. The correspondent node 130 is not required to accept all network prefixes that are listed in the HoTI message 203. It is up to the configuration of the correspondent node 130 to accept all, some or none of the prefixes specified in a HoTI message 203 that it has received. This is because if the correspondent node were required to accept all prefixes, it would have to send out as many NPT messages as there are prefixes in the HoTI message 203.

This could be used to launch a distributed flooding attack when the attacker sends only one HoTI message 203, and the receiver is forced to respond with multiple NPT messages 205. For this reason, correspondent node 130 can select from the list of network prefixes in the HoTI message 203 a subset of prefixes to accept. This also allows the correspondent node 130 to reject prefixes that may conflict with the routing configurations of the correspondent node.

This NPT message 205 is of a format similar to the HoT message 204, except that (a) it contains a Network Prefix Keygen Token (NPK) instead of a HoK, and (b) it has a destination address that includes the network prefix that this NPT message 205 corresponds to. The above-mentioned destination address including the network prefix is a destination address which comprises prefix part including the network prefix specified in the network prefix option 512. Examples of destination address including the network prefix are follows; the address which consists of the prefix part including the designated network prefix and the host part including the randomly generated number, the address which consists of the prefix part including the designated network prefix and the host part including the specific number, the address which consists of the prefix part including the designated network prefix and the host part including the number informed from mobile router 111 in a certain way, etc.

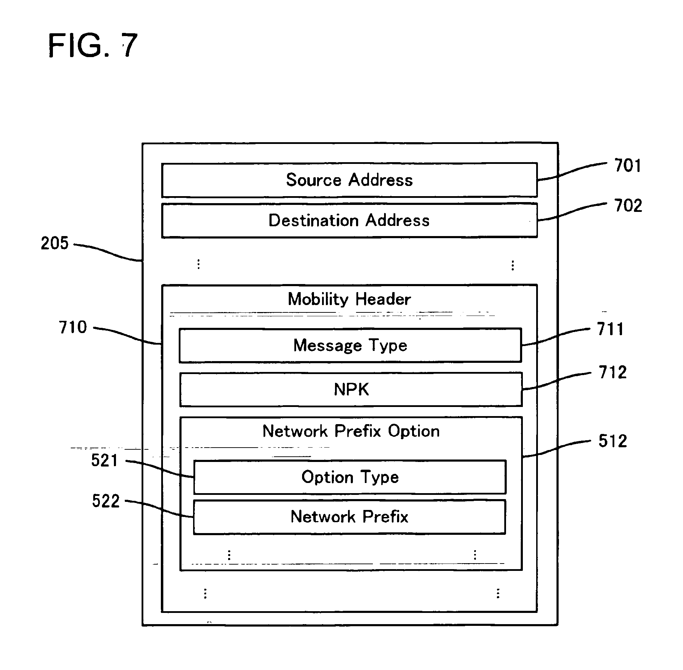

Fig. 7 is a diagram showing an example of the contents of NPT message 205 in the first embodiment of the present invention. The source address 701 specifies the address of correspondent node 130, and the destination address 702 specifies the address that includes the network prefix specified in the network prefix option 512. The mobility header 710, part of the packet 205, contains a message type field 711 that indicates this packet as a NPT message 205, and a NPK field 712 containing the 64 bits NPK that is cryptographically generated based on the network prefix specified in network prefix option 512 using a private key of correspondent node 130.
The mobility header 710 can also include network prefix option 512, which specifies the network prefix that is accepted by the correspondent node 130 from the HoTI message 203.

Because the HoTI message 203 may contain multiple prefixes, the correspondent node 130 may have to send multiple NPT messages. Also, the correspondent node 130 may wish to send multiple NPT messages to test a single network prefix.
This may cause a burst of network traffic after receiving a HoTI message 203. Hence, the correspondent node can have a small delay in between the transmission of each NPT message 205. This is reflected in Fig. 2 by the relatively longer time period 222. The delays between transmissions of successive NPT messages 205, including any processing delay, should not exceed a pre-determined maximum, t_NPT_delay.

Since each of the NPT messages 205 is sent to an address configured from the network prefix in the mobile network 110, the NPT messages are routed to the home agent 120. Under normal operations, home agent 120 will encapsulate these NPT messages 205 and tunnel them to the care-of-address of mobile router 111. The time periods 223 represent the encapsulation delays (processing delay). Each of the NPT messages 205 takes the same route as the HoT message takes. Therefore, the HoT message 204 can serve as NPT message 205 when the HoT message 204 includes the NPK token and network prefix option 512 contained in the NPT message 205.

After the mobile router 111 sends out the HoTI message 203, it starts a timer to wait for the collection of the NPT messages 205 and HoT message 204. This is indicated by the time period 224. This time period 224 should allow sufficient time for all possible NPT messages 205 and HoT message 204 to be received, assuming the correspondent node 130 accepts all the prefixes specified in the HoTI message 203. Hence, a reasonable time period 224, t_wait, may then be calculated by estimating the round trip delay, t_rtt, to send a packet from mobile router 111 to home agent 120 and back again to mobile router 111 through the same path. The minimum time period to wait, t_wait can then be given by, for example the sum of t_rtt and t_NPT_delay multiplied by the number of prefixes specified in the HoTI message 203. This is a best estimate assuming there is no network congestion causing additional delay. A safer time period t_wait should be the sum of twice the t_rtt, and t_NPT_delay multiplied by the number of prefixes specified in the HoTI message 203.

During this time period 224, mobile router 111 needs to intercept all the NPT messages 205. However, the NPT messages 205 are not directly addressed to any address of mobile router 111. Instead, they are addressed to a random address based on a network prefix in the mobile network 110. Thus, the mobile router 111 needs to perform extra scanning of packets tunneled from the home agent 120 within the time period 224 in order to capture these NPT messages 205. To do so, for example, mobile router 111 will check every packet that is tunneled from home agent 120, with a source address equal to the address of the correspondent node 130, and with a destination address equal to an address configured from one of the network prefix mobile router 111 specified in the HoTI message 203. Here, the mobile router 111 checks for a mobility header 710 in each of these packets that are identified as the packet as a NPT message 205.

After the mobile router 111 has received all the NPT messages 205, or after the time period 224 has expired, mobile router 224 can proceed to send the BU message 206. This is assuming that the mobile router 111 has successfully received the CoT-message 202 and the HoT message 204. If any one of the CoT messages 202 or the HoT messages 204 has yet been received, the RR procedure is deemed to have failed, and the mobile router 111 should not try to perform the RR procedure until a predetermined time period has elapsed. There is a case that the improved RR procedure of the present invention is deemed to have failed though the mobile router 111 has received all the CoT messages 202 and all the HoT messages 204. Detail of the error process in such a case is described later.

The BU message 206 that mobile router 111 sends, has a source address equal to the care-of-address of the mobile router. Thus, the BU message 206 does not go through the tunnel to the home agent 120. It should contain the list of network prefix options containing the network prefixes which the mobile router 111 has received a NPT message 205 for. In addition, the BU message 206 should also contain an authenticator value that is cryptographically generated using a key that is in turn generated by concatenating the HoK, CoK and all the NPK tokens received. In the concatenation of the NPK tokens, mobile router 111 should keep the order of the NPK tokens to be identical to the order of the network prefixes appearing in the BU message 206. The authenticator value generated should also be generated based on the actual contents of the BU message 206, so as to protect the integrity of the BU message 206.

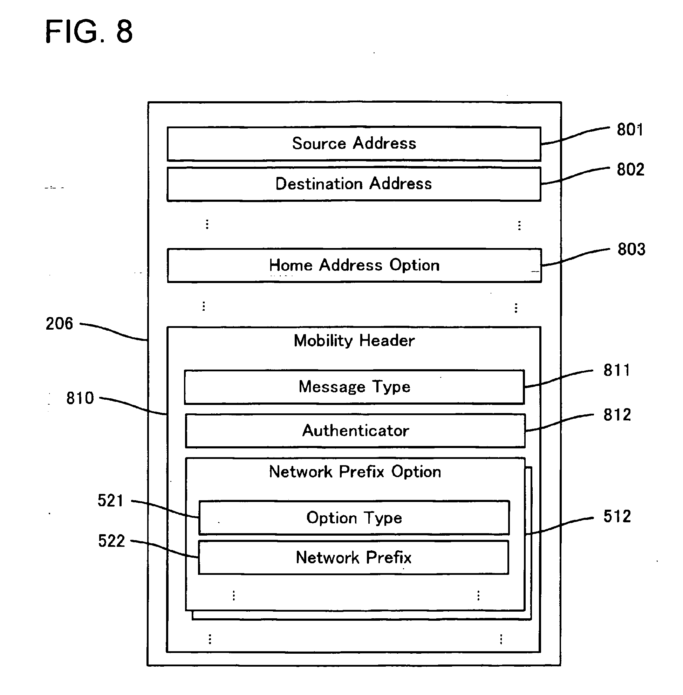

Fig. 8 is a diagram showing an example of the contents of BU message 206 in the first embodiment of the present invention. The source address 801 and the destination address 802 specify the care-of-address of mobile router 111 and the address of correspondent node 130 respectively. A home-address destination option 803 is included in the BU message 206 to inform the recipient about the home-address of the sender (i.e. it contains the home-address of mobile router 111). The mobility header 810, part of the packet 206, contains a message type field 811 that indicates this packet as a BU message, and an Authenticator field 812 containing the 96 bits checksum that is cryptographically generated using a key that is in turn generated by concatenating the HoK, CoK and all the NPK tokens received. The mobility header 810 also contains one or multiple network pref-ix options 512, one for each network prefix that the mobile router 111 has received a NPT message for. It is preferable that the order of appearance of the network prefix options 512 is the same as the order of the corresponding NPK used in generating the cryptographic checksum in the Authenticator field 812.

The sending of the BU message 206 completes the improved RR procedure. Correspondent node 130, upon receiving the BU message 206, may optionally acknowledge with a Binding Acknowledgement (BA) message. The improved RR procedure specified in the present invention does not require any modifications to the contents of the BA message. However, it is possible that correspondent node 130 informs the recipient of whether the update of the specific network prefix has succeeded or failed.

As is above-mentioned, the randomly generated number can be inserted into the host part of the destination address of the NPT message 205 sent from correspondent node 130. Furthermore, a specific number (e.g. a specific number which is defined to be used as the destination of the NPT message 205 by a specific rule) can be used as the host part. Furthermore, mobile router 111 informs correspondent node 130 of an address which mobile router 111 wish to use as the destination address of the NPT message 205, and this value (this address) can be used as the host part.
When a specific number or an address of which mobile router 111 informs is being used as the host part of the destination address of the NPT message 205, mobile router 111 can easily scan packets including the NPT message 205. In other words, mobile router 111 scans the destination address of packets, and can easily obtain packets including the NPT message 205 by picking up packets of which the destination address includes a specific network prefix and the host part of a specific number or the host part of the value which mobile router 111 has informed to use.

When mobile router 111 informs correspondent node 130 of an address which mobile router 111 wish to use as the destination address of the NPT message 205, mobile router 111 can insert the value used as the host part of this address into, for example, the HoT message 203 and send it. However, the HoT message 203, being used to inform of the address, is required to have a new option field to embed an address which mobile router 111 wish to use as the destination address of the NPT message 205, in addition to the message fields of the HoT message 204 as shown in Fig. 5.

As is above-mentioned, HoK token in HoT message 204, CoK token in CoT message 202, NPK token in the NPT message 205 and authenticator in the BU message 206 are cryptographically generated. Basically, it is preferable that they are generated based on the method disclosed in Non-Patent Document 1. In particular, they can use the original HoK and CoK token which are generated based on the method disclosed in Non-Patent Document 1 as the HoK and CoK token of the present invention.

The NPK token is generated by the correspondent node 130. For example, the acceptable network prefix (prefix), nonce value, to identify the correspondence with the HoK token, which is set to the same value as that of the HoK token in Hot message 204 to notify the number of the acceptable network prefixes and a specific number (e.g. 0×02) to indicate this as the NPK token are concatenated. And then, using the above concatenated value, a secret key (K_{CN}) which only the correspondent node knows and the cryptographic hash function (it is called HMAC_SHA1), the NPK token can be given by the first (i.e. leftmost) 64 bits of the result. That is, the NPK token can be the following value;
NPK = First (64, HMAC_SHA1 (K_{CN}, (Prefix|Nonce|0×02) ))
Here, the NPK token is generated using the networ k prefix. However, from the point of view of comp atibility (the token is usually generated using th e longer address itself than the network prefix), it is possible that the destination address (Prefi x.Address) of the NPT message which consists of th e network prefix and the host part, can be used in stead of the network prefix. That is, the NPK toke n can be the following value;
NPK = First (69, HMAC_SHA1 (K_{CN}, (Prefix.Address | Non ce |0x02)))
This NPK token is generated by the correspondent n ode 130.

The authenticator (Auth) in the BU message 206, for example, can be given by the first (i.e. leftmost) 96 bits of the result, the result being obtained by concatenating the HoK, CoK and all the NPK tokens received, generating the value (Kbm) b y applying the secure hash algorithm SHA1 to the a bove concatenated value, concatenating the care-of address (MR.CoA) of mobile router 111, the addres s (CN address) of correspondent node 130 and the e ntire BU message (BU), and generating the value by applying the cryptographic hash function (it is c alled HMAC_SHA1) to the value (Kbm) and the cohcat enated value of (MR.CoA), (CN address) and (BU). That is, the authenticator can be the following va lue;
Auth = First (96, HMAC_SHA1(K_{bm}, (MR.CoA|CN address |BU)))
K_{bm} = SHA1 (HoK|COK|NPK| ... | NPK)
This authenticator is generated by the mobile rout er 111.

There is a slight difference between the case where the NPK token is generated using the network prefix and the case where the NPK token is generated using the destination address (the etwork prefix and the host part) regarding the process of mobile router 111 or correspondent node 130. When correspondent node 130 verifies the authenticator in the BU message 206 from mobile router 111, correspondent node 130 needs to know the network prefix used by generating the NPK token or the destination address consisting of the network prefix and the host part.

In a case that correspondent node 130 generates the NPK token using the network prefix, correspondent node 130 can generate the authenticator for verifying, for example, using the network prefix in the network prefix option 512 of the BU message 206 in Fig. 8, and verify the BU message 206.

In another case that correspondent node 130 generates the NPK token using the destination address, correspondent node 130, verifying the BU message 206 from mobile router 111, needs to know this destination address in a certain way.

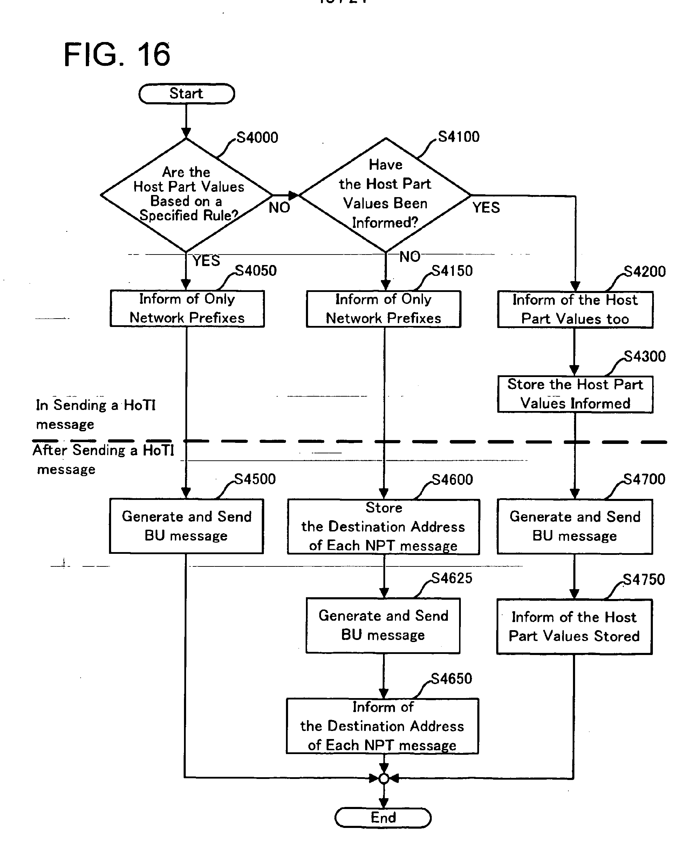

Now, the process of mobile router 111 is described in the above-mentioned case that correspondent node 130 generates the NPK token using the destination address. Fig. 16 is a flow chart showing an example of the process of mobile router 111 in the case that correspondent node 130 generates the NPK token using the destination address in the first embodiment of the present invention.

In the beginning, mobile router 111 recognizes the type of the address (the address used for generating the NPK token) used as the destination address of the NPT message 205. In short, mobile router 111 recognizes which pattern of three patterns is used; a pattern that the host part of the destination address is randomly generated, a pattern that a specific number is defined to be used in the host part according to a specific rule and a pattern that mobile router 111 notifies the desired value of the host part (or requests to use the desired value) (step S4000, S9100).

Incidentally, processes in steps S4000 and S4100 are not necessarily the decision of mobile router 111, but may be the classification according the regulations of the system. In a communication system provided that the host part of the destination address is randomly generated, mobile router 111 proceeds to step S4050. In a communication system provided that a specific number is defined to be used in the host part according to a specific rule, mobile router 111 proceeds to step S4150. In a communication system provided that mobile router 111 notifies the desired value of the host part, mobile router 111 proceeds to step S4300.

In the case that a specific number is defined to be used in the host part according to a specific rule ("yes" in step S4000) or the host part of the destination address is randomly generated ("No" in step S4100), mobile router 111 only needs to inform correspondent node 130 of the network prefix without notification of the host part (step S4050, S4150).

In the case that mobile router 111 notifies the desired value of the host part ("yes" in step S4100), as the above-mentioned, mobile router 111 notifies correspondent node 130 of a specific number which correspondent node 130 will use as the host part (step S4200) and stores this value of the host part informed into certain storage (step S4300). This value of the host part keeps stored in certain storage at least until the BU message 206 sent to correspondent node 130 is generated. Mobile router 111 performs the processes described above before or during sending the HoTI message 203.

Next, the processes after the reception of the HoT message 204 are described regarding each of the preceding three patterns. In the case that a specific number is defined to be used in the host part according to a specific rule, the destination address of the NPT message 205 consists of a specific network prefix and the host part with a specific number. Therefore, mobile router simply generates the BU message 206 as shown in Fig. 8, and sends it to correspondent node 130 without an extra process.

In the case that the host part of the destination address is randomly generated, the destination address of each of NPT messages 205 consists of a correspondent specified network prefix and the host part with a random number. Therefore, mobile router 111 memorizes the destination address (especially, the host part with a random number) of each NPT message 205 (step S4625). When mobile router 111 generates and sends the BU message 206 (step S4625), mobile router 111 informs correspondent node 130 of the destination address or the host part value of the NPT message 205 (step S4650). Mobile router 111 can use the BU message 206 with a new option field to include the destination address or the host part value of the NPT message 205 when it informs correspondent node 130 of the destination address or the host part value of the NPT message 205. Or, alternatively, mobile router 111 can also use other messages. In this way, correspondent node 130 can verify the received BU message 206 from mobile router 111.

In the case that mobile router 111 notifies the desired value of the host part, the destination address of each of NPT messages 205 consists of a correspondent specified network prefix and the host part with an informed number from mobile router 111. Furthermore, each NPK token is generated from the destination address with an informed number from mobile router 111 as the host part. Therefore, when mobile router 111 generates and sends the BU message 206 (step S4700), mobile router 111 informs correspondent node 130 of the host part value stored in the step S4300 (step S4750). Mobile router 111 can use the BU message 206 with a new option field to include the informed host part value when it informs correspondent node 130 of the host part which is requested to use and stored. Or, alternatively, mobile router 111 can also use other messages. In this way, correspondent node 130 can verify the received BU message 206 from mobile router 111.

In the above description referring to Fig .2, the improved RR procedure of the present invention meets with success, but the improved RR procedure may fall to failure or incomplete success. In the followings, some examples of the cases that the improved RR procedure may fall to failure or incomplete success are described.

As is above-mentioned, when the CoT message 202 or the HoT message 204 does not come back to mobile router 111, the improved RR procedure is deemed to have failed. In this case, it is preferable that the improved RR procedure is initiated again after waiting for the predetermined time.

The case can occur that the HoT message 202 and the CoT message come back to mobile router 111, but any or all of the NPT messages does not come back. In such a case, mobile router 111 can initiate the improved RR procedure of the present invention again by sending the CoTI message 201 and the HoTI message 203. Alternatively, mobile router 111 can update only the network prefixes (part of the network prefixes) regarding the received NPT messages 205 by sending the BU message 206. Later, the improved RR procedure can be performed again for the rest of the network prefixes (i.e. unregistered network prefixes). In this case, it is preferable that the record (concretely, e.g. information to distinguish between the already updated network prefixes and the unregistered network prefixes for each correspondent node 130) of the preceding improved RR procedure is kept in the storage media mobile router 111 can handle.

Meanwhile, the case can occur that an error message (e.g. an error message based on ICMP (Internet Control Message Protocol)) comes back from correspondent node 130 to mobile router 111 on behalf of the CoT message 202 or the HoT message 209. This case can occur when correspondent node 130 has no abilities to deal with the conventional RR-procedure (i.e. mobile IP) as well as the improved RR procedure. In this case, it is preferable that mobile router 111 gives up the route optimization and controls not to initiate the improved RR procedure against this correspondent node 130.

Furthermore, the case can occur that the HoT message 204 without the prefix number field 613 comes back. This case can occur when correspondent node 130 has ability to deal with the conventional RR procedure (i.e. mobile IP), but has no ability to deal with the improved RR procedure. Thus, mobile router 111 can perform only the conventional RR procedure against this correspondent node 130. The conventional RR procedure makes the route in which mobile router 111 itself communicates with correspondent node 130 optimized. However, the conventional RR procedure does not optimize the route between a node (e.g. mobile network node 112-1) residing behind mobile router 111 and correspondent node 130. Therefore, when mobile router 111 performs route optimization for only node-s which reside behind mobile router 111, mobile router 111 had better not send the BU message 206. This may be useful because of reducing useless messages.

As the above-mentioned, mobile router 111 can recognize whether or not correspondent node 130 has ability of dealing with the improved RR procedure by checking if the NPT message 205 comprises the prefix number field 613. Therefore, it is preferable that correspondent node 130 which has ability of dealing with the improved RR procedure, sends back the NPT message 205, for example, with the prefix number field 613 explicitly set to zero even if correspondent node 130 decides to accept no network prefix.

In order to facilitate the collection of the HoK, CoK and NPK tokens, it is preferable that the mobile router 111 maintains special storage means to store these tokens. In addition, in Non-Patent Document 1, the mobile nodes need to remember which correspondent nodes 130 are aware of the binding between the care-of-address and home-address of the mobile node in a conceptual data structure known as the Binding Update List (BUL). Here, an extended binding update list (XBUL) for use in the mobile router 111 is disclosed to facilitate the collection of the HoK, CoK, and NPK tokens, as well as fulfilling the original task of recording which correspondent nodes 130 have bindings of the home-address and care-of-address of the mobile router 111.

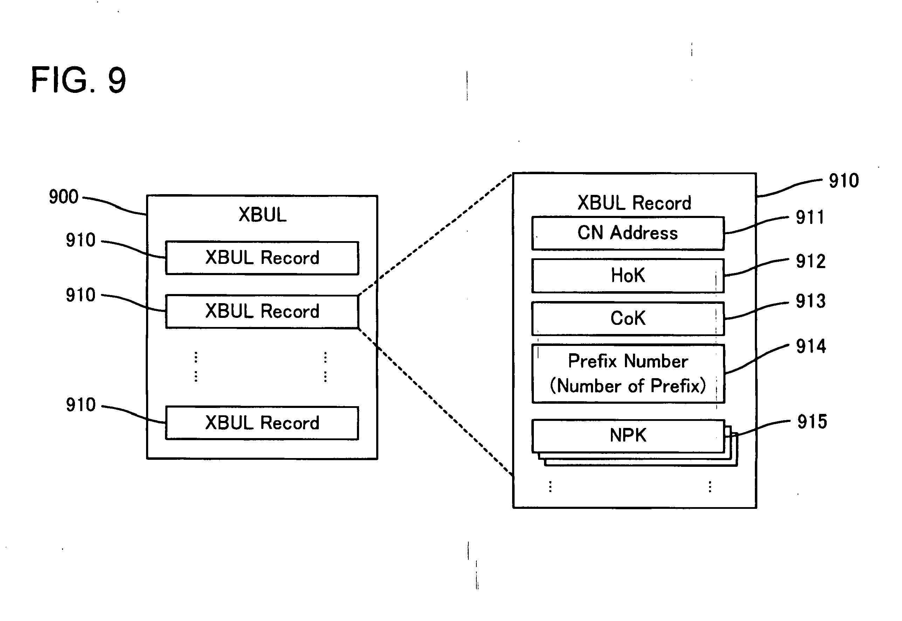

Fig. 9 is a diagram showing the structure of the XBUL 900 in the first embodiment of the present invention. The XBUL 900 contains a single or plurality of XBUL records 910.

Each XBUL record 910 contains various fields:
- a CN Address field 911 to record the address of the correspondent node 130;
- a HoK field 912 to record the HoK token contained in a HoT message 204 sent by the correspondent node 130;
- a CoK field 913 to record the CoK token contained in a CoT message 202 sent by the Correspondent node 130;

- a Number of Prefixes field 914 to record the number of prefixes accepted by the correspondent node 130 as indicated in the HoT message 204 sent by the correspondent node 130; and
- a single or plurality of NPK fields 915 to record the NPK token contained in a NPT message 205 sent by the correspondent node 130.

It is preferable that the order of each NPK field 915, should there be multiple of them, is associated to a order of network prefixes owned by the mobile router 111 such that the mobile router 111 can associate the NPK field 915 with a network prefix based on the index of the NPK field 915 alone.

The HoK field 912, CoK field 913 and NPK fields 915 must have a means to indicate whether a valid token value is stored in them, so that the indication of no valid token stored implies that the mobile router 111 has yet to receive the corresponding HoT message 204, CoT message 202 or NPT message 205. This can be done by having an extra bit in each field to be set when the field stores a valid token, and be cleared when the field is empty. Alternatively, if it is predetermined that the tokens cannot be of certain values (such as the all-zero or all-one values), these could be used to indicate that the field is empty as well.

In addition, it is specified in Non-Patent Document 1 that the correspondent node 130 should change its private key used to generate the various HoK, ToK and NPK tokens from time to time. Thus, the validity of these tokens will expire when the private key used by the correspondent node 130 changes. Hence, these tokens usually have pre-determined lifetime. When the lifetime expires, the values stored in the HoK field 912, CoK field 913 and NPK field 915 will be invalidated.

With the XBUL 900, the mobile router 111 has the full means to smoothly carry out the improved RR procedure. Here, the algorithm used by the mobile router 111 to perform the improved RR procedure is specified.

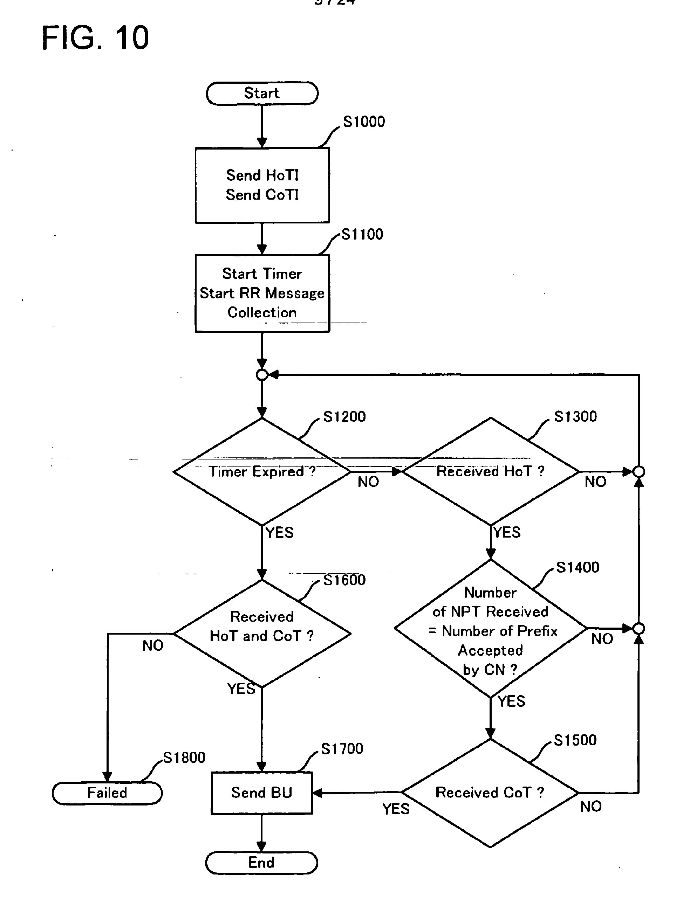

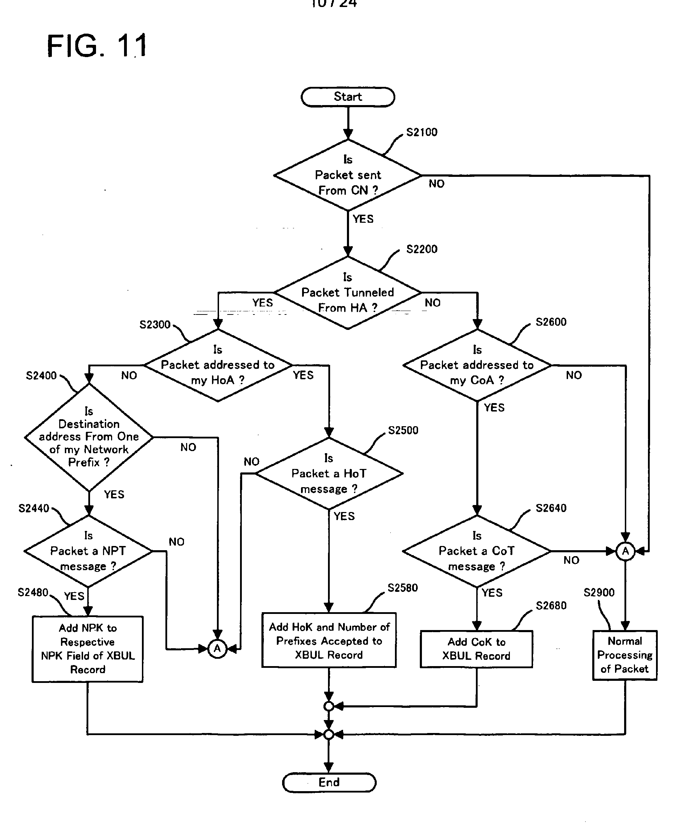

Fig. 10 is a flowchart of the algorithm in the first embodiment of the present invention.
The mobile router 111, when starting the improved RR procedure, would first send the HoTI message 203 and the CoTI message 201, as shown in step S1000. And then, in the step S1100, the mobile router 111 starts a timer for a period of t_wait. In addition, it also starts the RR message collection procedure whereby the mobile router 111 captures all packets that contain a HoT, CoT or NPT message sent from the correspondent node 130. This is basically a hook that is attached to the normal processing of incoming packets. Before attaching the hook, the XBUL 900 is first checked if there is a XBUL record 910 that has a CN field 911 equal to the address of the correspondent node 130. A new XBUL record 910 is created if one is not found. The hook process will be triggered whenever the mobile router 111 receives an incoming packet. Detail of the hook process is described later (see Fig. 11).

After this, the mobile router 111 enters a loop starting with step S1200, where the timer expiry is checked. If the timer has not expired, step S1300 would be taken where the mobile router 111 checks if it has received a HoT message 204. This can be deduced by checking the validity of the HoK field 912 of the corresponding XBUL record 910 in the XBUL 900. A valid HoK field 912 indicates that a HoT message 204 has been received. If a HoT message 204 is not received, the algorithm loops back to step S1200.

On the other hand, if the HoT message 204 is received, the algorithm proceeds to step S1400 where the number of received NPT messages is checked to see if it is less than the number of prefixes accepted by the correspondent node 130 as specified in the HoT message 204. This can be done by checking the number of valid NPT fields 915 with the number of prefixes field 914 in the corresponding XBUL record 910 in the XBUL 900. If the number of NPT messages 205 received is less than the number of prefixes accepted by the correspondent node 130, the algorithm loops back to step S1200. Else, the algorithm proceeds to step S1500 to check if the CoT message 202 has been received. This can be deduced from the validity of the CoK field 913 of the corresponding XBUL record 910 in the XBUL 900. If a CoT message 202 has been received, the algorithm proceeds to step S1700. Else, the algorithm loops back to step S1200.

Should the timer expires, the algorithm will exit the loop from step S1200 to step S1600, where the mobile router 111 checks if it has already received both the HoT message 204 and the CoT message 202. Again, this can deduced from the validity of the HoK field 912 and CoK field 913 in the corresponding XBUL record 910 in the XBUL 900. If any of the HoT message 204 or the CoT message 202 has not yet been received, the mobile router 111 concludes that the RR procedure has failed, as shown in the step S1800. If Both of the HoT message 204 and the CoT message 202 have been received, the algorithm proceeds to step S1700.

In the step 1700, the mobile router 111 sends the correspondent node 130 a BU message 206, thus completing the RR procedure. It is preferable that the mobile router 111 includes the network prefixes for which a NPT message is received when-sending the BU message 206. Furthermore, if any network prefix is included in the BU message 206, it is preferable that the authenticator field 812 of the BU message 206 is a checksum generated from a key that is the concatenation of the tokens stored in the HoK field 912, CoK field 913 and respective NPK field(s) 915 of the corresponding XBUL record 910 in the XBUL 900.

Fig. 11 is a diagram showing the hook process attached to the processing of incoming packet in step S1200 in the first embodiment of the present invention. This hook process will be triggered whenever there is an incoming packet while the improved RR procedure is performed. In step S2100, the incoming packet is checked to see if it is sent from the correspondent node (CN) 130. If not, the hook process releases the packet for normal processing as shown in step S2900.

As it is sent from the correspondent node 130, the incoming packet is next checked to see if it is tunneled from the home agent 120 of the mobile router 111 in step S2200. If it is, the hook process proceeds to step S2300. Else, the hook process proceeds to step S2600.

In step S2300, the incoming packet is further checked to see if the destination address equals to the home-address of the mobile router 111. If yes, step S2500 is taken where the packet is scanned to see if it contains a HoT message 204. If it contains a HoT message 204, the HoK token and number of prefixes accepted are extracted and stored at the HoK field 912 and the prefix number field 914 in the XBUL record 910 respectively as shown in step S2580. Else, the packet is released from the hook for normal processing as shown in step S2900.

From step S2300, if the destination address is not the home-address of the mobile router 111, it is next checked to see if the incoming packet has a network prefix equal to any one of the network prefixes owned by the mobile router in step S2400. If the incoming packet has a network prefix equal to any one of the network prefixes owned by the mobile router, the incoming packet is further checked to see if it contains a NPT message 205 in step S2440. If it contains a NPT message 205, the NPK token is extracted from the NPT message 205 and stored in the corresponding NPK field 915 of the XBUL record 910, as shown in step S2480. Else, the incoming packet is released from the hook process for normal processing as shown in step S2900.

On the other hand, if the packet is not tunneled from the home agent in step S2300, step S2600 is taken where the destination address of the incoming packet is checked to see if it equals to the care-of-address of the mobile router 111. If it does not equal to the care-of-address of the mobile router 111, the packet is released from the hook process for normal processing as shown in step S2900.

If the destination is the care-of-address of the mobile router 111, step S2640 is taken where the incoming packet is scanned to see if it contains the CoT message 202. If it contains the CoT message 202, the CoK token is extracted from the CoT message 202 and stored in the CoK field 913 of the XBUL record 910, as shown in step S2680. Else, the packet is released from the hook process for normal processing as shown in step S2900. The hook process is detached once the improved RR procedure is completed.

It is possible for the mobile router 111 to change its care-of-address while in motion. When the care-of-address changes, the improved RR procedure will have to be repeated. However, it is not necessary for the mobile router 111 to obtain the same HoK and NPK tokens if the values (lifetime) stored in the XBUL record 910 have not yet been expired. In such cases, it is only necessary for the mobile router 111 to send the CoTI message. Once it obtains the CoT message 202, it can use the HoK and NPK tokens stored in the XBUL record 910 to generate the checksum for the BU message.

In addition, when the mobile network 100 returns home, the mobile router 111 sends a BU message to correspondent node 130 to remove the bindings. In such cases, the mobile router 111 need not perform the test by the RR procedure. Instead, it can simply send the BU message 206 without any network prefix options 512. In addition, the checksum in the authenticator field 812 of the BU message 206 can be generated with the HoK token only.

In the above description, the network prefixes are informed by HoTI message 203 and the number of the acceptable network prefixes is informed by HoT message 204. Thus, the number of the acceptable network prefixes is extracted from the HoT message 204 by the process in step S2580. However, as the preceding description, the network prefix and the number of the acceptable network prefix can-be exchanged using CoTI message 201 / CoT message 202 or other messages. It is obvious to anyone skilled in the art that in such cases, for example, when the number of the acceptable network prefixes is informed by CoT message 202, mobile router 111 can extract the number of the acceptable network prefixes from the CoT message 202 by the process in step 2680.

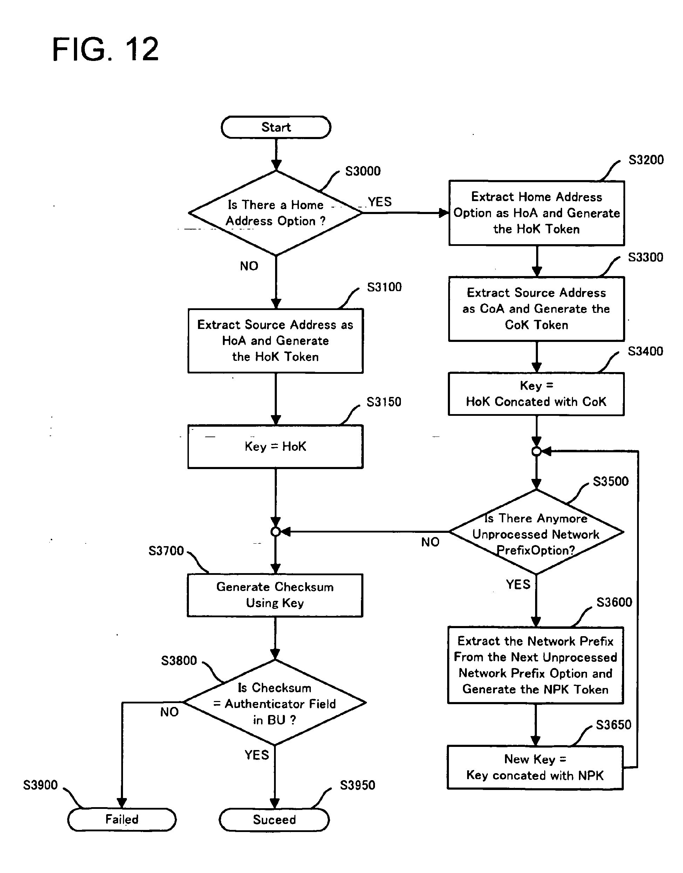

Next, the algorithm used by the correspondent node 130 to check the validity of a BU message 206 is described. One of the advantages of the RR procedure as described in Non-patent document 1 is that the correspondent node 130 need not maintain any state information before the reception of the binding update. The improved RR procedure disclosed in the present invention inherits this advantage. The correspondent node 130 needs only to generate responses to the HoTI message 203 and CoTI message 201, without having the need to maintain any state information throughout the RR procedure. Upon receiving the BU message 206, the correspondent node 130 can check the validity of the BU message 206 independently based on information contained in the BU message alone. Fig. 12 is a diagram showing the algorithm used by the correspondent node 130 to check the validity of a received BU message 206 in the first embodiment of the present invention.

When the correspondent node 130 first receives the BU message 206, it checks if there is a home-address option 803 in the BU message 206, as shown in step S3000. This differentiates the case when the BU message 206 is used to establish a new binding or to delete a previous binding. If there is no home-address option 803, the algorithm proceeds to step S3100. Here, the source address of the packet is treated as the home-address of the sender (i.e. the mobile router), and this is used to generate the HoK token. Next, in step S3150, the key for checking the BU message 206 is set to be the HoK token and the algorithm proceeds to step S3700 where the validity of the BU message 206 is checked.

If the received BU message 206 contains a home-address option 803, the algorithm proceeds to step S3200, where the home-address in the home-address option is used to generate the HoK token. Next, in step S3300, the source address of the BU message 206 is treated as the care-of-address of the sender and is used to generate the CoK token by this care-of-address. The HoK and CoK token are then concatenated in order to give an initial key in step S3400. The algorithm then proceeds to process each network prefix option 512 that is present in the BU message 206 in the loop from step S3500, step S3600 to step S3650.

In step S3500, the BU message 206 is checked to see if there is any unprocessed network prefix option 512. If there is none, the loop is exited and the step S3700 and S3800 are taken where the validity of the BU message 206 is verified. If there is still unprocessed network prefix option 512, the next unprocessed network prefix option 512 is processed in step S3600.
Here, the network prefix is extracted from the next unprocessed network prefix option 512 (thereby processing it) and a NPK token is generated from the network prefix. This NPK token is then appended to the key in step S3650, and the algorithm loops back to step 3500. In this way, the key that will be used for generating a checksum will be concatenated from the HoK, CoK and the series of NPK in the order of the appearance of the network prefix option 512.

In step S3700, the key obtained (either from step S3150, S3400 or S3650) is used to generate the checksum of the BU message 206. This is then compared with the authenticator 812 value stored in the BU message 206 in step S3800. If the two checksums are not equal, the verification fails as shown in step S3900. If the two checksums are identical, the verification succeeds and the BU message 206 is accepted, as shown in step S3950.

With this check, the correspondent node 130 can be assured that the network prefixes, the care-of-address and the home-address are collocated. Once the correspondent node 130 verifies this, it can then setup routing information to forward, by means of packet encapsulation or otherwise, packets destined to addresses from the network prefixes directly to the care-of-address of the mobile router 111, without going through the home agent 120. Hence, according to the preferred embodiment of the present invention, the object of the present invention is met.

According to the following operation described, it is possible to reduce the number of messages sent to the mobile router 111 so as to reduce the stress on the wireless bandwidth, which is often limited, between the mobile router 111 and its access router 101. For example, this is done by shifting the burden of intercepting the HoT message 204 and the NPT message 205 to another entity, such as the home agent 120 of the mobile router 111.

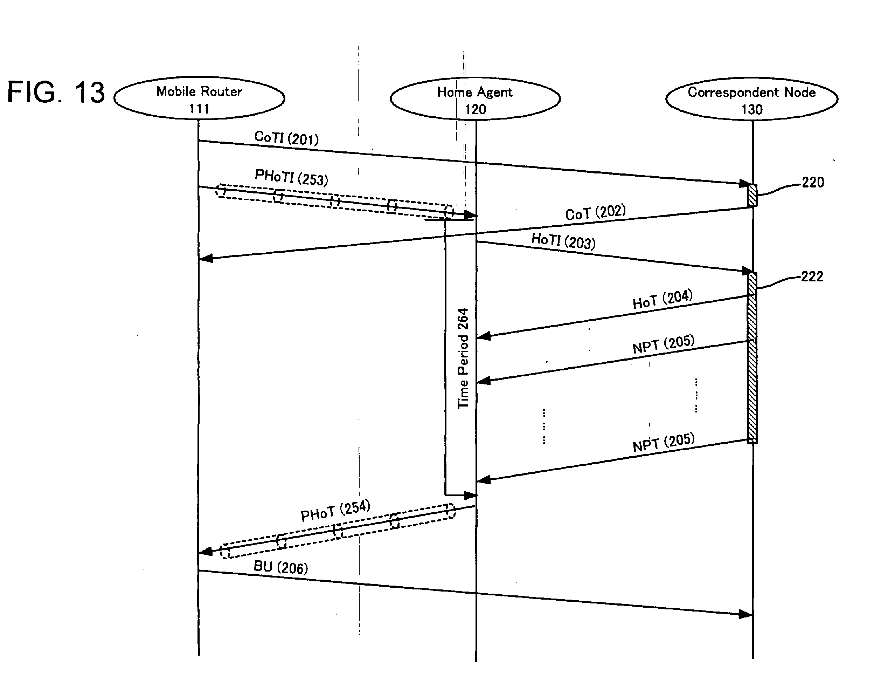

Fig. 13 is the message sequence diagram for the reduced bandwidth improved Return Routability procedure in the first embodiment of the present invention. As the above-mentioned operation, when the mobile router 111 initiates the RR procedure, it sends the CoTI message 201 to the correspondent node 130. The correspondent node 130 responds to this message with a CoTI message 202 containing the CoK. This is identical to the preceding description and explanation thereof is thus omitted for brevity.

Instead of sending the HoTI message 203, the mobile router 111 sends a Proxy Home Test Init (PHoTI) message 253 to its home agent 120. This PHoTI message 253 instructs the home agent 120 to perform the home test part of the RR procedure on behalf of the mobile router 111.

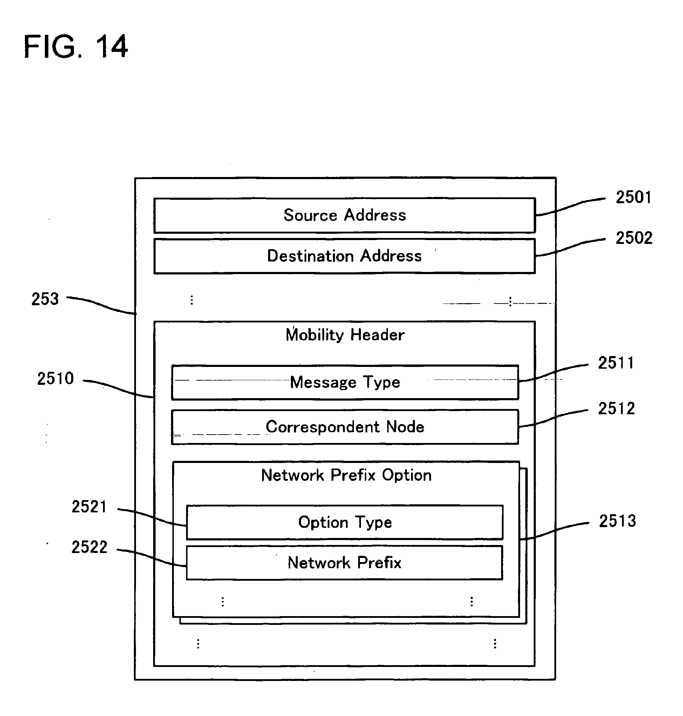

Fig. 14 is a diagram showing an example of the contents of PHoTI message 253 in the first embodiment of the present invention. The source address 2501 and the destination address 2502 specify the home-address of mobile router 111 and the address of home agent 120 respectively. The mobility header 2510, part of the packet 253, contains a message type field 2511 that indicates this packet as a PHoTI message 253. It also contains a correspondent node field 2512 to tell the home agent 120 the address of the correspondent node 130 to initiate the HoTI message 203.

The PHoTI message 253 can also contain one or multiple network prefix options 2513. Each network prefix option 2513 includes an option type field 2521 that indicates this option as a network prefix option 2513, and a network prefix field 2522 that contains one network prefix.

In the preceding description, mobile router 111 embeds the network prefix in the PHoTI message 253. However, mobile router 111 can be arranged to send.the PHoTI message 253 without the network prefix (or, without the network prefix option 2513). For example, home agent 120 has known one or more network prefixes in advance. Home agent 120, receiving the PHoTI message 253 without the network prefix, embeds one or more network prefix that home agent has known in advance, in the HoTI message 203. In this way, test by the improved RR procedure can be performed for the network prefix of mobile router 111. Furthermore, mobile router 111 can be arranged to send the PHoTI message 253 with information to identify a specific network prefix among the network prefixes that home agent 120 has known. This enables mobile router 111 to select a specific network prefix(es) and to request home agent 120 to perform the test by the improved RR procedure for only the specific network prefix.

Upon receiving this PHoTI message 253, the home agent 120 will send a HoTI message 203 to the correspondent node 130 on behalf of mobile router 111. Note that the source address field 501 of HoTI message 203 will still bear the home-address of mobile router 111. If there are network prefix options 2513 contained in PHoTI message 253, the home agent 120 will place the same network prefix options 512 in the HoTI message 203. Else, the home agent 120 will place the configured network prefixes handled by mobile router 111 in the HoTI message 203. After sending the HoTI message 203, the home agent 120 will behave like mobile router 111 to intercept any NPT messages 205 sent by correspondent node 130. To do so, during the time period 264, home agent 120 will check every packet with a source address equal to the address of the correspondent node 130, and with a destination address equal to an address configured from one of the network prefixes specified in the HoTI message 203. Here, the home agent 120 checks for a mobility header 710 in each of these packets that identifies the packet as a NPT message 205.

In addition to intercepting the NPT messages 205, the home agent 120 will also intercept the HoT message 204 sent by the correspondent node 130. Note that the home agent 120 will not tunnel the NPT message 205 and the HoT message 204 to the mobile router 111. Instead, it will record the NPK 712 and the HoK 612 contained in the NPT message 205 and the HoT message 204 respectively. Once the HoT message 204 and all the NPT messages 205 are intercepted, the home agent sends a Proxy Home Test (PHoT) message 254 to mobile router 111. The PHoT message 254 is sent to relay all the HoK and NPK values collected back to the mobile router 111.

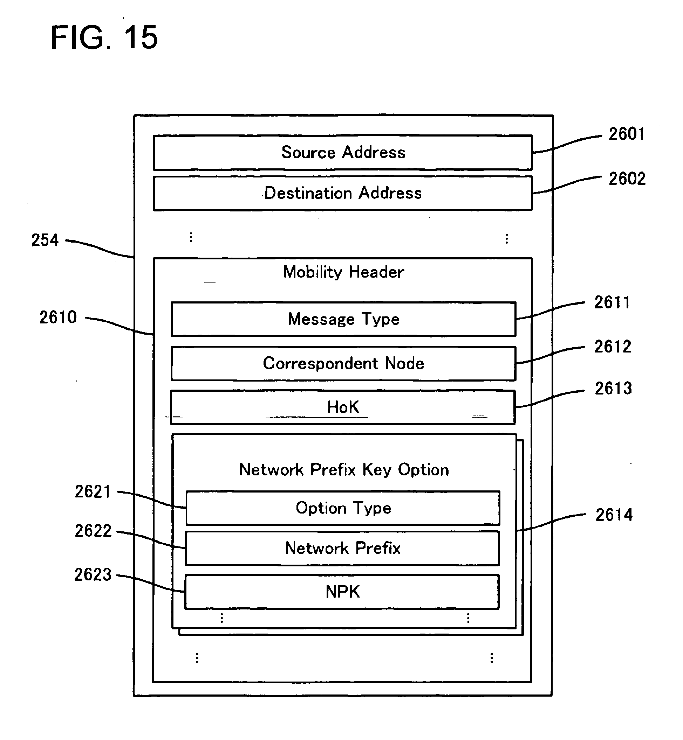

Fig. 15 is a diagram showing an example of the contents of PHoT message 254 in the first embodiment of the present invention. The source address 2601 and the destination address 2602 specify the address of home agent 120 and the home-address of mobile router 111 respectively.
The mobility header 2610, part of the packet 254, contains a message type field 2611 that indicates this packet as a PHoT message 254. It also contains a correspondent node field 2612 to identify the correspondent node 130 that is the remote party in the RR procedure. The HoK value stored in the intercepted HoT message 204 is given in the HoK field 2613.

The PHoT message 254 may also have one or more network prefix key options 2614, possibly the number of options being equal to the number of NPT messages 205 intercepted by the home agent 120. Each network prefix key option 2614, if present, contains an option type field 2621 to identify this option as a network prefix key option 2614, a network prefix field 2622 to indicate the network prefix for which this option refers to, and a NPK field 2623 that contains the NPK generated by the correspondent node 130 for this network prefix. Note that since the PHoT message 254 is sent to the mobile router 111 at its home-address, the message will be tunneled to the care-of-address of mobile router 111.

Once the PHoT message 254 is received by the mobile router 111, the mobile router 111 has all the information necessary for itself to send a binding update message 206 to the correspondent node 130. The binding update message 206 is identical to that described earlier, and thus detail description thereof is omitted.

With the sending of the PHoTI message 253. and the PHoT message 254, the improved RR procedure can be completed, allowing the correspondent node 130 to ascertain the mobile router 111 indeed owns the network prefixes it claims. In addition, because the burden of processing the NPT messages 205 is transferred to the home agent 120, there is less stress on the access channel between mobile router 111 and its access router 101. Furthermore, the processing load of mobile router 111 is reduced, which can be of importance, as mobile routers 111 may be battery powered and thus power consumption is preferred to be as low as possible.

As shown in Fig. 13, even if home agent 120 sends the HoTI message 203 to correspondent node 130 and receives the HoT message 204 and the NPT message 205 on behalf of the mobile router 111, it can occur that correspondent node 130 generates the NPK token using the destination address.

In this case, furthermore in such a case that furthermore the host part of the destination address is randomly generated, home agent 120 needs to memorize the host part of the destination address of each NPT message 205 (correspondent to the step S4600 described later), and inform mobile router 111 of the memorized host part value of the destination address of each NPT message 205 by PHoTI message 253 and the like. In another case that mobile router 111 notifies the desired value of the host part, a new option field needs to be appended to the PHoT message 253 or the HoTI message 203 for inserting the host part value informed.

Mobile router 111 can send the network prefixes of all the mobile networks 110 it owns to correspondent node 130 using the improved RR procedure. Also, Mobile router 111 can send selectively the network prefixes of some of the mobile networks 110 it owns to correspondent node 130 using the improved RR procedure.

The former aspect that mobile router 111 sends the network prefixes of all the mobile networks 110 it owns to correspondent node 130 is useful, for example, when nodes residing in unspecified mobile networks behind mobile router 111 wish to communicate with a specified correspondent node 130 (e.g. the server of the portal site).

The latter aspect that mobile router 111 selects and sends the network prefixes of some of the mobile networks 110 it owns to correspondent node 130 is useful, for example, when some mobile network node 112 residing in mobile networks behind mobile router 111 wish to communicate with correspondent node 130. In this way, mobile router 111 performs route optimization (i.e. direct communication) for correspondent node 130. This enables the efficiency of communication to be raised.

In the latter case, mobile router 111 first detects that a specified node (e.g. mobile network node 112-1) residing behind mobile router 111 starts communicating (or, is about to communicate) with correspondent node 130. mobile router 111 then informs correspondent node 130 of only the network prefix of the mobile network where the mobile network node 112-1 resides using the improved RR procedure and has correspondent node 130 ascertain the network prefix. After this processes, mobile node 111 sends the BU message for the network prefix to correspondent node 130. In this way, only the network prefix for route optimization is selectively informed, and the checksum and the like are calculated. Consequently, communication and processes regarding the useless network prefix can be omitted.

Moreover, as is above-mentioned, for example in the situation that route optimization has been set between mobile network 110 where mobile network node 112-1 resides and correspondent node 130, when mobile router detects that another node (e.g mobile network node 112-2; this node uses the different network prefix from that of mobile network node 112-2) starts communicating (or, is about to communicate) with the same correspondent node 130, mobile router 111 sends the BU message 205 only for the network prefix used by mobile network node 112-2. Mobile router 111 may initiate the improved RR procedure over again for the network prefix used by mobile network node 112-2. However, mobile router has already obtained information (e.g. CoK and HoK) in performing the improved RR procedure against correspondent node 130 for the network prefix used by mobile network node 112-1. Thus, mobile router can reuse above information, and some processes of the improved RR procedure can be omitted.

As shown in this description, mobile router 111 can select one or more network prefixes to be binding updated owing to various reasons such as mobile router's moving and update of lifetime, and perform the improved RR procedure and the binding update only regarding the selected network prefixes. Furthermore, mobile router 111 can selectively delete the registered network prefix or update the elongated lifetime similar to the registering of the network prefix to the correspondent node 130.

Mobile router 111 preferably keeps the result of the operation about route optimization before. The keeping of the result of the operation is useful, as described before, in order to determine a network prefix has been registered or not with correspondent node (i.e. judge whether route optimization is completed or not) when mobile router 111 selects and sends the network prefixes of some of the mobile networks 110 it owns to correspondent node 130.

A conventional router generally keeps information indicating which network prefix has been registered with which correspondent node 130. However, it is useful that mobile router 111 keeps the details of the reason why the RR procedure ends in failure, in addition to above information. Possible examples of the details of the reason why the RR procedure ends in failure are as follows;
Correspondent node 130 may have no ability to deal with the conventional RR procedure because mobile router 111 receives an error message coming back from correspondent node 130,
Correspondent node 130 may have no ability to deal with the improved RR procedure because no network prefix number information is informed from correspondent node 130,
Correspondent node 130 has ability to deal with the improved RR procedure, but some of the network prefixes are unaccepted or unregistered.

It is possible that mobile router is arranged to keep information on above details of the reason or the result of the operation only for a limited period or by a limited amount. Furthermore, mobile router 111 keeps information on above details of the reason or the result of the operation in a certain way, such as by a flag indicating existence of necessary status or by a value indicating status associated to each address of correspondent node 130.

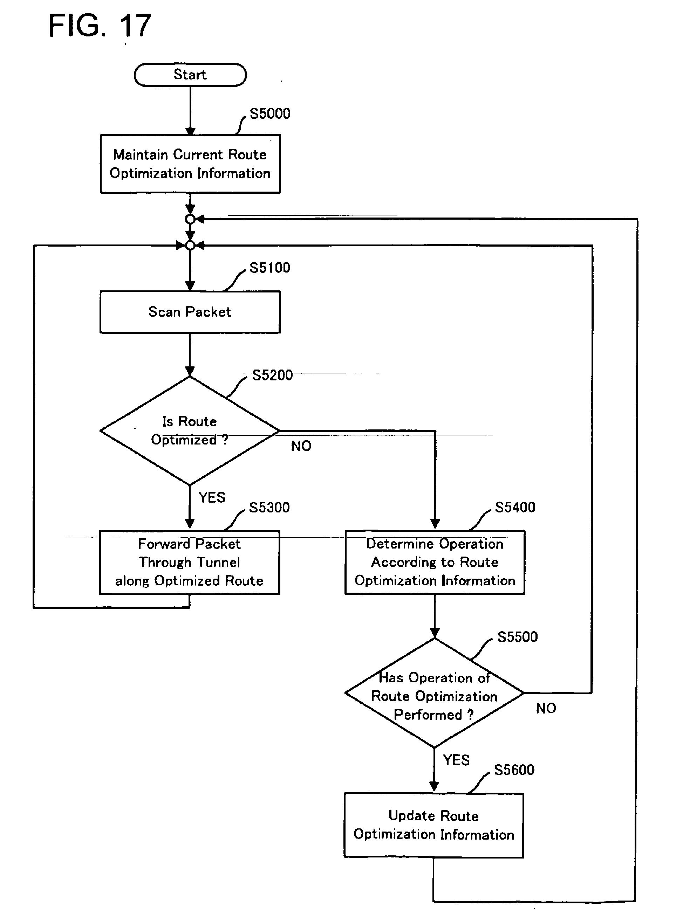

In the followings, an example of the operation in the case that mobile router 111 preferably maintains the result of the operation before is described referring to Fig. 17. Fig. 17 is a flow chart showing an example of the operation in the case that mobile router 111 preferably keeps the result of the operation before in the first embodiment of the present invention. Here, mobile router 111 is assumed to have registered some or all of the mobile networks it owns with one or more correspondent node 130.

Mobile router 111 has already registered some or all of the mobile networks it owns with one or more correspondent node 130, and maintains information (or route optimization information) on its status (step S5000).

Mobile router 111 intercepts packets from nodes in the mobile network 110 mobile router 111 owns behind, destined to correspondent node 130 outside, and scan packets (step S5100). Mobile router 111 then sees the address of correspondent node 130 and the network prefix of the mobile network 110 where nodes reside, and check if route optimization has been set or not based on route optimization information (step S5200). In step S5200, judging that route optimization has been already completed, mobile router 111 forwards packets (step S5300) in order that packets go along the optimized route through the tunnel to correspondent node 130. Again, step S5100 is taken back for scanning a new packet.

In step S5200, judging that route optimization has not been completed, mobile router 111 sees route optimization information maintained, and determines the operation (e.g. determines whether or not mobile router 111 proceeds to newly register this node's network prefix with correspondent node 130. Furthermore, mobile router 111 sees the details of the reason why the RR procedure ends in failure as above-mentioned. This enables mobile router 111 to select the process consistent with the defined processes against each kind of errors. Furthermore, when mobile router cannot find the address of correspondent node 130 in route optimization information, mobile router 111 regards correspondent node 130 as a node which mobile router 111 communicates with for the first time, or as a node which mobile router 111 has not communicated with for more than a predetermined period. It is preferable that mobile router 111 performs-route optimization with correspondent node 130.

When mobile router 111 performs route optimization ("yes" in step S5500), mobile router 111 updates route optimization information according to this result of the operation (step S5600). When mobile router 111 does not perform route optimization, or has finished updating route optimization information ("no" in step S5500), step S5100 is taken back for scanning a new packet again. It is preferable that mobile router 111 immediately forwards packets judged that route optimization has not been completed in step S5200, to be routed along non-optimized route.

### (Second Embodiment)

The second embodiment of the present invention is described. Here, such a case is described that the present invention is applied to any situation where there is a need to verify if network prefixes are indeed owned by some network node that claims to own them. An example is in the case of route optimization using correspondent router.

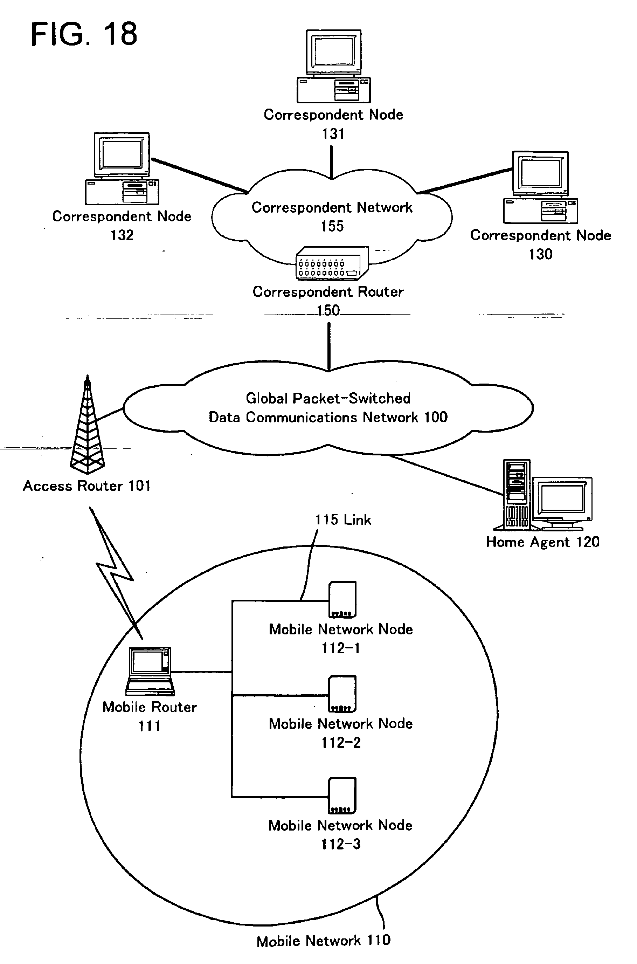

Fig. 18 is a diagram showing a communication system in the second embodiment of the present invention. In Fig. 18, the correspondent router 150 is managing the correspondent network 155, including correspondent nodes 130, 131 and 132. Correspondent router 150 serves as a proxy for correspondent nodes 130, 131 and 132 in the correspondent network 155. Incidentally there is one correspondent network 155 illustrated in Fig. 18, but there can be more correspondent network 155. To achieve route optimization, mobile router 111 should set up a bi-directional tunnel with correspondent router 150, so that packet sent from any node (ex. Mobile network node 112-1, 112-2 and 112-3) in the mobile network 110 to any node (ex. correspondent nodes 130, 131 and 132) in the correspondent network 155, can be forwarded through this bi-directional tunnel.

In order to achieve this, not only must mobile router 111 inform the correspondent router 150 of its home-address, care-of-address and mobile network prefixes, the correspondent router 150 must also let mobile router 111 know the network prefix or prefixes of the correspondent network 155 that correspondent router 150 manages. Both mobile router 111 and correspondent router 150 need to verify the validity of each other's announced prefix. In order that correspondent router 150 verifies the prefix announced by mobile router 111, the improved Return Routability procedure as described previously in this specification can be applied. In order that mobile router 111 veri-fies the prefix announced by correspondent router 150, a variation of the improved Return Routability procedure can be employed.

As correspondent router 150 is usually a fixed node (i.e. non-mobile), there is no care-of-address associated with correspondent router 150. In short, correspondent router 150 comprises no care-of address. Thus sending of the CoTI and CoT messages can be omitted from the improved Return Routability procedure. Instead, correspondent router 150 just has to initiate the procedure by sending a HoTI message, and intercept the HoT and NPT messages. The procedure is completed with correspondent router 150 sending mobile router 111 a BU message.

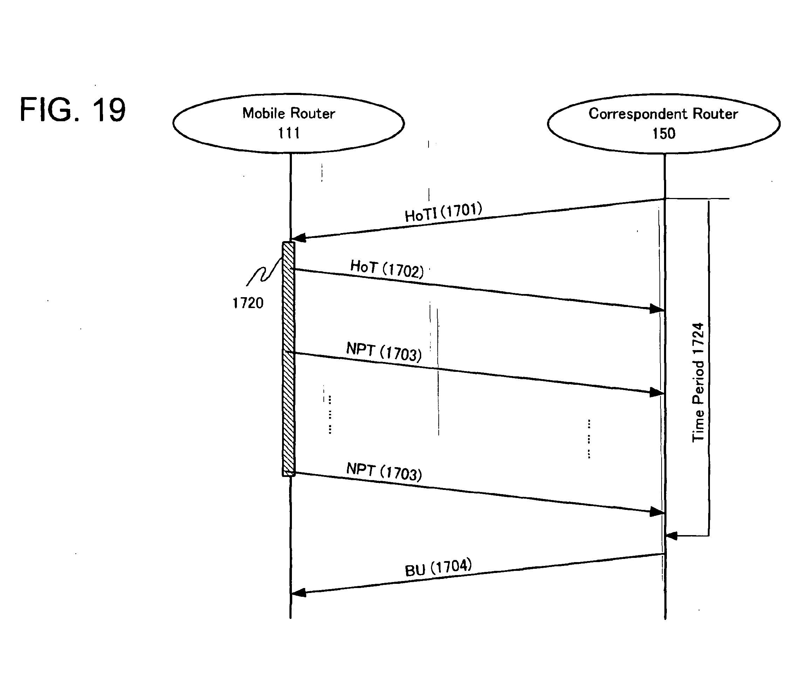

Fig. 19 is a diagram showing a sequence to describe the detail of the operation when correspondent router 150 registers the network prefix of the correspondent network it manages with mobile router 111 in the second embodiment of the present invention. The correspondent router 150 starts by sending a HoTI message 1701 to mobile router 111. The source address of the HoTI message 1701 is the address of correspondent router 150 and the destination address is the address of mobile router 111.

Here, it is presupposed that correspondent router 150 has known the address of mobile router 111. Usually, the correspondent router 150 will send HoTI message 1701 after receiving a BU message from mobile router 111, thus it would have already known the binding between the care-of-address and the home-address of mobile router 111. Hence, the destination address of the HoTI message 1701 can preferably bear the care-of-address of the mobile router 111. It should be obvious to anyone skilled in the art that the procedure will also work if the destination address of HoTI message 1701 bears the home-address of mobile router 111.

HoTI message 1701 will also contain a single or plurality of network prefixes that correspondent router 150 manages. This HoTI message 1701 corresponds to the HoT message 203 in the first embodiment of the present invention, thus the format of HoTI message 203 (message format shown in Fig. 5) can be used as the format of HoTI message 1701.

When mobile router 111 receives the HoTI message 1701, it responds with a HoT message 1702. The HoT message 1702 will contain a HoK token generated by mobile router 111 based on the address of the correspondent router 150. Preferably, the HoT message 1702 also informs correspondent router 150 how many NPT messages mobile router 111 will send. This HoT message 1702 corresponds to the HoT message 204 in the first embodiment of the present invention, thus the format of HoTI message 204 (message format shown in Fig. 6) can be used as the format of HoT message 1702.

For each network prefix specified in the HoTI message 1701, mobile router 111 will send one or more NPT message 1703 to some addresses which include the network prefix (i.e. each address includes this network prefix in the prefix part of this address). To avoid injecting a sudden burst of traffic into the network, mobile router 111 preferably waits for a small delay before sending the next NPT message 1703. This sending time of each NPT message 1703 is shown in Fig. 19 with the elongated time period 1720.

Each NPT message 1703 contains a NPK token generated by mobile router 111 based on the network prefix in which the destination address includes. This NPT message 1703 corresponds to the NPT message 205 in the first embodiment of the present invention, thus the format of NPT message 205 (message format shown in Fig. 7) can be used as the format of HoT message 1703.

After sending HoTI message 1701, correspondent router 150 starts a timer. During this time period 1724, correspondent router 150 inspects every packet sent from mobile router 111 to an address from the network prefix managed by correspondent router 150 to check for NPT message 1703. Correspondent router 150 needs to record all the HoK and NPK tokens respectively extracted from the HoT message 1702 and NPT messages 1703 during this time period 1724.

When correspondent router 150 has received all the HoK and NPK tokens, or when the time period 1724 has elapsed, the correspondent router 150 can proceed to send a BU message 1704 to bind the network prefixes managed by correspondent router 150 to the mobile router 111. The BU message 1704 contains a checksum that is cryptographically generated based on the received HoK and NPK tokens. This BU message 1704 corresponds to the BU message 206 in the first embodiment of the present invention, thus the format of BU message 206 (message format shown in Fig. 8) can be used as the format of BU message 1704 provided that the address of correspondent router 150 is specified as the source address.

This way, the mobile router 111 can verify if the BU message 1704 is valid by means of independently generating the checksum after receiving the BU message 1704 and comparing it with the checksum in the BU message 1704. This completes the improved Return Routability procedure for verifying the correspondent router 150.

As is above-mentioned, correspondent router 150 usually sends the HoTI message 1701 to mobile router 111 after receiving the BU message from mobile router 111. Therefore, for example, it can occur that the operation in the first embodiment of the present invention has been initiated between mobile router 111 and correspondent router 150, and then the operation in the second embodiment of the present invention is initiated after the BU message 206 is sent from mobile router 111 to correspondent router 150. However, since both mobile router 111 and correspondent router 150 basically use the same algorithm. Thus, any of mobile router 111 and correspondent router 150 can initiate the improved RR procedure. Furthermore, both mobile router 111 and correspondent router 150 can initiate the improved RR procedure independently at the almost same time.

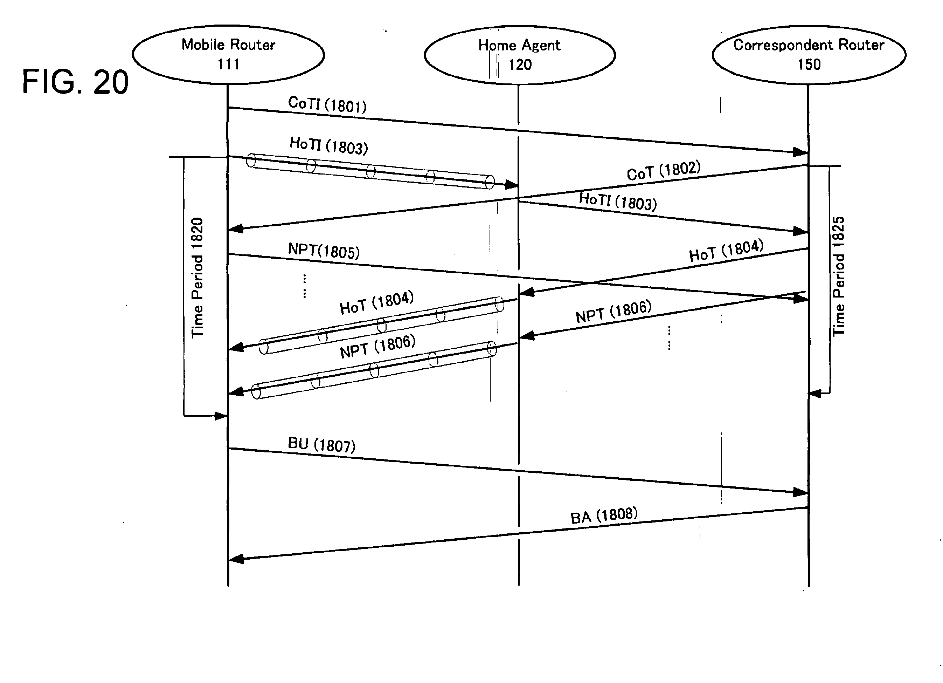

When both mobile router 111 and correspondent router 150 perform the improved RR procedure each other, complicated process may increase. However, the number of packets exchange and redundancy can be reduced by combining some messages. This is illustrated in Fig. 20.

Fig. 20 is a diagram showing the message sequence of the optimized Return Routability procedure between mobile router 111 and correspondent router 150 in the second embodiment of the present invention. Mobile router 111 first initiates the Return Routability procedure by sending the CoTI message 1801 and the HoTI message 1803. Since the HoTI message 1803 is sent using the home-address of mobile router 111 as the source address, it is forwarded to home agent 120 through the bi-direction tunnel. The above operation is the same as the transmission operation of the CoTI message 201 and the HoTI message 203 from mobile router 111 at the sequence shown in Fig. 2.

Once correspondent router 150 receives the CoTI message 1801, it replies with a CoT message 1802. Contents of the CoT message 1802 are the same as those of the original Return Routability procedure, with the addition of extra information. This extra information contains the network prefix of the correspondent network 155 managed by correspondent router 150. In other words, it can be said that CoT message 1802 is the combination of CoT message 202 in Fig. 2 and HoTI message 1701 in Fig. 19.

When mobile router 111 receives this CoT message 1802 and notices the extra information (the network prefix of the correspondent network 155), mobile router 111 treats this CoT message 1802 as akin to a HoTI message 1701 in Fig. 19.
To verify the network prefix information, mobile router 111 sends NPT message 1805 to one or more addresses selected from the specified network prefix. Each NPT message 1805 contains a NPK token cryptographically generated from the network prefix. Before sending this NPT message 1805, mobile router 111 can send a message to correspondent router 150 to tell the number of the NPT messages 1805.

Once the correspondent router 150 sends the CoT message 1802, it starts a timer (period 1825) to capture NPT messages 1805 sent from mobile router 111.

When correspondent router 150 receives the HoTI message 1803, it responds with the HoT message 1804 and the NPT message 1806, as described in the sequence of Fig. 2. The HoT message 1804 is addressed to the home-address of mobile router 111, and thus will be tunneled by home agent 120. The NPT message 1806 is sent to an address which includes the network prefix specified in the HoTI message 1802, and will also be tunneled by home agent 120.

Mobile router 111 starts a timer 1820 after sending HoTI message 1803 to capture the HoT message 1804 and the NPT message 1806 sent by correspondent router 150. After capturing the HoT message 1804 and the NPT message 1806, mobile router 111 sends a BU message 1807 to correspondent router 150. In the BU message 1807, mobile router 111 includes the mobile network prefix information, and a checksum cryptographically generated from the HoK, CoK and NPK tokens extracted from HoT message 1804, CoT message 1802 and NPT message 1806 respectively.
The correspondent router 150 can verify the validity of BU message 1807 by independently generating this checksum. Once the validity is verified, correspondent router 150 stores the binding of the home-address and the care-of address of the mobile router 111, and the network prefix of the mobile network 110.

After the validity is verified, correspondent router 150 sends to mobile router 111 a BA message 1808. In this BA message 1808, correspondent router 150 will also include information of the network prefix of the correspondent network 155 it manages, together with a checksum cryptographically generated from the NPK extracted from NPT message 1805. This way, mobile router 111 can verify the validity of the network prefix specified in the BA message 1808 by comparison of the checksums. When the validity is verified, mobile router 111 stores the binding of the address of correspondent router 150 and the network prefix of the correspondent network 155.

In the sequence of Fig. 20, correspondent router 150 includes the extra information (the network prefix of the correspondent network 155) in the CoT message 1802, but the object of the present invention is attained even in case that the extra information is included in the HoT massage 1804.

### (Third embodiment)

Next, the third embodiment of the present invention-is described. In the third embodiment of the present invention, basic concept of the present invention, suggested in the first and second embodiments with the description associated with the RR procedure, is described.

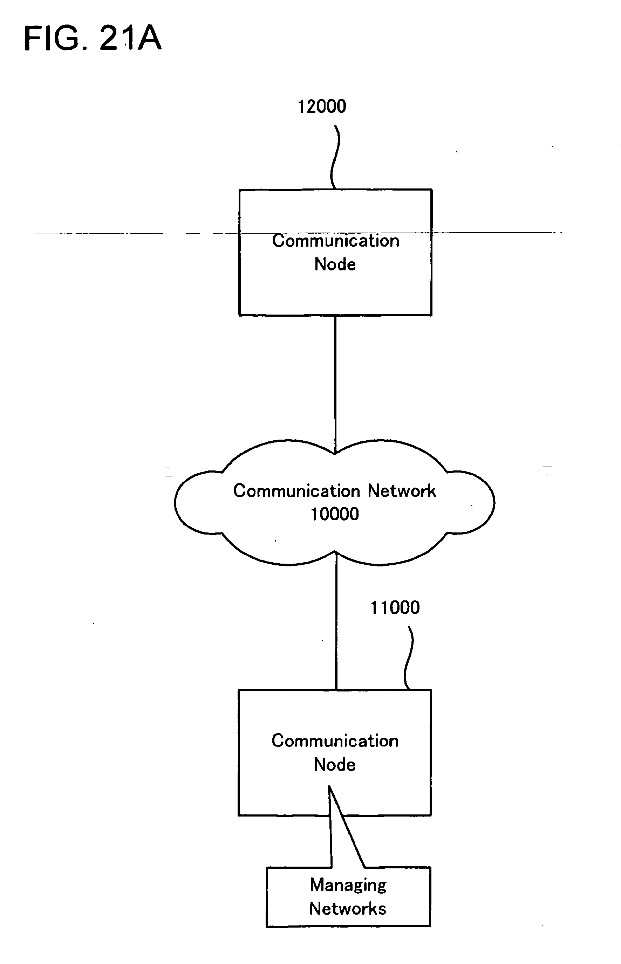

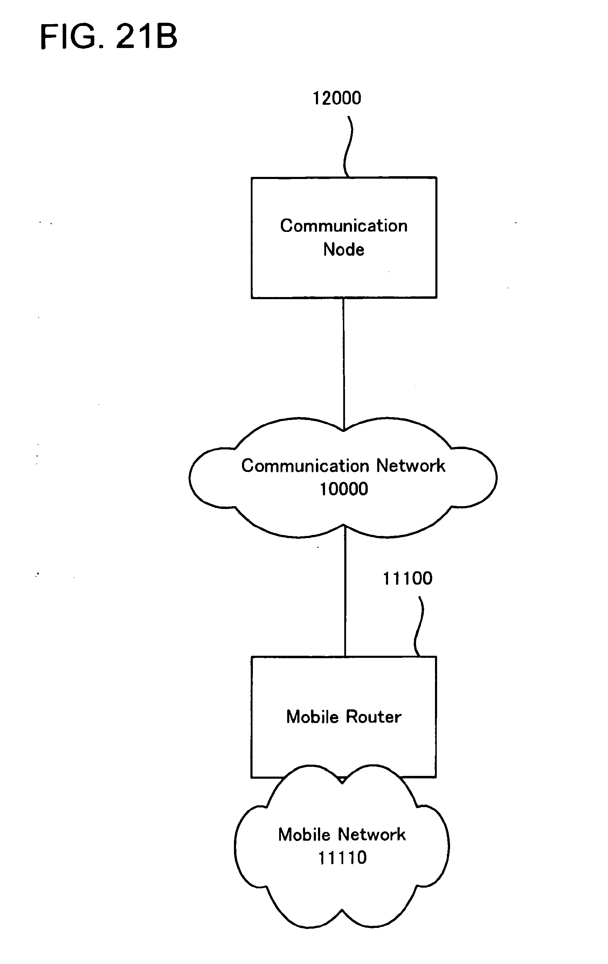

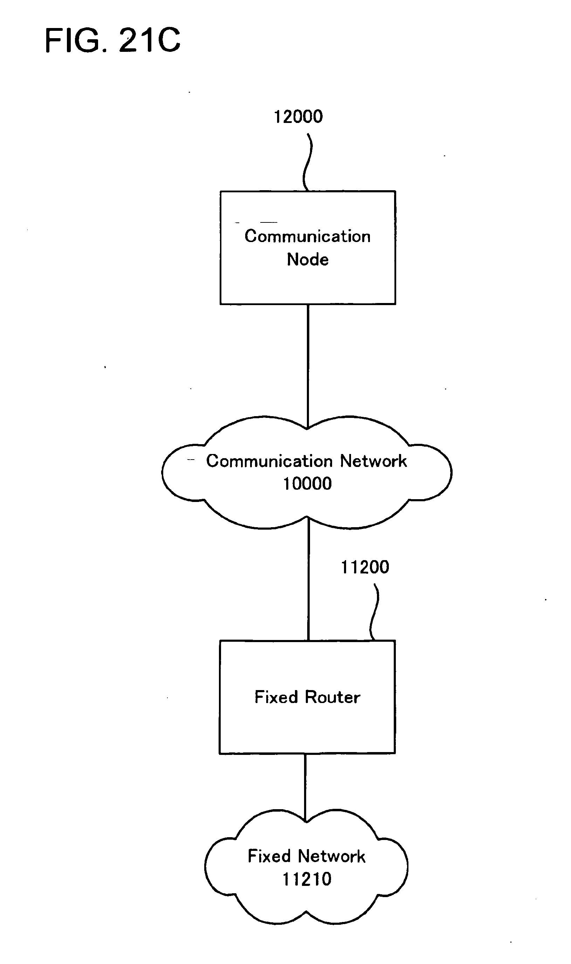

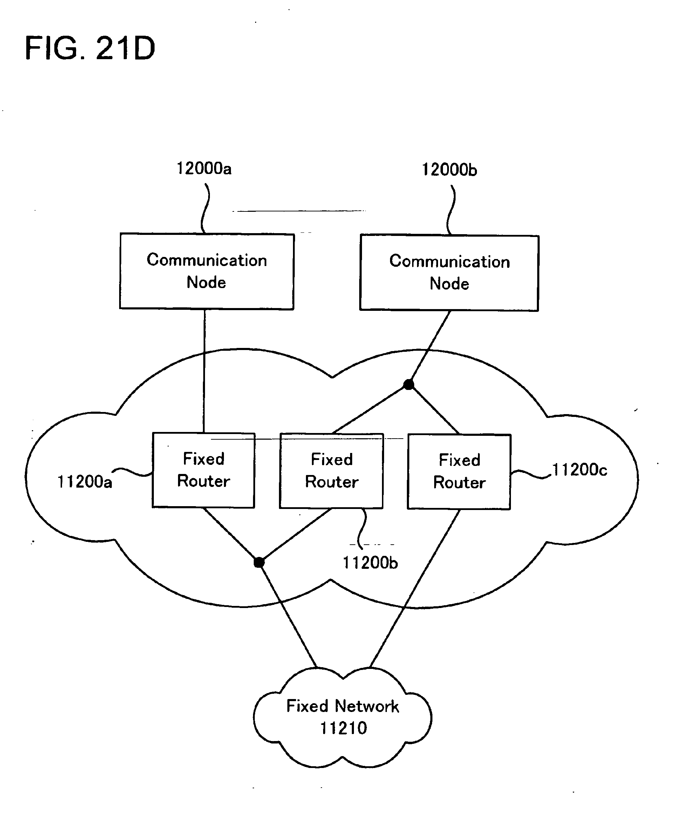

Fig. 21A is a diagram showing a communication system in the third embodiment of the present invention. Fig. 21B is a diagram showing a communication system which comprises mobile router with mobile network behind. Fig. 21C is a diagram showing a communication system which comprises fixed router serving as proxy router for the predetermined network.. Fig. 21D is a diagram showing a communication system which comprises a plurality of fixed routers managing the same fixed network. Above proxy router has ability to represent one or more networks such as mobile router, correspondent router or a certain router managing a certain network. Therefore, proxy router can be called designated router, delegated router or representative router.

In Fig. 21A, it is shown that two communication nodes 11000, 12000 are connected to a communication network 10000 and two communication nodes communicate with each other. The communication node 11000 is a communication node which manages one or more networks. The communication node 11000 manages network prefix set to each of one or more networks. Packets with the address including network prefix the communication node 11000 manages, as a destination address, reach the communication node 11000. The communication node 11000 then forwards each packet to an appropriate network correspondent with each packet's network prefix. Therefore, all the packets with the address including network prefix the communication node 11000 manages, as a destination address, goes through the communication node 11000.

This communication node 11000 is, for example, mobile router 11100 shown in Fig. 21B or fixed router 11200 shown in Fig. 21C. Mobile router 11100 shown in Fig. 21B is correspondent with mobile router 111 in the first embodiment (shown in Fig. 1). Fixed router 11200 shown in Fig. 21C is correspondent with correspondent -router 150 in the second embodiment (shown in Fig. 18).

Mobile router 11100 in Fig. 21B comprises one or more mobile network 11110 behind (only one shown in Fig. 21B). Mobile router 11100 is a router capable of being connected to the communication network 10000 at a certain point of attachment. As described in the first embodiment, mobile router 11100 manages network prefixes of one or more mobile networks. A certain node in the mobile network 11110 is provided with the address (the home-address or the care-of address) including the network prefix which mobile router 11100 manages. All the packets between a certain node in the mobile network 11110 and another node outside the mobile network 11110, goes through mobile router 11100.

Fixed router 11200 in Fig. 21C comprises one or more fixed network 11210 (only one shown in Fig. 21C). Fixed router 11200 is a router serving as a proxy for a certain node in one or more fixed network 11210. Fixed router 11200 manages network prefixes of one or more fixed networks. A certain node in the fixed network 11210 is provided with the address (the home-address or the care-of address) including the network prefix which fixed router 11200 manages. Packets between a certain node in the fixed network 11210 and another node outside the fixed network 11210 go through fixed router 11200. In Fig. 21C, it is illustrated that fixed network 11210 is deployed just under fixed router 11200, however, there can be one or more intermediate routers between fixed router 11200 and the fixed network 11210. Furthermore, fixed router 11200 may be connected to the communication network 10000 at a certain point of attachment. Fixed router 11200 can also manage, for example, the mobile network 11110 which mobile router 11100 manages, in addition to the fixed network 11210.
As a form of management, one fixed router 11200 can manage one fixed network, and a plurality fixed routers 11200 (three fix routers 11200a, 11200b and 11200c shown in the Fig. 21D) can also manage one fixed networks as shown in Fig. 21D.
In this case, each fixed router 11200a, 11200b and 11200c manages dynamically or statistically one fixed network 11210 according to various conditions such as nodes in the fixed network 11210, nodes residing outside of the fixed network 11210, processing burden for each fixed router 11200a, 11200b and 11200c. Furthermore, each fixed router 11200a, 11200b and 11200c share the processes regarding packets exchanged between fixed network 11120 and outside of fixed network 11120. In Fig. 21D, it is illustrated schematically that fixed router 11200a serves as a proxy regarding communication between the communication node 12000a and a node in the fixed network 11210, and fix routers 11200b and/or 11200c serve as proxies regarding communication between the communication node 12000b and a node in the fixed network 11210.

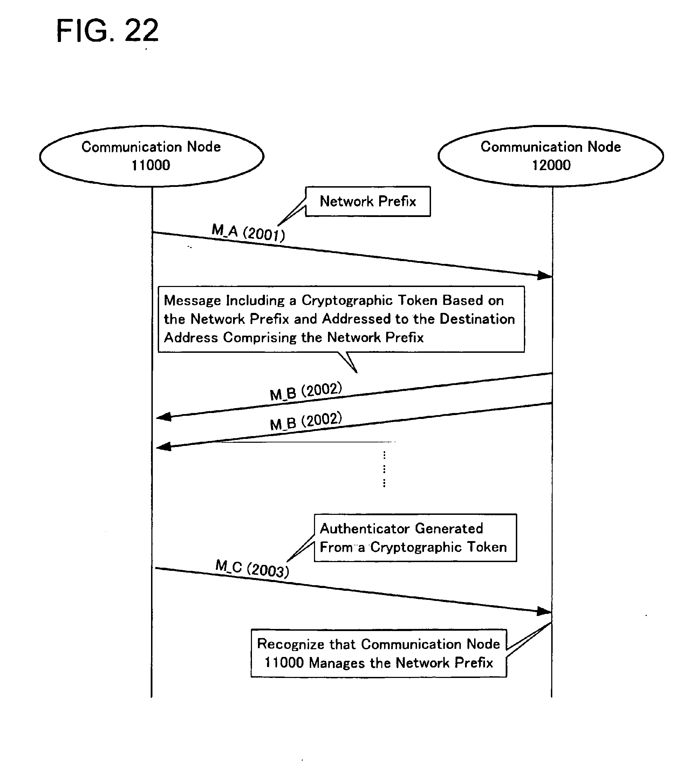

Next, the operation in the third embodiment of the present invention is described referring to Fig. 22. Here, the operation is described that the communication node 11000 managing one or more networks shows a certain communication node (here, communication node 12000) that it indeed manages the networks, and informs a certain communication node of the network prefixes of the network which it manages. Incidentally, it is possible that the operation shown in fig. 22 is basically extracted from the operation in the first and second embodiments.

The communication node 11000 first sends a message M_A 2001 to the communication node 12000. The communication node 11000 may send this message M_A 2001 according to some triggers (e.g. request from the communication node 12000, change of communication environment, etc.) or may decide the sending spontaneously by itself.

This message M_A 2001 includes at least some or all of the network prefixes of the network which the communication node 11000 manages. Incidentally, this message M_A is correspondent with the HoTI message 203 in the first embodiment, the HoTI message 1701, 1803 and CoT message 1802 in the second embodiment.

The communication node, receiving this message M_A 2001, extracts the network prefixes from this message M_A 2001, and generates the cryptographic tokens based on this network prefixes. By this process, the corresponding cryptographic tokens are generated, whose number is the same as the number of the network prefixes included in the message M_A 2001. At this time, the communication node 12000 can select the accepted network prefixes and set a limit to the number of the accepted network prefixes. Particularly in the case of setting a limit, the communication node 12000 preferably informs the communication node 11000 of the limited number.

The communication node 12000 generates the messages M_B 2002 including at least the cryptographic tokens correspondent with each network prefix. As is above-mentioned in the first embodiment, the destination addresses of these messages M_B 2002 are set to the addresses which include each network prefix. Furthermore, according to the values set to the host parts of the addresses, the communication node 11000 performs the process in different manners when the communication node 11000 receives the messages M_B 2002. The detail of this is omitted here.

One or more messages M_B 2002 sent from the communication node are delivered to the each network correspondent with each network prefix, and all of the messages M_B 2002 is bound to reach the communication node 11000. Thus, the communication node 11000 can intercept these messages M_B 2002 by scanning packets. Incidentally, this message M_B 2002 is correspondent with the NPT message 205 in the first embodiment, the NPT message 1703, 1805 and 1806 in the second embodiment.

The communication node 11000 extracts cryptographic tokens correspondent with each network prefix from the intercepted messages M_B 2002, and generates certification based on information generated by concatenating all of the cryptographic tokens. The communication node 11000 generates the message M_C 2003 including at least one or more network prefixes correspondent with the intercepted messages M_B 2002 and above certification, and sends this message M_C 2003 to the communication node 12000. Incidentally, this message M_C 2003 is correspondent with the BU message 206 in the first embodiment, the BU message 1704, 1807 and the BA message 1808 in the second embodiment.

The communication node 12000, receiving this message M_C 2003, extracts the network prefixes from the message M_C 2003, and again generates the cryptographic tokens based on this network prefixes. Furthermore, the communication node 12000 generates information based on information generated by concatenating all of the cryptographic tokens. The communication node 12000 compares this generated information to certification in the message M_C 2003. As both are the same, communication node 11000 recognizes that the communication node 11000 indeed manages these network prefixes.

When the communication node 11000 generates the message M_A 2001 which includes the network prefixes of the network which the communication node 11000 does not manage and sends this message M_A 2001 to the communication node 12000, the communication node 11000 can-not intercept the messages M_B 2002 sent from the communication node 12000, and can not send a message M_C 2003 including valid certification back to the communication node 12000. Thus, according to the above-mentioned operation, the communication node 12000 communicates with only the communication node 11000 which has shown successfully that the communication node 11000 manages the network indeed, and only the nodes which the communication node 11000 manages. This enables the communication node 12000 to exclude the spoofing that a person pretends to manage the networks which the person does not indeed manage. Furthermore, the communication node 12000 sets up the tunnel with the communication node 11000, and forwards only packets destined to the network which the communication node 11000 manages indeed (packets of which the destination address includes the network prefix managed indeed by the communication node 11000), through the tunnel. This enables the relevant packets to be delivered along the optimized route.

The detailed operation and the detailed description described in the first, second and third embodiment can be applied to the different embodiments, or can be combined together. For example, the detailed operation described in the first embodiment can be applied to the operation in the second and third embodiment.

### INDUSTRIAL APPLICABILITY

The advantage of the present invention is that a communication node managing a network can prove to another communication node that the communication node indeed manages the network, and that a mobile router communicating with a correspondent router can ascertain that the correspondent router indeed represents the correspondent network which the correspondent router claims to represent. The present invention is applied to the field of communication technology using the Internet Protocol, and particularly to the field of communication technology for a mobile network which moves with a mobile router.

## Claims

1. A network management method used in a communication system that is provided with a first node (11000) which manages at least one or more networks and a second node (12000) which is different from the first node and is outside the network managed by the first node, in which the first node and the second node are connected to a predetermined communication network (10000), the method for enabling the second node (12000) to verify prefix information of the first node (11000), comprising:
a step where the first node (11000) generates a first message (2001) including a network prefix which specifies the network and sends the first message (2001) to the second node (12000);
a step where the second node (12000) generates a token correspondent with the network prefix based on the network prefix in the first message (2001) received from the first node (11000);
a step where the second node (12000) generates a second message (2002) including the token correspondent with the network prefix and sends the second message (2002) to an address which is reachable to the network correspondent with the network prefix;
a step where the first node (11000) receives the second message (2002) and extracts the token in the second message;
a step where the first node (11000) generates a checksum using the token;
a step where the first node (11000) generates a third message (2003) including the network prefix and the checksum and sends the third message (2003) to the second node (12000); and
a step where the second node (12000) receives the third message (2003) and verifies the checksum in the third message based on the network prefix in the third message.

2. The network management method according to claim 1 comprising:
a step where the first node (11000) selects part or all of a plurality of networks and generates the first message (2001) including network prefixes which are correspondent with each of the selected network when the first node (11000) comprises the plurality of the networks; and
a step where the second node (12000) selects the network prefixes to be verified among the plurality of the network prefixes in the first message (2001).

3. The network management method according to claim 2 comprising a step where the second node (12000), selecting the network prefixes, generates a fourth message including a number of the selected network prefixes and sends the fourth message to the first node (11000).

4. The network management method according to claim 1 comprising a step where the second node (12000) binds a successfully verified network prefix to an address of the first node (11000) based on a result of verification and stores a binding information.

5. A network management method according to claim 1, wherein the first node (11000) being a mobile router (111) managing a mobile network (110), and the second node (12000) being a correspondent node (130), which communicates with a certain node (112) in said mobile network (110).

6. The network management method according to claim 5 wherein a home agent (120) of the mobile router (111) is connected to the predetermined communication network (100), and a destination address or a routing address of the first message (203) and/or the second message is set so that the first message (203) and/or the second message (204) are delivered via the home agent (120).

7. The network management method according claim 5 comprising:
a step where the mobile router (111) generates the first message (203) including a plurality of the network prefixes which specify each of the mobile network (110) when the mobile router (111) comprises the plurality of the mobile networks; and
a step where the correspondent node (130) selects one or more accepted network prefixes among the plurality of the network prefixes in the first message (203).

8. The network management method according to claim 7 comprising a step where the correspondent node (130), selecting the network prefixes, generates a fourth message including a number of the selected network prefixes and sends the fourth message to the mobile router (111).

9. The network management method according to claim 5 comprising a step where the correspondent node (130) generates the address which is reachable to the mobile network (110) to be set to the second message by adding a randomly generated value as a host part to the network prefix correspondent with the mobile network (110).

10. The network management method according to claim 9 comprising a step where, when the correspondent node (130), in generating the token correspondent with the network prefix, generates the token based on the address consisting of the network prefix and the host part with the randomly generated value and sends the second message by setting the address used at the generation of the token, as the address which is reachable to the mobile network (110) correspondent with the network prefix, the mobile router (111) stores the randomly generated value in the host part and informs then correspondent node (130) of the randomly generated value stored, in sending the third message.

11. The network management method according to claim 5 comprising:
a step where the mobile router (111) informs the correspondent node (130) of a specific value used as a host part which is added to the network prefix in the first message (203); and
a step where the correspondent node (130) generates the address which is reachable to the mobile network (110) and is set to the second message by adding the specific value informed from the mobile router (111) as a host part to the network prefix correspondent with the mobile network (110).

12. The network management method according to claim 11 comprising:
a step where the mobile router (111) stores the specific value which the mobile router informs the correspondent node (130) of
a step where, when the correspondent node (130), in generating the token correspondent with the network prefix, generates the token based on an address consisting of the network prefix and the host part with the specific value and sends the second message by setting the address used at the generation of the token, as the address which is reachable to the mobile network (110) correspondent with the network prefix,
the mobile router (111) informs the correspondent node (130) of the specific value stored, in sending the third message.

13. The network management method according to claim 5 comprising:
a step where the correspondent node (130), in generating the token correspondent with the network prefix, generates the token based on an address consisting of the network prefix and the host part with a universally predetermined value; and
a step where the correspondent node (130) generates the address which is reachable to the mobile network (110) and is set to the second message by adding the universally predetermined value as a host part to the network prefix correspondent with the mobile network (110).

14. The network management method according to claim 5 wherein the mobile router (111), in generating the checksum, generates the checksum based on a HoK token in a HoT message (204) and a CoK token in a CoT message (202) of a Return Routability procedure in addition to the token in the second message (205).

15. The network management method according to claim 5 comprising a step where the correspondent node binds a successfully verified network prefix to a home-address and a care-of address of the mobile router based on a result of verification and stores a binding information.

16. The network management method according to claim 5 comprising:
a step where the mobile router (111) stores a relation between an address of the correspondent node (130) and the network prefix registered with the correspondent node;
a step where the mobile router (111) intercepts a packet sent from the certain node in the mobile network (110) to the correspondent node (130) and judges whether the packet can be forwarded using an optimized route or not referring to the relation; and
a step where the mobile router (111) forwards the packet using the optimized route when the packet can be forwarded using an optimized route.

17. The network management method according to claim 5 comprising:
a step where the mobile router (111) stores a relation among an address of the correspondent node (130), the network prefix which can not have been registered with the correspondent node and reason of registration failure;
a step where the mobile router (111) intercepts a packet sent from the certain node in the mobile network (110) to the correspondent node (130) and judges whether the packet can be forwarded using an optimized route or not referring to the relation; and
a step where the mobile router (111) judges whether the mobile router generates the first message (203) including a network prefix regarding the packet and sends the first message to the correspondent node (130) referring to the reason of registration failure in the relation when the packet can not be forwarded using an optimized route.

18. A network management method according to claim 1, wherein the first node (11000) being a correspondent router (11200) which manages a correspondent network (11210) and serves as a proxy for a certain node in a correspondent network, and the second node being a correspondent node (12000), which communicates with said certain node.

19. The network management method according to claim 18 comprising:
a step where the correspondent router (11200) generates the first message including a plurality of the network prefixes which specify each of the correspondent network when the correspondent router (11200) serves as the proxy of the plurality of the correspondent networks (11210); and
a step where the correspondent node (12000) selects one or more accepted network prefixes among the plurality of the network prefixes in the first message.

20. The network management method according to claim 19 comprising a step where the correspondent node (12000), selecting the network prefixes, generates a fourth message including a number of the selected network prefixes and sends the fourth message to the correspondent router.

21. The network management method according to claim 18 comprising a step where the correspondent node (12000) generates the address which is reachable to the correspondent network to be set to the second message by adding a randomly generated value as a host part to the network prefix correspondent with the correspondent network (11210).

22. The network management method according to claim 21 comprising a step where, when the correspondent node (12000), in generating the token correspondent with the network prefix, generates the token based on the address consisting of the network prefix and the host part with the randomly generated value and sends the second message by setting the address used at the generation of the token, as the address which is reachable to the correspondent network (11210) correspondent with the network prefix, the correspondent router (11200) stores the randomly generated value in the host part and informs the correspondent node of the randomly generated value stored, in sending the third message.

23. The network management method according to claim 18 comprising:
a step where the correspondent router (11200) informs the correspondent node (12000) of a specific value used as a host part which is added to the network prefix in the first message; and
a step where the correspondent node (12000) generates the address which is reachable to the correspondent network (11210) and is set to the second message by adding the specific value informed from the correspondent router (11200) as a host part to the network prefix correspondent with the correspondent network.

24. The network management method according to claim 23 comprising:
a step where the correspondent router (11200) stores the specific value which the correspondent router informs the correspondent node (12000) of a step where, when the correspondent node (12000), in generating the token correspondent with the network prefix, generates the token based on an address consisting of the network prefix and the host part with the specific value and sends the second message by setting the address used at the generation of the token, as the address which is reachable to the correspondent network (11210) correspondent with the network prefix,
the correspondent router informs the correspondent node (12000) of the specific value stored, in sending the third message.

25. The network management method according to claim 18 comprising:
a step where the correspondent node (12000), in generating the token correspondent with the network prefix, generates the token based on an address consisting of the network prefix and the host part with a universally predetermined value; and
a step where the correspondent node (12000) generates the address which is reachable to the correspondent network (11210) and is set to the second message by adding the universally predetermined value as a host part to the network prefix correspondent with the correspondent network.

26. The network management method according to claim 18 wherein the correspondent router (11200), in generating the checksum, generates the checksum based on a HoK token in a HoT (204) message of a Return Routability procedure in addition to the token in the second message (205).

27. The network management method according to claim 18 comprising a step where the correspondent node (12000) binds a successfully verified network prefix to an address of the correspondent router (11200) based on a result of verification and stores a binding information.

28. The network management method according to claim 18 comprising:
a step where the correspondent router (11200) stores a relation between an address of the correspondent node (12000) and the network prefix registered with the correspondent node;
a step where the correspondent router (11200) intercepts a packet sent from the certain node in the correspondent network (11210) to the correspondent node and judges whether the packet can be forwarded using an optimized route or not referring to the relation; and
a step where the correspondent router (11200) forwards the packet using the optimized route when the packet can be forwarded using an optimized route.

29. The network management method according to claim 18 comprising:
a step where the correspondent router (11200) stores a relation among an address of the correspondent node (12000), the network prefix which can not have been registered with the correspondent node and reason of registration failure;

30. A network management apparatus being arranged in a first node (11000) which is capable of managing at least one or more networks, comprising:
a means for generating a first message (2001) including a network prefix which specifies the network and sending a first message to a second node (12000) which is different from the first node (11000) and is outside the network managed by the first node;
a means for receiving from the second node (12000) a second message (2002) sent to an address reachable to the network correspondent with the network prefix, the second message including a token generated by the second node based on the network prefix in the first message (2001) and extracting the token in the second message;
a means for generating a checksum using the token; and
a means for generating a third message (2003) including the network prefix and the checksum and sending the third message to the second node (12000).
a step where the correspondent router (11200) intercepts a packet sent from the certain node in the correspondent network (11210) to the correspondent node and judges whether the packet can be forwarded using an optimized route or not referring to the relation; and
a step where the correspondent router (11200) judges whether the correspondent router generates the first message including a network prefix regarding the packet and sends the first message to the correspondent node referring to the reason of registration failure in the relation when the packet can not be forwarded using an optimized route.

31. The network management apparatus according to claim 30, wherein the first node (11000) being a mobile router (111) managing a mobile network (110), and the second node (12000) being a correspondent node (130), which communicates with a certain node (112) in said mobile network (110).

32. The network management apparatus according to claim 31, comprising:
a host part storage means, when the predetermined correspondent node (130), in generating the token correspondent with the network prefix, generates the token based on the address consisting of the network prefix and the host part with the randomly generated value and sends the second message by setting the address used at the generation of the token, as the address which is reachable to the mobile network (110) correspondent with the network prefix, for extracting the randomly generated value in the host part from the destination address of the second message; and
a means for informing the predetermined correspondent node (130) of the randomly generated value stored in the host part storage means, in sending the third message.

33. The network management apparatus according to claim 31, comprising:
a means for informing the predetermined correspondent node (130) of a specific value used as a host part which is added to the network prefix in the first message;
a value storage means for storing the specific value informed the predetermined correspondent node; and
a means, when the predetermined correspondent node, in generating the token correspondent with the network prefix, generates the token based on an address consisting of the network prefix and the host part with the specific value and sends the second message by setting the address used at the generation of the token, as the address which is reachable to the mobile network correspondent with the network prefix, for informing the predetermined correspondent node of the specific value stored in the value storage means, in sending the third message.

34. The network management apparatus according to claim 30, wherein the first node (11000) being a correspondent router (11200) which manages a correspondent network (11210) and serves as a proxy for a certain node in a correspondent network, and the second node being a correspondent node (12000), which communicates with said certain node.

35. The network management apparatus according to claim 34, comprising:
a host part storage means, when the predetermined correspondent node (12000), in generating the token correspondent with the network prefix, generates the token based on the address consisting of the network prefix and the host part with the randomly generated value and sends the second message by setting the address used at the generation of the token, as the address which is reachable to the correspondent network (11210) correspondent with the network prefix, for extracting the randomly generated value in the host part from the destination address of the second message; and
a means for informing the predetermined correspondent node (12000) of the randomly generated value stored in the host part storage means, in sending the third message.

36. The network management apparatus according to claim 34, comprising:
a means for informing the predetermined correspondent node (12000) of a specific value used as a host part which is added to the network prefix in the first message;
and
a value storage means for storing the specific value informed the predetermined correspondent node;
a means, when the predetermined correspondent node, in generating the token. correspondent with the network prefix, generates the token based on an address consisting of the network prefix and the host part with the specific value and sends the second message by setting the address used at the generation of the token, as the address which is reachable to the correspondent network (11210) correspondent with the network prefix, for informing the predetermined correspondent node of the specific value stored in the value storage means, in sending the third message.

37. A network management apparatus being arranged in a node capable of communicating with a first node (11000) managing at least one or more networks, the node being a second node (12000) and outside the network managed by the first node, comprising:
a means for receiving a first message generated by the first node (11000), including a network prefix which specifies the network;
a means for generating a token correspondent with the network prefix based on the network prefix in the first message (2001) received from the first node;
a means for generating a second message (2002) including the token correspondent with the network prefix and sends the second message to an address which is reachable to the network correspondent with the network prefix; and
a means for receiving a third message (2003) including the checksum generated by the first node using the token and the network prefix, and verifying the checksum in the third message based on the network prefix in the third message.

38. The network management apparatus according to claim 37 comprising a means, when the first node (11000) manages a plurality of the networks and the second node (12000) receives the first message (2001) including one or more network prefixes which are correspondent with each of the one or more networks, for selecting the network prefixes to be verified among the plurality of the network prefixes in the first message.

39. The network management apparatus according to claim 38 comprising a means for generating a fourth message including a number of the selected network prefixes and sends the fourth message to the first node (11000), in selecting the network prefixes.

40. A network management apparatus according to claim 37, wherein the first node (11000) being a mobile router (111) managing a mobile network (110), and the second node (12000) being a correspondent node (130), which communicates with a certain node (112) in said mobile network.

41. The network management apparatus according to claim 40 comprising:
a means, in receiving from the mobile router (111) the first message (203) including a plurality of the network prefixes (522) which specify each of the mobile network, when the mobile router (111) comprises the plurality of the mobile networks, for selecting one or more accepted network prefixes among the plurality of the network prefixes in the first message (203).

42. The network management apparatus according to claim 41 comprising a means for generating a fourth message including a number of the selected network prefixes and sending the fourth message to the mobile router.

43. The network management apparatus according to claim 40 comprising a means for performing a Return Routability procedure, wherein a HoT message (204) of the Return Routability procedure is used as the fourth message.

44. The network management apparatus according to claim 40 comprising:
a means for binding a successfully verified network prefix to a home-address and a care-of address of the mobile router (111) based on a result of verification in the third message (206); and
a means for storing a binding information.

45. The network management apparatus according to claim 40 wherein the means for generating the token, in generating the token correspondent with the network prefix, generates the token based on the address consisting of the network prefix and the host part with a randomly generated value, and the means for sending the second message, sends the second message (205) by setting the address used at the generation of the token, as the address which is reachable to the mobile network (110) correspondent with the network prefix.

46. The network management method according to claim 40 wherein, when a specific value used as a host part which is added to the network prefix in the first message is informed, the means for generating the token, in generating the token correspondent with the network prefix, generates the token based on the address consisting of the network prefix and the host part with the specific value, and the means for sending the second message (205), sends the second message by setting the address used at the generation of the token, as the address which is reachable to the mobile network (110) correspondent with the network prefix.

47. The network management apparatus according to claim 40 wherein the means for generating the token, in generating the token correspondent with the network prefix, generates the token based on the address consisting of the network prefix and the host part with the universally predetermined value, and the means for sending the second message (205), sends the second message by setting the address used at the generation of the token, as the address which is reachable to the mobile network (110) correspondent with the network prefix.

48. The network management apparatus method according to claim 37, wherein the first node (11000) being a correspondent router (11200) which manages a correspondent network (11210) and serves as a proxy for a certain node in a correspondent network, and the second node being a correspondent node (12000), which communicates with said certain node.

49. The network management apparatus according to claim 48 comprising:
a means, in receiving from the correspondent router the first message including a plurality of the network prefixes which specify each of the correspondent network (11210), when the correspondent router (11200) comprises the plurality of the correspondent networks, for selecting one or more accepted network prefixes among the plurality of the network prefix in the first message.

50. The network management apparatus according to claim 49 comprising a means for generating a fourth message including a number of the selected network prefixes and sending the fourth message to the correspondent router (11200).

51. The network management apparatus according to claim 48 comprising a means for performing a Return Routability procedure, wherein a HoT message of the Return Routability procedure is used as the fourth message.

52. The network management apparatus according to claim 48 comprising:
a means for binding a successfully verified network prefix to an address of the correspondent router (11200) based on a result of verification in the third message;
and
a means for storing a binding information.

53. The network management apparatus according to claim 48 wherein the means for generating the token, in generating the token correspondent with the network prefix, generates the token based on the address consisting of the network prefix and the host part with a randomly generated value, and the means for sending the second message, sends the second message by setting the address used at the generation of the token, as the address which is reachable to the correspondent network (11210) correspondent with the network prefix.

54. The network management method according to claim 48 wherein, when a specific value used as a host part which is added to the network prefix in the first message is informed, the means for generating the token, in generating the token correspondent with the network prefix, generates the token based on the address consisting of the network prefix and the host part with the specific value, and the means for sending the second message, sends the second message by setting the address used at the generation of the token, as the address which is reachable to the correspondent network (11210) correspondent with the network prefix.

55. The network management apparatus according to claim 48 wherein the means for generating the token, in generating the token correspondent with the network prefix, generates the token based on the address consisting of the network prefix and the host part with the universally predetermined value, and the means for sending the second message, sends the second message by setting the address used at the generation of the token, as the address which is reachable to the correspondent network (11210) correspondent with the network prefix.

56. The network management method according to claims 8 or 23 wherein a HoT message of a Return Routability procedure is used as the fourth message.

57. The network management method according to claim 5 or 21 wherein a HoTl message (203) of a Return Routability procedure is used as the first message.

58. The network management method according to claim 5 or 21 wherein a HoT message of a Return Routability procedure is used as the second message.

59. The network management apparatus according to claim 37 or 41, comprising a means for performing a Return Routability procedure, being arranged to use a HoTl message (203) of the Return Routability procedure as the first message and, in generating checksum, generate the checksum based on a HoK token in a HoT message (204) and a CoK token in a CoT message (202) of the Return Routability procedure in addition to the token in the second message (205).

## Patentansprüche

1. Netzwerk-Verwaltungsverfahren, das in einem Kommunikationssystem eingesetzt wird, das mit einem ersten Knoten (11000), der wenigstens ein oder mehrere Netzwerk/e verwaltet, sowie einem zweiten Knoten (12000) versehen ist, der sich von dem ersten Knoten unterscheidet und sich außerhalb des von dem ersten Knoten verwalteten Netzwerks befindet, wobei der erste Knoten und der zweite Knoten mit einem vorgegebenen Kommunikations-Netzwerk (10000) verbunden sind und das Verfahren den zweiten Knoten (12000) befähigt, Präfix-Informationen des ersten Knotens (11000) zu verifizieren, wobei das Verfahren umfasst:
einen Schritt, in dem der erste Knoten (11000) eine erste Nachricht (2001) erzeugt, die ein Netzwerk-Präfix enthält, das das Netzwerk angibt, und er die erste Nachricht (2001) zu dem zweiten Knoten (12000) sendet;
einen Schritt, in dem der zweite Knoten (12000) ein Token, das dem Netzwerk-Präfix entspricht, auf Basis des Netzwerk-Präfixes in der von dem ersten Knoten (11000) empfangenen ersten Nachricht (2001) erzeugt;
einen Schritt, in dem der zweite Knoten (12000) eine zweite Nachricht (2002) erzeugt, die das dem Netzwerk-Präfix entsprechenden Token enthält, und er die zweite Nachricht (2002) zu einer Adresse sendet, die für das Netzwerk erreichbar ist, das dem Netzwerk-Präfix entspricht;
einen Schritt, in dem der erste Knoten (11000) die zweite Nachricht (2002) empfängt und das Token in der zweiten Nachricht extrahiert;
einen Schritt, in dem der erste Knoten (11000) eine Prüfsumme unter Verwendung des Token erzeugt;
einen Schritt, in dem der erste Knoten (11000) eine dritte Nachricht (2003) erzeugt, die das Netzwerk-Präfix und die Prüfsumme enthält, und er die dritte Nachricht (2003) zu dem zweiten Knoten (12000) sendet; und
einen Schritt, in dem der zweite Knoten (1200) die dritte Nachricht (2003) empfängt und die Prüfsumme in der dritten Nachricht auf Basis des Netzwerk-Präfixes in der dritten Nachricht verifiziert.

2. Netzwerk-Verwaltungsverfahren nach Anspruch 1, das umfasst:
einen Schritt, in dem der erste Knoten (11000) alle einer Vielzahl von Netzwerken oder einen Teil davon auswählt und die erste Nachricht (2001) erzeugt, die Netzwerk-Präfixe enthält, die jedem ausgewählten Netzwerk entsprechen, wenn der erste Knoten (11000) die Vielzahl der Netzwerke umfasst; und
einen Schritt, in dem der zweite Knoten (12000) die zu verifizierenden Netzwerk-Präfixe aus der Vielzahl der Netzwerk-Präfixe in der ersten Nachricht (2001) auswählt.

3. Netzwerk-Verwaltungsverfahren nach Anspruch 2, das einen Schritt umfasst, in dem der zweite Knoten (12000) beim Auswählen der Netzwerk-Präfixe eine vierte Nachricht erzeugt, die eine Anzahl der ausgewählten Netzwerk-Präfixe enthält, und er die vierte Nachricht zu dem ersten Knoten (11000) sendet.

4. Netzwerk-Verwaltungsverfahren nach Anspruch 1, das einen Schritt umfasst, in dem der zweite Knoten (12000) ein erfolgreich verifiziertes Netzwerk-Präfix an eine Adresse des ersten Knotens (11000) auf Basis eines Ergebnisses der Verifizierung bindet und eine Binding-Information speichert.

5. Netzwerk-Verwaltungsverfahren nach Anspruch 1, wobei der erste Knoten (11000) ein mobiler Router (111) ist, der ein mobiles Netzwerk (110) verwaltet, und der zweite Knoten (12000) ein korrespondierender Knoten (130) ist, der mit einem bestimmten Knoten (112) in dem mobilen Netzwerk (110) kommuniziert.

6. Netzwerk-Verwaltungsverfahren nach Anspruch 5, wobei ein Home Agent (120) des mobilen Routers (111) mit dem vorgegebenen Kommunikations-Netzwerk (100) verbunden ist und eine Zieladresse oder eine Routing-Adresse der ersten Nachricht (203) und/oder der zweiten Nachricht so festgelegt wird, dass die erste Nachricht (203) und/oder die zweite Nachricht (204) über den Home Agent (120) übermittelt werden/wird.

7. Netzwerk-Verwaltungsverfahren nach Anspruch 5, das umfasst:
einen Schritt, in dem der mobile Router (111) die erste Nachricht (203) erzeugt, die eine Vielzahl der Netzwerk-Präfixe enthält, die jedes der mobilen Netzwerke (110) angeben, wenn der mobile Router (111) die Vielzahl der mobilen Netzwerke umfasst; und
einen Schritt, in dem der korrespondierende Knoten (130) ein oder mehrere akzeptierte/s Netzwerk-Präfix/e aus der Vielzahl der Netzwerk-Präfixe in der ersten Nachricht (203) auswählt.

8. Netzwerk-Verwaltungsverfahren nach Anspruch 7, das einen Schritt umfasst, in dem der korrespondierende Knoten (130) beim Auswählen der Netzwerk-Präfixe eine vierte Nachricht erzeugt, die eine Anzahl der ausgewählten Netzwerk-Präfixe enthält, und er die vierte Nachricht zu dem mobilen Router (111) sendet.

9. Netzwerk-Verwaltungsverfahren nach Anspruch 5, das einen Schritt umfasst, in dem der korrespondierende Knoten (130) die Adresse erzeugt, die für das mobile Netzwerk (110) erreichbar ist und für die zweite Nachricht festgelegt wird, indem er einen willkürlich erzeugten Wert als einen Host-Teil zu dem Netzwerk-Präfix hinzufügt, das dem mobilen Netzwerk (110) entspricht.

10. Netzwerk-Verwaltungsverfahren nach Anspruch 9, das einen Schritt umfasst, in dem, wenn der korrespondierende Knoten (130) beim Erzeugen des Token, das dem Netzwerk-Präfix entspricht, das Token auf Basis der Adresse erzeugt, die aus dem Netzwerk-Präfix und dem Host-Teil mit dem willkürlich erzeugten Wert besteht, und er die zweite Nachricht sendet, indem er die bei der Erzeugung des Token verwendete Adresse als die Adresse festlegt, die für das mobile Netzwerk (110) erreichbar ist, das dem Netzwerk-Präfix entspricht, der mobile Router (111) den willkürlich erzeugten Wert in dem Host-Teil speichert und dann den korrespondierenden Knoten (130) beim Senden der dritten Nachricht über den gespeicherten willkürlich erzeugten Wert informiert.

11. Netzwerk-Verwaltungsverfahren nach Anspruch 5, das umfasst:
einen Schritt, in dem der mobile Router (111) den korrespondierenden Knoten (130) über einen spezifischen Wert informiert, der als ein Host-Teil verwendet wird, der in der ersten Nachricht (203) zu dem Netzwerk-Präfix hinzugefügt wird; und
einen Schritt, in dem der korrespondierende Knoten (130) die Adresse erzeugt, die für das mobile Netzwerk (110) erreichbar ist und für die zweite Nachricht festgelegt wird, indem er den spezifischen Wert, über den er von dem mobilen Router (111) informiert wird, als einen Host-Teil zu dem Netzwerk-Präfix hinzufügt, das dem mobilen Netzwerk (110) entspricht.

12. Netzwerk-Verwaltungsverfahren nach Anspruch 11, das umfasst:
einen Schritt, in dem der mobile Router (111) den spezifischen Wert speichert, über den der mobile Router den korrespondierenden Knoten (130) informiert,
einen Schritt, in dem der korrespondierende Knoten (130) beim Erzeugen des Token, das dem Netzwerk-Präfix entspricht, das Token auf Basis einer Adresse erzeugt, die aus dem Netzwerk-Präfix und dem Host-Teil mit dem spezifischen Wert besteht, und er die zweite Nachricht sendet, indem er die bei der Erzeugung des Token verwendete Adresse als die Adresse festlegt, die für das mobile Netzwerk (110) erreichbar ist, das dem Netzwerk-Präfix entspricht,
der mobile Router (111) den korrespondierenden Knoten (130) beim Senden der dritten Nachricht über den gespeicherten spezifischen Wert informiert.

13. Netzwerk-Verwaltungsverfahren nach Anspruch 5, das umfasst:
einen Schritt, in dem der korrespondierende Knoten (130) beim Erzeugen des Token, das dem Netzwerk-Präfix entspricht, das Token auf Basis einer Adresse erzeugt, die aus dem Netzwerk-Präfix und dem Host-Teil mit einem universell vorgegebenen Wert besteht; und
einen Schritt, in dem der korrespondierende Knoten (130) die Adresse erzeugt, die für das mobile Netzwerk (110) erreichbar ist und die für die zweite Nachricht festgelegt wird, indem der universell vorgegebene Wert als ein Host-Teil zu dem Netzwerk-Präfix hinzugefügt wird, das dem mobilen Netzwerk (110) entspricht.

14. Netzwerk-Verwaltungsverfahren nach Anspruch 5, wobei der mobile Router (111) beim Erzeugen der Prüfsumme die Prüfsumme auf Basis eines HoK-Token in einer HoT-Nachricht (204) und eines CoK-Token in einer CoT-Nachricht (202) einer Return-Routability-Prozedur zusätzlich zu dem Token in der zweiten Nachricht (205) erzeugt.

15. Netzwerk-Vervvaltungsverfahren nach Anspruch 5, das einen Schritt umfasst, in dem der korrespondierende Knoten ein erfolgreich verifiziertes Netzwerk-Präfix an eine Heimatadresse und eine Gastgeberadresse des mobilen Routers auf Basis eines Ergebnisses der Verifizierung bindet und eine Binding-Information speichert.

16. Netzwerk-Verwaltungsverfahren nach Anspruch 5, das umfasst:
einen Schritt, in dem der mobile Router (111) eine Beziehung zwischen einer Adresse des korrespondierenden Knotens (130) und dem bei dem korrespondierenden Knoten registrierten Netzwerk-Präfix speichert,
einen Schritt, in dem der mobile Router (111) ein von dem bestimmten Knoten in dem mobilen Netzwerk (110) zu dem korrespondierenden Knoten (130) gesendetes Paket abfängt und unter Bezugnahme auf die Beziehung beurteilt, ob das Paket unter Verwendung einer optimierten Route weitergeleitet werden kann oder nicht; und
einen Schritt, in dem der mobile Router (111) das Paket unter Verwendung der optimierten Route weiterleitet, wenn das Paket unter Verwendung einer optimierten Route weitergeleitet werden kann.

17. Netzwerk-Verwaltungsverfahren nach Anspruch 5, das umfasst:
einen Schritt, in dem der mobile Router (111) eine Beziehung zwischen einer Adresse des korrespondierenden Knotens (130), dessen Netzwerk-Präfix nicht bei dem korrespondierenden Knoten registriert werden konnte, und dem Grund für den Registrierungs-Fehler speichert;
einen Schritt, in dem der mobile Router (111) ein von dem bestimmten Knoten in dem mobilen Netzwerk (110) zu dem korrespondierenden Knoten (130) gesendetes Paket abfängt und unter Bezugnahme auf die Beziehung beurteilt, ob das Paket unter Verwendung einer optimierten Route weitergeleitet werden kann oder nicht; und
einen Schritt, in dem der mobile Router (111) unter Bezugnahme auf den Grund für den Registrierungs-Fehler in der Beziehung beurteilt, ob der mobile Router die erste Nachricht (203) erzeugt, die ein Netzwerk-Präfix bezüglich des Paketes enthält, und die erste Nachricht zu dem korrespondierenden Knoten (130) sendet, wenn das Paket nicht unter Verwendung einer optimierten Route weitergeleitet werden kann.

18. Netzwerk-Verwaltungsverfahren nach Anspruch 1, wobei der erste Knoten (11000) ein korrespondierender Router (11200) ist, der ein korrespondierendes Netzwerk (11210) verwaltet und als ein Proxy für einen bestimmten Knoten in einem korrespondierenden Netzwerk dient, und der zweite Knoten ein korrespondierender Knoten (12000) ist, der mit dem bestimmten Knoten kommuniziert.

19. Netzwerk-Verwaltungsverfahren nach Anspruch 18, das des Weiteren umfasst:
einen Schritt, in dem der korrespondierende Router (11200) die erste Nachricht erzeugt, die eine Vielzahl der Netzwerk-Präfixe enthält, die jedes der korrespondierenden Netzwerke angeben, wenn der korrespondierende Router (11200) als der Proxy der Vielzahl der korrespondierenden Netzwerke (11210) dient; und
einen Schritt, in dem der korrespondierende Knoten (12000) ein oder mehrere akzeptierte/s Netzwerk-Präfix/e aus der Vielzahl der Netzwerk-Präfixe in der ersten Nachricht auswählt.

20. Netzwerk-Verwaltungsverfahren nach Anspruch 19, das einen Schritt umfasst, in dem der korrespondierende Knoten (12000) beim Auswählen der Netzwerk-Präfixe eine vierte Nachricht erzeugt, die eine Anzahl der ausgewählten Netzwerk-Präfixe enthält, und er die vierte Nachricht zu dem korrespondierenden Router sendet.

21. Netzwerk-Verwaltungsverfahren nach Anspruch 18, das einen Schritt umfasst, in dem der korrespondierende Knoten (12000) die Adresse erzeugt, die für das korrespondierende Netzwerk erreichbar ist, um sie für die zweite Nachricht festzulegen, indem er einen willkürlich erzeugten Wert als einen Host-Teil zu dem Netzwerk-Präfix hinzufügt, das dem korrespondierenden Netzwerk (11210) entspricht.

22. Netzwerk-Verwaltungsverfahren nach Anspruch 21, das einen Schritt umfasst, in dem, wenn der korrespondierende Knoten (12000) beim Erzeugen des Token, der dem Netzwerk-Präfix entspricht, den Token auf Basis der Adresse erzeugt, die aus dem Netzwerk-Präfix und dem Host-Teil mit dem willkürlich erzeugten Wert besteht, und die zweite Nachricht sendet, indem er die bei der Erzeugung des Token verwendete Adresse als die Adresse festlegt, die für das korrespondierende Netzwerk (11210) erreichbar ist, das dem Netzwerk-Präfix entspricht,
der korrespondiere Router (11200) den willkürlich erzeugten Wert in dem Host-Teil speichert und den korrespondierenden Knoten beim Senden der dritten Nachricht über den gespeicherten willkürlich erzeugten Wert informiert.

23. Netzwerk-Verwaltungsverfahren nach Anspruch 18, das umfasst:
einen Schritt, in dem der korrespondierende Router (11200) den korrespondierenden Knoten (12000) über einen spezifischen Wert informiert, der als ein Host-Teil verwendet wird, der in der ersten Nachricht zu dem Netzwerk-Präfix hinzugefügt wird; und
einen Schritt, in dem der korrespondierende Knoten (12000) die Adresse erzeugt, die für das korrespondierende Netzwerk (11210) erreichbar ist und die für die zweite Nachricht festgelegt wird, indem er den spezifischen Wert, über den er von dem korrespondierenden Router (11200) informiert wird, als einen Host-Teil zu dem Netzwerk-Präfix hinzufügt, das dem korrespondierenden Netzwerk entspricht.

24. Netzwerk-Verwaltungsverfahren nach Anspruch 23, das umfasst:
einen Schritt, in dem der korrespondierende Router (11200) den spezifischen Wert speichert, über den der korrespondierende Router den korrespondierenden Knoten (12000) informiert,
einen Schritt, in dem der korrespondierende Knoten (12000) beim Erzeugen des Token, das dem Netzwerk-Präfix entspricht, das Token auf Basis einer Adresse erzeugt, die aus dem Netzwerk-Präfix und dem Host-Teil mit dem spezifischen Wert besteht, und er die zweite Nachricht sendet, indem er die bei der Erzeugung des Token verwendete Adresse als die Adresse festlegt, die für das korrespondierende Netzwerk (11210) erreichbar ist, das dem Netzwerk-Präfix entspricht,
der korrespondierende Router den korrespondierenden Knoten (12000) beim Senden der dritten Nachricht über den gespeicherten spezifischen Wert informiert.

25. Netzwerk-Verwaltungsverfahren nach Anspruch 18, das umfasst:
einen Schritt, in dem der korrespondierende Knoten (12000) beim Erzeugen des Token, das dem Netzwerk-Präfix entspricht, das Token auf Basis einer Adresse erzeugt, die aus dem Netzwerk-Präfix und dem Host-Teil mit einem universell vorgegebenen Wert besteht;
und
einen Schritt, in dem der korrespondierende Knoten (12000) die Adresse erzeugt, die für das korrespondierende Netzwerk (11210) erreichbar ist, und die für die zweite Nachricht festgelegt wird, indem der universell vorgegebene Wert als ein Host-Teil zu dem Netzwerk-Präfix hinzugefügt wird, das dem korrespondierenden Netzwerk entspricht.

26. Netzwerk-Verwaltungsverfahren nach Anspruch 18, wobei der korrespondierende Router (11200) beim Erzeugen der Prüfsumme die Prüfsumme auf Basis eines HoK-Token in einer HoT-Nachricht (204) einer Return-Routability-Prozedur zusätzlich zu dem Token in der zweiten Nachricht (205) erzeugt.

27. Netzwerk-Verwaltungsverfahren nach Anspruch 18, das einen Schritt umfasst, in dem der korrespondierende Knoten (12000) ein erfolgreich verifiziertes Netzwerk-Präfix an eine Adresse des korrespondierenden Routers (11200) auf Basis eines Ergebnisses der Verifizierung bindet und eine Binding-Information speichert.

28. Netzwerk-Verwaltungsverfahren nach Anspruch 18, das umfasst:
einen Schritt, in dem der korrespondierende Router (11200) eine Beziehung zwischen einer Adresse des korrespondierenden Knotens (12000) und dem bei dem korrespondierenden Knoten registrierten Netzwerk-Präfix speichert,
einen Schritt, in dem der korrespondierende Router (11200) ein von dem bestimmten Knoten in dem korrespondierenden Netzwerk (11210) zu dem korrespondierenden Knoten gesendetes Paket abfängt und unter Bezugnahme auf die Beziehung beurteilt, ob das Paket unter Verwendung einer optimierten Route weitergeleitet werden kann oder nicht; und
einen Schritt, in dem der korrespondierende Router (111) das Paket unter Verwendung der optimierten Route weiterleitet, wenn das Paket unter Verwendung einer optimierten Route weitergeleitet werden kann.

29. Netzwerk-Verwaltungsverfahren nach Anspruch 18, das umfasst:
einen Schritt, in dem der korrespondierende Router (11200) eine Beziehung zwischen einer Adresse des korrespondierenden Knotens (12000), dessen Netzwerk-Präfix nicht bei dem korrespondierenden Knoten registriert werden konnte, und den Grund für den Registrierungs-Fehler speichert;
einen Schritt, in dem der korrespondierende Router (11200) ein von dem bestimmten Knoten in dem korrespondierenden Netzwerk (11210) zu dem korrespondierenden Knoten gesendetes Paket abfängt und unter Bezugnahme auf die Beziehung beurteilt, ob das Paket unter Verwendung einer optimierten Route weitergeleitet werden kann oder nicht; und
einen Schritt, in dem der korrespondierende Router (111) unter Bezugnahme auf den Grund für den Registrierungs-Fehler in der Beziehung beurteilt, ob der korrespondierende Router die erste Nachricht erzeugt, die ein Netzwerk-Präfix bezüglich des Paketes enthält, und er die erste Nachricht zu dem korrespondierenden Knoten sendet, wenn das Paket nicht unter Verwendung einer optimierten Route weitergeleitet werden kann.

30. Netzwerk-Verwaltungsvorrichtung, die in einem ersten Knoten (11000) angeordnet ist, der in der Lage ist, wenigstens ein oder mehrere Netzwerk/e zu verwalten, wobei sie umfasst:
eine Einrichtung, mit der eine erste Nachricht (2001) erzeugt wird, die ein Netzwerk-Präfix enthält, das das Netzwerk angibt, und eine erste Nachricht zu einem zweiten Knoten (12000) gesendet wird, der sich von dem ersten Knoten (11000) unterscheidet und sich außerhalb des von dem ersten Knoten verwalteten Netzwerks befindet;
eine Einrichtung, mit der eine zweite Nachricht (2002) von dem zweiten Knoten (12000) empfangen wird, die zu einer Adresse gesendet wird, die für das Netzwerk erreichbar ist, das mit dem Netzwerk-Präfix übereinstimmt, wobei die zweite Nachricht ein Token enthält, das durch den zweiten Knoten auf Basis des Netzwerk-Präfixes in der ersten Nachricht (2001) erzeugt wird, und das Token in der zweiten Nachricht extrahiert wird;
eine Einrichtung, mit der eine Prüfsumme unter Verwendung des Token erzeugt wird; und
eine Einrichtung, mit der eine dritte Nachricht (2003) erzeugt wird, die das Netzwerk-Präfix sowie die Prüfsumme enthält, und die dritte Nachricht zu dem zweiten Knoten (12000) gesendet wird.

31. Netzwerk-Verwaltungsvorrichtung nach Anspruch 30, wobei der erste Knoten (11000) ein mobiler Router (111) ist, der ein mobiles Netzwerk (110) verwaltet, und der zweite Knoten (12000) ein korrespondierender Knoten (130) ist, der mit einem bestimmten Knoten (112) in dem mobilen Netzwerk (110) kommuniziert.

32. Netzwerkverwaltungs-Vorrichtung nach Anspruch 31, die umfasst:
eine Host-Teil-Speichereinrichtung, mit der, wenn der vorgegebene korrespondierende Knoten (130) beim Erzeugen des Token, das dem Netzwerk-Präfix entspricht, den Token auf Basis der Adresse erzeugt, die aus dem Netzwerk-Präfix sowie dem Host-Teil mit dem willkürlich erzeugten Wert besteht, und er die zweite Nachricht sendet, indem er die bei der Erzeugung des Token verwendete Adresse als die Adresse festlegt, die für das mobile Netzwerk (110) erreichbar ist, das dem Netzwerk-Präfix entspricht, der willkürlich erzeugte Wert in dem Host-Teil aus der Zieladresse der zweiten Nachricht extrahiert wird; und
eine Einrichtung, die beim Senden der dritten Nachricht den vorgegebenen korrespondierenden Knoten (130) über den in der Host-Teil-Speichereinrichtung gespeicherten willkürlich erzeugten Wert informiert.

33. Netzwerk-Verwaltungsvorrichtung nach Anspruch 31, die umfasst:
eine Einrichtung, mit der der vorgegebene korrespondierende Knoten (130) über einen spezifischen Wert informiert wird, der als ein Host-Teil verwendet wird, der zu dem Netzwerk-Präfix in der ersten Nachricht hinzugefügt wird;
eine Wert-Speichereinrichtung, mit der der spezifische Wert gespeichert wird, über den der vorgegebene korrespondierende Knoten informiert wird; und
eine Einrichtung, mit der, wenn der vorgegebene korrespondierende Knoten beim Erzeugen des Token, das dem Netzwerk-Präfix entspricht, das Token auf Basis einer Adresse erzeugt, die aus dem Netzwerk-Präfix und dem Host-Teil mit dem spezifischen Wert besteht, und er die zweite Nachricht sendet, indem er die bei der Erzeugung des Token verwendete Adresse als die Adresse festlegt, die für das mobile Netzwerk erreichbar ist, das dem Netzwerk-Präfix entspricht, der vorgegebene korrespondierende Knoten beim Senden der dritten Nachricht über den in der Wert-Speichereinrichtung gespeicherten spezifischen Wert informiert wird.

34. Netzwerk-Verwaltungsvorrichtung nach Anspruch 30, wobei der erste Knoten (11000) ein korrespondierender Router (11200) ist, der ein korrespondierendes Netzwerk (11210) verwaltet und als ein Proxy für einen bestimmten Knoten in einem korrespondierenden Netzwerk dient, und der zweite Knoten ein korrespondierender Knoten (12000) ist, der mit dem bestimmten Knoten kommuniziert.

35. Netzwerk-Verwaltungsvorrichtung nach Anspruch 34, die umfasst:
eine Host-Teil-Speichereinrichtung, mit der, wenn der vorgegebene korrespondierende Knoten (12000) beim Erzeugen des Token, der dem Netzwerk-Präfix entspricht, den Token auf Basis der Adresse erzeugt, die aus dem Netzwerk-Präfix und dem Host-Teil mit dem willkürlich erzeugten Wert besteht, und er die zweite Nachricht sendet, indem er die bei der Erzeugung des Token verwendete Adresse als die Adresse festlegt, die für das korrespondierende Netzwerk (11210) erreichbar ist, das dem Netzwerk-Präfix entspricht, der willkürlich erzeugte Wert in dem Host-Teil aus der Zieladresse der zweiten Nachricht extrahiert wird; und
eine Einrichtung, die beim Senden der dritten Nachricht den vorgegebenen korrespondierenden Knoten (12000) über den in der Host-Teil-Speichereinrichtung gespeicherten willkürlich erzeugten Wert informiert.

36. Netzwerk-Verwaltungsvorrichtung nach Anspruch 34, die umfasst:
eine Einrichtung, mit der der vorgegebene korrespondierende Knoten (12000) über einen spezifischen Wert informiert wird, der als ein Host-Teil verwendet wird, der zu dem Netzwerk-Präfix in der ersten Nachricht hinzugefügt wird;
eine Wert-Speichereinrichtung, mit der der spezifische Wert gespeichert wird, über den der vorgegebene korrespondierende Knoten informiert wird; und
eine Einrichtung, mit der, wenn der vorgegebene korrespondierende Knoten beim Erzeugen des Token, das dem Netzwerk-Präfix entspricht, das Token auf Basis einer Adresse erzeugt, die aus dem Netzwerk-Präfix und dem Host-Teil mit dem spezifischen Wert besteht, und er die zweite Nachricht sendet, indem er die bei der Erzeugung des Token verwendete Adresse als die Adresse festlegt, die für das korrespondierende Netzwerk (11210) erreichbar ist, das dem Netzwerk-Präfix entspricht, der vorgegebene korrespondierende Knoten beim Senden der dritten Nachricht über den in der Wert-Speichereinrichtung gespeicherten spezifischen Wert informiert wird.

37. Netzwerk-Verwaltungsvorrichtung, die in einem Knoten angeordnet ist, der in der Lage ist, mit einem ersten Knoten (11000) zu kommunizieren, der wenigstens ein oder mehrere Netzwerk/e verwaltet, wobei der Knoten ein zweiter Knoten (12000) ist und sich außerhalb des von dem ersten Knoten verwalteten Netzwerks befindet, und die Vorrichtung umfasst:
eine Einrichtung zum Empfangen einer durch den ersten Knoten (11000) erzeugten ersten Nachricht, die ein Netzwerk-Präfix enthält, das das Netzwerk angibt;
eine Einrichtung zum Erzeugen eines Token, das dem Netzwerk-Präfix entspricht, auf Basis des Netzwerk-Präfix in der von dem ersten Knoten empfangenen ersten Nachricht (2001);
eine Einrichtung, mit der eine zweite Nachricht (2002) erzeugt wird, die das Token enthält, das dem Netzwerk-Präfix entspricht, und die zweite Nachricht zu einer Adresse gesendet wird, die für das Netzwerk erreichbar ist, das dem Netzwerk-Präfix entspricht; und
eine Einrichtung, mit der eine dritte Nachricht (2003) empfangen wird, die die von dem ersten Knoten unter Verwendung des Token erzeugte Prüfsumme sowie das Netzwerk-Präfix enthält, und die in der dritten Nachricht auf Basis des Netzwerk-Präfixes in der dritten Nachricht verifiziert wird.

38. Netzwerk-Verwaltungsvorrichtung nach Anspruch 37, die eine Einrichtung umfaßt, mit der, wenn der erste Knoten (11000) eine Vielzahl der Netzwerke verwaltet und der zweite Knoten (12000) die erste Nachricht (2001) empfängt, die einen oder mehrere Netzwerk-Präfix/e enthält, die jedem von dem einen oder den mehreren Netzwerk/en entsprechen, die zu verifizierenden Netzwerk-Präfixe aus der Vielzahl der Netzwerk-Präfixe in der ersten Nachricht ausgewählt werden.

39. Netzwerk-Verwaltungsvorrichtung nach Anspruch 38, die eine Einrichtung umfasst, mit der eine vierte Nachricht erzeugt wird, die eine Anzahl der ausgewählten Netzwerk-Präfixe enthält, und die vierte Nachricht beim Auswählen der Netzwerk-Präfixe zu dem ersten Knoten (11000) gesendet wird.

40. Netzwerk-Verwaltungsvorrichtung nach Anspruch 37, wobei der erste Knoten (11000) ein mobiler Router (111) ist, der ein mobiles Netzwerk (110) verwaltet, und der zweite Knoten (12000) ein korrespondierender Knoten (130) ist, der mit einem bestimmten Knoten (112) in dem mobilen Netzwerk (110) kommuniziert.

41. Netzwerk-Verwaltungsvorrichtung nach Anspruch 40, die umfasst:
eine Einrichtung, mit der beim Empfangen der ersten Nachricht (203) von dem mobilen Router (111), die eine Vielzahl der Netzwerk-Präfixe (522) enthält, die jedes mobile Netzwerk angeben, wenn der mobile Router (111) die Vielzahl der mobilen Netzwerke umfasst,
ein oder mehrere akzeptierte/s Netzwerk-Präfix/e von der Vielzahl der Netzwerk-Präfixe in der ersten Nachricht (203) ausgewählt werden.

42. Netzwerk-Verwaltungsvorrichtung nach Anspruch 41, die eine Einrichtung umfasst, mit der eine vierte Nachricht erzeugt wird, die eine Anzahl der ausgewählten Netzwerk-Präfixe enthält, und die vierte Nachricht zu dem mobilen Router gesendet wird.

43. Netzwerk-Verwaltungsvorrichtung nach Anspruch 40, die eine Einrichtung zum Durchführen einer Return-Routability-Prozedur umfasst, wobei eine HoT-Nachricht (204) der Return-Routability-Prozedur als die vierte Nachricht verwendet wird.

44. Netzwerk-Verwaltungsvorrichtung nach Anspruch 40, die umfasst:
eine Einrichtung, mit der ein erfolgreich verifiziertes Netzwerk-Präfix an eine Heimatadresse und eine Gastgeberadresse des mobilen Routers (111) auf Basis eines Ergebnisses der Verifizierung in der dritten Nachricht (206) gebunden wird; und
eine Einrichtung zum Speichern einer Binding-Information.

45. Netzwerk-Verwaltungsvorrichtung nach Anspruch 40, wobei die Einrichtung zum Erzeugen des Token beim Erzeugen des Token, der dem Netzwerk-Präfix entspricht, das Token auf Basis der Adresse erzeugt, die aus dem Netzwerk-Präfix und dem Host-Teil mit einem willkürlich erzeugten Wert besteht, und die Einrichtung zum Senden der zweiten Nachricht die zweite Nachricht (205) sendet, indem sie die bei der Erzeugung des Token verwendete Adresse als die Adresse festlegt, die für das mobile Netzwerk (110) erreichbar ist, das dem Netzwerk-Präfix entspricht.

46. Netzwerk-Verwaltungsvorrichtung nach Anspruch 40, wobei, wenn über einen spezifischen Wert informiert wird, der als ein Host-Teil verwendet wird, der zu dem Netzwerk-Präfix in der ersten Nachricht hinzugefügt wird, die Einrichtung zum Erzeugen des Token beim Erzeugen des Token, der dem Netzwerk-Präfix entspricht, den Token auf Basis der Adresse erzeugt, die aus dem Netzwerk-Präfix und dem Host-Teil mit dem spezifischen Wert besteht, und die Einrichtung zum Senden der zweiten Nachricht (205) die zweite Nachricht sendet, indem sie die bei der Erzeugung des Token verwendete Adresse als die Adresse festlegt, die für das mobile Netzwerk (110) erreichbar ist, das dem Netzwerk-Präfix entspricht.

47. Netzwerk-Verwaltungsvorrichtung nach Anspruch 40, wobei die Einrichtung zum Erzeugen des Token beim Erzeugen des Token, das dem Netzwerk-Präfix entspricht, das Token auf Basis der Adresse erzeugt, die aus dem Netzwerk-Präfix und dem Host-Teil mit dem universell vorgegebenen Wert besteht, und die Einrichtung zum Senden der zweiten Nachricht die zweite Nachricht (205) sendet, indem sie die bei der Erzeugung des Token verwendete Adresse als die Adresse festlegt, die für das mobile Netzwerk (110) erreichbar ist, das dem Netzwerk-Präfix entspricht.

48. Netzwerk-Verwaltungsvorrichtung nach Anspruch 37, wobei der erste Knoten (11000) ein korrespondierender Router (11200) ist, der ein korrespondierendes Netzwerk (11210) verwaltet und als ein Proxy für einen bestimmten Knoten in einem korrespondierenden Netzwerk dient, und der zweite Knoten ein korrespondierender Knoten (12000) ist, der mit dem bestimmten Knoten kommuniziert.

49. Netzwerk-Verwaltungsvorrichtung nach Anspruch 48, die umfasst:
eine Einrichtung, mit der beim Empfangen der ersten Nachricht von dem korrespondierenden Router, die eine Vielzahl der Netzwerk-Präfixe enthält, die jedes der korrespondierenden Netzwerke (11210) angeben, wenn der korrespondierende Router (11200) die Vielzahl der korrespondierenden Netzwerke umfasst, ein oder mehrere akzeptierte/s Netzwerk-Präfix/e aus der Vielzahl der Netzwerk-Präfixe in der ersten Nachricht ausgewählt wird/werden.

50. Netzwerk-Verwaltungsvorrichtung nach Anspruch 49, die eine Einrichtung umfasst, mit der eine vierte Nachricht erzeugt wird, die eine Anzahl der ausgewählten Netzwerk-Präfixe enthält, und die vierte Nachricht zu dem korrespondierenden Router (11200) gesendet wird.

51. Netzwerk-Verwaltungsvorrichtung nach Anspruch 48, die eine Einrichtung zum Durchführen einer Return-Routability-Prozedur umfasst, wobei eine HoT-Nachricht (204) der Return-Routability-Prozedur als die vierte Nachricht verwendet wird.

52. Netzwerk-Verwaltungsvorrichtung nach Anspruch 48, die umfasst:
eine Einrichtung zum Binden eines erfolgreich verifizierten Netzwerk-Präfixes an eine Adresse des korrespondierenden Routers (1200) auf Basis eines Ergebnisses der Verifizierung in der dritten Nachricht; und
eine Einrichtung zum Speichern einer Binding-Information.

53. Netzwerk-Verwaltungsvorrichtung nach Anspruch 48, wobei die Einrichtung zum Erzeugen des Token beim Erzeugen des Token, der dem Netzwerk-Präfix entspricht, das Token auf Basis der Adresse erzeugt, die aus dem Netzwerk-Präfix und dem Host-Teil mit dem universell vorgegebenen Wert besteht, und die Einrichtung zum Senden der zweiten Nachricht die zweite Nachricht sendet, indem sie die bei der Erzeugung des Token verwendete Adresse als die Adresse festlegt, die für das korrespondierende Netzwerk (11210) erreichbar ist, das dem Netzwerk-Präfix entspricht.

54. Netzwerk-Verwaltungsvorrichtung nach Anspruch 48, wobei, wenn über einen spezifischen Wert informiert wird, der als ein Host-Teil verwendet wird, der zu dem Netzwerk-Präfix in der ersten Nachricht hinzugefügt wird, die Einrichtung zum Erzeugen des Token beim Erzeugen des Token, der dem Netzwerk-Präfix entspricht, das Token auf Basis der Adresse erzeugt, die aus dem Netzwerk-Präfix und dem Host-Teil mit dem spezifischen Wert besteht, und die Einrichtung zum Senden der zweiten Nachricht die zweite Nachricht sendet, indem sie die bei der Erzeugung des Token verwendete Adresse als die Adresse festlegt, die für das korrespondierende Netzwerk (11210) erreichbar ist, das dem Netzwerk-Präfix entspricht.

55. Netzwerk-Verwaltungsvorrichtung nach Anspruch 48, wobei die Einrichtung zum Erzeugen des Token beim Erzeugen des Token, das dem Netzwerk-Präfix entspricht, das Token auf Basis der Adresse erzeugt, die aus dem Netzwerk-Präfix und dem Host-Teil mit dem universell vorgegebenen Wert besteht, und die Einrichtung zum Senden der zweiten Nachricht die zweite Nachricht sendet, indem sie die bei der Erzeugung des Token verwendete Adresse als die Adresse festlegt, die für das korrespondierende Netzwerk (11210) erreichbar ist, das dem Netzwerk-Präfix entspricht.

56. Netzwerk-Verwaltungsvorrichtung nach Anspruch 8 oder 23, wobei eine HoT-Nachricht einer Return-Routability-Prozedur als die vierte Nachricht verwendet wird.

57. Netzwerk-Verwaltungsvorrichtung nach Anspruch 5 oder 21, wobei eine HoTl-Nachricht (203) einer Return-Routability-Prozedur als die erste Nachricht verwendet wird.

58. Netzwerk-Verwaltungsvorrichtung nach Anspruch 5 oder 21, wobei eine HoT-Nachricht einer Return-Routability-Prozedur als die zweite Nachricht verwendet wird.

59. Netzwerk-Verwaltungsvorrichtung nach Anspruch 37 oder 41, die eine Einrichtung zum Durchführen einer Return-Routability-Prozedur umfasst, die so eingerichtet ist, dass sie eine HoTl-Nachricht (203) der Return-Routability-Prozedur als die erste Nachricht verwendet, und beim Erzeugen einer Prüfsumme die Prüfsumme auf Basis eines HoK-Token einer HoT-Nachricht (204) und eines CoK-Token in einer CoT-Nachricht (202) der Return-Routability-Prozedur zusätzlich zu dem Token in der zweiten Nachricht (205) erzeugt.

## Revendications

1. Procédé de gestion de réseau utilisé dans un système de communication qui comporte un premier noeud (11000) gérant un ou plusieurs réseaux et un deuxième noeud (12000) différent du premier noeud et se trouvant à l'extérieur du réseau géré par le premier noeud, pour lequel le premier noeud et le deuxième noeud sont connectés à un réseau de communication prédéterminé (10000), le procédé permettant au deuxième noeud (12000) de vérifier une information de préfixe du premier noeud (11000), comprenant :
- une étape dans laquelle le premier noeud (11000) génère un premier message (2001) comprenant un préfixe de réseau qui spécifie le réseau et envoie le premier message (2001) au deuxième noeud (12000) ;
- une étape dans laquelle le deuxième noeud (12000) génère un jeton correspondant au préfixe de réseau en fonction du préfixe de réseau du premier message (2001) reçu à partir du premier noeud (11000) ;
- une étape dans laquelle le deuxième noeud (12000) génère un deuxième message (2002) comprenant le jeton correspondant au préfixe de réseau et envoie le deuxième message (2002) à une adresse qui est accessible au réseau correspondant au préfixe de réseau ;
- une étape dans laquelle le premier noeud (11000) reçoit le deuxième message (2002) et extrait le jeton du deuxième message ;
- une étape dans laquelle le premier noeud (11000) génère une somme de contrôle en utilisant le jeton ;
- une étape dans laquelle le premier noeud (11000) génère un troisième message (2003) comprenant le préfixe de réseau et la somme de contrôle et envoie le troisième message (2003) au deuxième noeud (12000) ; et
- une étape dans laquelle le deuxième noeud (12000) reçoit le troisième message (2003) et vérifie la somme de contrôle du troisième message en fonction du préfixe de réseau du troisième message.

2. Procédé de gestion de réseau selon la revendication 1, comprenant :
- une étape dans laquelle le premier noeud (11000) sélectionne une pluralité de réseaux en tout ou en partie et génère le premier message (2001) comprenant des préfixes de réseau qui correspondent à chacun des réseaux sélectionnés lorsque le premier noeud (11000) est connecté à la pluralité de réseaux ; et
- une étape dans laquelle le deuxième noeud (12000) sélectionne les préfixes de réseau à vérifier parmi la pluralité de préfixes de réseau du premier message (2001).

3. Procédé de gestion de réseau selon la revendication 2, comprenant une étape dans laquelle le deuxième noeud (12000), qui sélectionne les préfixes de réseau, génère un quatrième message comprenant le nombre de préfixes de réseau sélectionnés et envoie le quatrième message au premier noeud (11000).

4. Procédé de gestion de réseau selon la revendication 1, comprenant une étape dans laquelle le deuxième noeud (12000) lie un préfixe de réseau vérifié avec succès à une adresse du premier noeud (11000) en fonction d'un résultat de vérification et stocke une information de liaison.

5. Procédé de gestion de réseau selon la revendication 1, pour lequel le premier noeud (11000) est un routeur mobile (111) gérant un réseau mobile (110), et le deuxième noeud (12000) est un noeud correspondant (130) qui communique avec un certain noeud (112) dudit réseau mobile (110).

6. Procédé de gestion de réseau selon la revendication 5, pour lequel un agent d'origine (120) du routeur mobile (111) est connecté au réseau de communication prédéterminé (100), et une adresse de destination ou une adresse de routage du premier message (203) et/ou du deuxième message est établie de manière à ce que le premier message (203) et/ou le deuxième message (204) soient délivrés via l'agent d'origine (120).

7. Procédé de gestion de réseau selon la revendication 5, comprenant :
- une étape dans laquelle le routeur mobile (111) génère le premier message (203) comprenant une pluralité de préfixes de réseau qui spécifient chacun des réseaux mobiles (110) lorsque le routeur mobile (111) est connecté à la pluralité de réseaux mobiles ; et
- une étape dans laquelle le noeud correspondant (130) sélectionne un ou plusieurs préfixes de réseau acceptés parmi la pluralité de préfixes de réseau du premier message (203).

8. Procédé de gestion de réseau selon la revendication 7, comprenant une étape dans laquelle le noeud correspondant (130), qui sélectionne les préfixes de réseau, génère un quatrième message comprenant le nombre de préfixes de réseau sélectionnés et envoie le quatrième message au routeur mobile (111).

9. Procédé de gestion de réseau selon la revendication 5, comprenant une étape dans laquelle le noeud correspondant (130) génère l'adresse accessible au réseau mobile (110) à établir dans le deuxième message en ajoutant une valeur générée aléatoirement en tant que partie hôte au préfixe de réseau correspondant au réseau mobile (110).

10. Procédé de gestion de réseau selon la revendication 9, comprenant une étape dans laquelle, lorsque le noeud correspondant (130), en générant le jeton correspondant au préfixe de réseau, génère le jeton en fonction de l'adresse constituée par le préfixe de réseau et la partie hôte avec la valeur générée aléatoirement et envoie le deuxième message en établissant l'adresse utilisée lors de la génération du jeton comme étant l'adresse accessible au réseau mobile (110) correspondant au préfixe de réseau, le routeur mobile (111) stocke la valeur générée aléatoirement dans la partie hôte et informe le noeud correspondant (130) de la valeur générée aléatoirement stockée en envoyant le troisième message.

11. Procédé de gestion de réseau selon la revendication 5, comprenant :
- une étape dans laquelle le routeur mobile (111) informe le noeud correspondant (130) d'une valeur spécifique utilisée en tant que partie hôte qui est ajoutée au préfixe de réseau dans le premier message (203) ; et
- une étape dans laquelle le noeud correspondant (130) génère l'adresse accessible au réseau mobile (110) et établie dans le deuxième message en ajoutant la valeur spécifique, obtenue du routeur mobile (111), en tant que partie hôte au préfixe de réseau correspondant au réseau mobile (110).

12. Procédé de gestion de réseau selon la revendication 11, comprenant :
- une étape dans laquelle le routeur mobile (111) stocke la valeur spécifique dont le routeur mobile informe le noeud correspondant (130) ;
- une étape dans laquelle, lorsque le noeud correspondant (130), en générant le jeton correspondant au préfixe de réseau, génère le jeton en fonction d'une adresse constituée par le préfixe de réseau et la partie hôte avec la valeur spécifique et envoie le deuxième message en établissant l'adresse utilisée lors de la génération du jeton comme étant l'adresse accessible au réseau mobile (110) correspondant au préfixe de réseau ;
- le routeur mobile (111) informant le noeud correspondant (130) de la valeur spécifique stockée en envoyant le troisième message.

13. Procédé de gestion de réseau selon la revendication 5, comprenant :
- une étape dans laquelle le noeud correspondant (130), en générant le jeton correspondant au préfixe de réseau, génère le jeton en fonction d'une adresse constituée par le préfixe de réseau et la partie hôte avec une valeur prédéterminée universellement ; et
- une étape dans laquelle le noeud correspondant (130) génère l'adresse accessible au réseau mobile (110) et établie dans le deuxième message en ajoutant la valeur prédéterminée universellement en tant que partie hôte au préfixe de réseau correspondant au réseau mobile (110).

14. Procédé de gestion de réseau selon la revendication 5, pour lequel le routeur mobile (111), en générant la somme de contrôle, la génère en fonction d'un jeton HoK dans un message HoT (204) et d'un jeton CoK dans un message CoT (202) d'une procédure d'acheminement de retour en plus du jeton du deuxième message (205).

15. Procédé de gestion de réseau selon la revendication 5, comprenant une étape dans laquelle le noeud correspondant lie un préfixe de réseau vérifié avec succès à une adresse d'origine et à une adresse de prise en compte du routeur mobile en fonction d'un résultat de vérification et stocke une information de liaison.

16. Procédé de gestion de réseau selon la revendication 5, comprenant :
- une étape dans laquelle le routeur mobile (111) stocke une relation entre une adresse du noeud correspondant (130) et le préfixe de réseau enregistré avec le noeud correspondant ;
- une étape dans laquelle le routeur mobile (111) intercepte un paquet envoyé à partir du certain noeud du réseau mobile (110) au noeud correspondant (130) et estime si le paquet peut être transféré ou non en utilisant une route optimisée ou en ne se référant pas à la relation ; et
- une étape dans laquelle le routeur mobile (111) transfère le paquet en utilisant la route optimisée lorsque le paquet peut être transféré en utilisant une route optimisée.

17. Procédé de gestion de réseau selon la revendication 5, comprenant :
- une étape dans laquelle le routeur mobile (111) stocke une relation parmi une adresse du noeud correspondant (130), le préfixe de réseau qui n'a pas pu être enregistré avec le noeud correspondant et la raison d'une défaillance d'enregistrement ;
- une étape dans laquelle le routeur mobile (111) intercepte un paquet envoyé à partir du certain noeud du réseau mobile (110) au noeud correspondant (130) et estime si le paquet peut être transféré ou non en utilisant une route optimisée ou en ne se référant pas à la relation ; et
- une étape dans laquelle le routeur mobile (111) estime si le routeur mobile génère ou non le premier message (203) comprenant un préfixe de réseau concernant le paquet et envoie le premier message au noeud correspondant (130) en se référant à la raison d'une défaillance d'enregistrement de la relation lorsque le paquet ne peut être transféré en utilisant une route optimisée.

18. Procédé de gestion de réseau selon la revendication 1, pour lequel le premier noeud (11000) est un routeur correspondant (11200) qui gère un réseau correspondant (11210) et sert de serveur de proximité pour un certain noeud d'un réseau correspondant, et le deuxième noeud est un noeud correspondant (12000) qui communique avec ledit certain noeud.

19. Procédé de gestion de réseau selon la revendication 18, comprenant :
- une étape dans laquelle le routeur correspondant (11200) génère le premier message comprenant une pluralité de préfixes de réseau qui spécifient chacun des réseaux correspondants lorsque le routeur correspondant (11200) sert de serveur de proximité pour la pluralité de réseaux correspondants (11210) ; et
- une étape dans laquelle le noeud correspondant (12000) sélectionne un ou plusieurs préfixes de réseau acceptés parmi la pluralité de préfixes de réseau du premier message.

20. Procédé de gestion de réseau selon la revendication 19, comprenant une étape dans laquelle le noeud correspondant (12000), qui sélectionne les préfixes de réseau, génère un quatrième message comprenant le nombre de préfixes de réseau sélectionnés et envoie le quatrième message au routeur correspondant.

21. Procédé de gestion de réseau selon la revendication 18, comprenant une étape dans laquelle le noeud correspondant (12000) génère l'adresse accessible au réseau correspondant à établir dans le deuxième message en ajoutant une valeur générée aléatoirement en tant que partie hôte au préfixe de réseau correspondant au réseau correspondant (11210).

22. Procédé de gestion de réseau selon la revendication 21, comprenant une étape dans laquelle, lorsque le noeud correspondant (12000), en générant le jeton correspondant au préfixe de réseau, génère le jeton en fonction de l'adresse constituée par le préfixe de réseau et la partie hôte avec la valeur générée aléatoirement et envoie le deuxième message en établissant l'adresse utilisée lors de la génération du jeton, comme étant l'adresse accessible au réseau (11210) correspondant au préfixe de réseau,
le routeur correspondant (11200) stocke la valeur générée aléatoirement dans la partie hôte et informe le noeud correspondant de la valeur générée aléatoirement stockée en envoyant le troisième message.

23. Procédé de gestion de réseau selon la revendication 18, comprenant :
- une étape dans laquelle le routeur correspondant (11200) informe le noeud correspondant (12000) d'une valeur spécifique utilisée comme une partie hôte qui est ajoutée au préfixe de réseau du premier message ; et
- une étape dans laquelle le noeud correspondant (12000) génère l'adresse accessible au réseau correspondant (11210) et établie dans le deuxième message en ajoutant la valeur spécifique, obtenue à partir du routeur correspondant (11200), en tant que partie hôte au préfixe de réseau correspondant au réseau correspondant.

24. Procédé de gestion de réseau selon la revendication 23, comprenant :
- une étape dans laquelle le routeur correspondant (11200) stocke la valeur spécifique dont le routeur correspondant informe le noeud correspondant (12000) ;
- une étape dans laquelle, lorsque le noeud correspondant (12000), en générant le jeton correspondant au préfixe de réseau, génère le jeton en fonction d'une adresse constituée par le préfixe de réseau et la partie hôte avec la valeur spécifique et envoie le deuxième message en établissant l'adresse utilisée lors de la génération du jeton comme étant l'adresse accessible au réseau (11210) correspondant au préfixe de réseau ;
- le routeur correspondant informant le noeud correspondant (12000) de la valeur spécifique stockée en envoyant le troisième message.

25. Procédé de gestion de réseau selon la revendication 18, comprenant :
- une étape dans laquelle le noeud correspondant (12000), en générant le jeton correspondant au préfixe de réseau, génère le jeton en fonction d'une adresse constituée par le préfixe de réseau et la partie hôte avec une valeur prédéterminée universellement ; et
- une étape dans laquelle le noeud correspondant (12000) génère l'adresse accessible au réseau correspondant (11210) et établie dans le deuxième message en ajoutant la valeur prédéterminée universellement en tant que partie hôte au préfixe de réseau correspondant au réseau correspondant.

26. Procédé de gestion de réseau selon la revendication 18, pour lequel le routeur correspondant (11200), en générant la somme de contrôle, la génère en fonction d'un jeton HoK dans un message HoT (204) d'une procédure d'acheminement de retour en plus du jeton du deuxième message (205).

27. Procédé de gestion de réseau selon la revendication 18, comprenant une étape dans laquelle le noeud correspondant (12000) lie un préfixe de réseau vérifié avec succès à une adresse du routeur correspondant (11200) en fonction d'un résultat de vérification et stocke une information de liaison.

28. Procédé de gestion de réseau selon la revendication 18, comprenant :
- une étape dans laquelle le routeur correspondant (11200) stocke une relation entre une adresse du noeud correspondant (12000) et le préfixe de réseau enregistré avec le noeud correspondant ;
- une étape dans laquelle le routeur correspondant (11200) intercepte un paquet envoyé à partir du certain noeud du réseau correspondant (11210) au noeud correspondant et estime si le paquet peut être transféré ou non en utilisant une route optimisée ou en ne se référant pas à la relation ; et
- une étape dans laquelle le routeur correspondant (11200) transfère le paquet en utilisant la route optimisée lorsque le paquet peut être transféré en utilisant une route optimisée.

29. Procédé de gestion de réseau selon la revendication 18, comprenant :
- une étape dans laquelle le routeur correspondant (11200) stocke une relation parmi une adresse du noeud correspondant (12000), le préfixe de réseau qui n'a pas pu être enregistré avec le noeud correspondant et la raison d'une défaillance d'enregistrement ;
- une étape dans laquelle le routeur correspondant (11200) intercepte un paquet envoyé à partir du certain noeud du réseau correspondant (11210) au noeud correspondant et estime si le paquet peut être transféré ou non en utilisant une route optimisée ou en ne se référant pas à la relation ; et
- une étape dans laquelle le routeur correspondant (11200) estime si le routeur correspondant génère ou non le premier message comprenant un préfixe de réseau concernant le paquet et envoie le premier message au noeud correspondant (130) en se référant à la raison d'une défaillance d'enregistrement de la relation lorsque le paquet ne peut être transféré en utilisant une route optimisée.

30. Appareil de gestion de réseau agencé dans un premier noeud (11000) capable de gérer un ou plusieurs réseaux, comprenant :
- un moyen pour générer un premier message (2001) comprenant un préfixe de réseau qui spécifie le réseau et pour envoyer un premier message à un deuxième noeud (12000) différent du premier noeud (11000) et se trouvant à l'extérieur du réseau géré par le premier noeud ;
- un moyen pour recevoir à partir du deuxième noeud (12000) un deuxième message (2002) envoyé à une adresse accessible au réseau correspondant au préfixe de réseau, le deuxième message comprenant un jeton généré par le deuxième noeud en fonction du préfixe de réseau du premier message (2001), et pour extraire le jeton du deuxième message ;
- un moyen pour générer une somme de contrôle en utilisant le jeton ; et
- un moyen pour générer un troisième message (2003) comprenant le préfixe de réseau et la somme de contrôle et pour envoyer le troisième message au deuxième noeud (12000).

31. Appareil de gestion de réseau selon la revendication 30, dans lequel le premier noeud (11000) est un routeur mobile (111) gérant un réseau mobile (110), et le deuxième noeud (12000) est un noeud correspondant (130) qui communique avec un certain noeud (112) dudit réseau mobile (110).

32. Appareil de gestion de réseau selon la revendication 31, comprenant :
- un moyen de stockage de partie hôte qui, lorsque le noeud correspondant prédéterminé (130), en générant le jeton correspondant au préfixe de réseau, génère le jeton en fonction de l'adresse constituée par le préfixe de réseau et la partie hôte avec la valeur générée aléatoirement, et envoie le deuxième message en établissant l'adresse utilisée lors de la génération du jeton comme étant l'adresse accessible au réseau mobile (110) correspondant au préfixe de réseau, pour extraire la valeur générée aléatoirement dans la partie hôte à partir de l'adresse de destination du deuxième message ; et
- un moyen pour informer le noeud correspondant prédéterminé (130) de la valeur générée aléatoirement stockée dans le moyen de stockage de partie hôte en envoyant le troisième message.

33. Appareil de gestion de réseau selon la revendication 31, comprenant :
- un moyen pour informer le noeud correspondant prédéterminé (130) d'une valeur spécifique utilisée comme partie hôte qui est ajoutée au préfixe de réseau du premier message ;
- un moyen de stockage de valeur pour stocker la valeur spécifique obtenue par le noeud correspondant prédéterminé ; et
- un moyen qui, lorsque le noeud correspondant prédéterminé, en générant le jeton correspondant au préfixe de réseau, génère le jeton en fonction d'une adresse constituée par le préfixe de réseau et la partie hôte avec la valeur spécifique, et envoie le deuxième message en établissant l'adresse utilisée lors de la génération du jeton comme étant l'adresse accessible au réseau mobile correspondant au préfixe de réseau, pour informer le noeud correspondant prédéterminé de la valeur spécifique stockée dans le moyen de stockage de valeur, en envoyant le troisième message.

34. Appareil de gestion de réseau selon la revendication 30, dans lequel le premier noeud (11000) est un routeur correspondant (11200) qui gère un réseau correspondant (11210) et sert de serveur de proximité pour un certain noeud d'un réseau correspondant, et le deuxième noeud est un noeud correspondant (12000) qui communique avec ledit certain noeud.

35. Appareil de gestion de réseau selon la revendication 34, comprenant :
- un moyen de stockage de partie hôte qui, lorsque le noeud correspondant prédéterminé (12000), en générant le jeton correspondant au préfixe de réseau, génère le jeton en fonction de l'adresse constituée par le préfixe de réseau et la partie hôte avec la valeur générée aléatoirement, et envoie le deuxième message en établissant l'adresse utilisée lors de la génération du jeton comme étant l'adresse accessible au réseau (11210) correspondant au préfixe de réseau, pour extraire la valeur générée aléatoirement dans la partie hôte à partir de l'adresse de destination du deuxième message ; et
- un moyen pour informer le noeud correspondant prédéterminé (12000) de la valeur générée aléatoirement stockée dans le moyen de stockage de partie hôte en envoyant le troisième message.

36. Appareil de gestion de réseau selon la revendication 34, comprenant :
- un moyen pour informer le noeud correspondant prédéterminé (12000) d'une valeur spécifique utilisée comme une partie hôte qui est ajoutée au préfixe de réseau du premier message ; et
- un moyen de stockage de valeur pour stocker la valeur spécifique obtenue par le noeud correspondant prédéterminé ;
- un moyen qui, lorsque le noeud correspondant prédéterminé, en générant le jeton correspondant au préfixe de réseau, génère le jeton en fonction d'une adresse constituée par le préfixe de réseau et la partie hôte avec la valeur spécifique, et envoie le deuxième message en établissant l'adresse utilisée lors de la génération du jeton comme étant l'adresse accessible au réseau (11210) correspondant au préfixe de réseau, pour informer le noeud correspondant prédéterminé de la valeur spécifique stockée dans le moyen de stockage de valeur, en envoyant le troisième message.

37. Appareil de gestion de réseau agencé dans un noeud capable de communiquer avec un premier noeud (11000) gérant un ou plusieurs réseaux, le noeud étant un deuxième noeud (12000) situé à l'extérieur du réseau géré par le premier noeud, comprenant :
- un moyen pour recevoir un premier message généré par le premier noeud (11000), comprenant un préfixe de réseau qui spécifie le réseau ;
- un moyen pour générer un jeton correspondant au préfixe de réseau en fonction du préfixe de réseau du premier message (2001) reçu à partir du premier noeud ;
- un moyen pour générer un deuxième message (2002) comprenant le jeton correspondant au préfixe de réseau, et pour envoyer le deuxième message à une adresse accessible au réseau correspondant au préfixe de réseau, et
- un moyen pour recevoir un troisième message (2003) comprenant la somme de contrôle générée par le premier noeud en utilisant le jeton et le préfixe de réseau, et pour vérifier la somme de contrôle du troisième message en fonction du préfixe de réseau du troisième message.

38. Appareil de gestion de réseau selon la revendication 37, comprenant un moyen, lorsque le premier noeud (11000) gère une pluralité de réseaux et que le deuxième noeud (12000) reçoit le premier message (2001) comprenant un ou plusieurs préfixes de réseau correspondant à chacun de l'un ou plusieurs réseaux, pour sélectionner les préfixes de réseau à vérifier parmi la pluralité de préfixes de réseau du premier message.

39. Appareil de gestion de réseau selon la revendication 38, comprenant un moyen pour générer un quatrième message comprenant le nombre de préfixes de réseau sélectionnés et pour envoyer le quatrième message au premier noeud (11000) en sélectionnant les préfixes de réseau.

40. Appareil de gestion de réseau selon la revendication 37, dans lequel le premier noeud (11000) est un routeur mobile (111) gérant un réseau mobile (110), et le deuxième noeud (12000) est un noeud correspondant (130) qui communique avec un certain noeud (112) dudit réseau mobile.

41. Appareil de gestion de réseau selon la revendication 40, comprenant :
un moyen, en recevant du routeur mobile (111) le premier message (203) comprenant une pluralité de préfixes de réseau (522) qui spécifient chacun des réseaux mobiles, lorsque le routeur mobile (111) est connecté à la pluralité des réseaux mobiles, pour sélectionner un ou plusieurs préfixes de réseau acceptés parmi la pluralité de préfixes de réseau du premier message (203).

42. Appareil de gestion de réseau selon la revendication 41, comprenant un moyen pour générer un quatrième message comprenant le nombre de préfixes de réseau sélectionnés et pour envoyer le quatrième message au routeur mobile.

43. Appareil de gestion de réseau selon la revendication 40, comprenant un moyen pour mettre en oeuvre une procédure d'acheminement de retour, dans lequel un message HoT (204) de la procédure d'acheminement de retour est utilisé comme le quatrième message.

44. Appareil de gestion de réseau selon la revendication 40, comprenant :
- un moyen pour lier un préfixe de réseau vérifié avec succès à une adresse d'origine et une adresse de prise en compte du routeur mobile (111) en fonction d'un résultat de vérification dans le troisième message (206) ; et
- un moyen pour stocker une information de liaison.

45. Appareil de gestion de réseau selon la revendication 40, dans lequel le moyen pour générer le jeton, en générant le jeton correspondant au préfixe de réseau, génère le jeton en fonction de l'adresse constituée par le préfixe de réseau et la partie hôte avec une valeur générée aléatoirement, et le moyen pour envoyer le deuxième message envoie le deuxième message (205) en établissant l'adresse utilisée lors de la génération du jeton comme étant l'adresse accessible au réseau mobile (110) correspondant au préfixe de réseau.

46. Appareil de gestion de réseau selon la revendication 40, dans lequel, lorsqu'une valeur spécifique utilisée comme une partie hôte qui est ajoutée au préfixe de réseau du premier message est obtenue, le moyen pour générer le jeton, en générant le jeton correspondant au préfixe de réseau, génère le jeton en fonction de l'adresse constituée par le préfixe de réseau et la partie hôte avec la valeur spécifique, et le moyen pour envoyer le deuxième message (205) envoie le deuxième message en établissant l'adresse utilisée lors de la génération du jeton comme étant l'adresse accessible au réseau mobile (110) correspondant au préfixe de réseau.

47. Appareil de gestion de réseau selon la revendication 40, dans lequel le moyen pour générer le jeton, en générant le jeton correspondant au préfixe de réseau, génère le jeton en fonction de l'adresse constituée par le préfixe de réseau et la partie hôte avec la valeur prédéterminée universellement, et le moyen pour envoyer le deuxième message (205) envoie le deuxième message en établissant l'adresse utilisée lors de la génération du jeton comme étant l'adresse accessible au réseau mobile (110) correspondant au préfixe de réseau.

48. Appareil de gestion de réseau selon la revendication 37, dans lequel le premier noeud (11000) est un routeur correspondant (11200) qui gère un réseau correspondant (11210) et sert de serveur de proximité pour un certain noeud d'un réseau correspondant, et le deuxième noeud est un noeud correspondant (12000) qui communique avec ledit certain noeud.

49. Appareil de gestion de réseau selon la revendication 48, comprenant :
un moyen, en recevant du routeur correspondant le premier message comprenant une pluralité de préfixes de réseau qui spécifient chacun des réseaux correspondants (11210), lorsque le routeur correspondant (11200) est connecté à la pluralité de réseaux correspondants, pour sélectionner un ou plusieurs préfixes de réseau acceptés parmi la pluralité de préfixes de réseau du premier message.

50. Appareil de gestion de réseau selon la revendication 49, comprenant un moyen pour générer un quatrième message comprenant le nombre de préfixes de réseau sélectionnés et pour envoyer le quatrième message au routeur correspondant (11200).

51. Appareil de gestion de réseau selon la revendication 48, comprenant un moyen pour mettre en oeuvre une procédure d'acheminement de retour, dans lequel un message HoT de la procédure d'acheminement de retour est utilisé comme le quatrième message.

52. Appareil de gestion de réseau selon la revendication 48, comprenant :
- un moyen pour lier un préfixe de réseau vérifié avec succès à une adresse du routeur correspondant (11200) en fonction d'un résultat de vérification dans le troisième message ; et
- un moyen pour stocker une information de liaison.

53. Appareil de gestion de réseau selon la revendication 48, dans lequel le moyen pour générer le jeton, en générant le jeton correspondant au préfixe de réseau, génère le jeton en fonction de l'adresse constituée par le préfixe de réseau et la partie hôte avec une valeur générée aléatoirement, et le moyen pour envoyer le deuxième message envoie le deuxième message en établissant l'adresse utilisée lors de la génération du jeton comme étant l'adresse accessible au réseau (11210) correspondant au préfixe de réseau.

54. Appareil de gestion de réseau selon la revendication 48, dans lequel, lorsqu'une valeur spécifique utilisée comme une partie hôte qui est ajoutée au préfixe de réseau du premier message est obtenue, le moyen pour générer le jeton, en générant le jeton correspondant au préfixe de réseau, génère le jeton en fonction de l'adresse constituée par le préfixe de réseau et la partie hôte avec la valeur spécifique, et le moyen pour envoyer le deuxième message envoie le deuxième message en établissant l'adresse utilisée lors de la génération du jeton comme étant l'adresse accessible au réseau (11210) correspondant au préfixe de réseau.

55. Appareil de gestion de réseau selon la revendication 48, dans lequel le moyen pour générer le jeton, en générant le jeton correspondant au préfixe de réseau, génère le jeton en fonction de l'adresse constituée par le préfixe de réseau et la partie hôte avec la valeur prédéterminée universellement, et le moyen pour envoyer le deuxième message envoie le deuxième message en établissant l'adresse utilisée lors de la génération du jeton comme étant l'adresse accessible au réseau (11210) correspondant au préfixe de réseau.

56. Procédé de gestion de réseau selon la revendication 8 ou 23, dans lequel un message HoT d'une procédure d'acheminement de retour est utilisé comme le quatrième message.

57. Procédé de gestion de réseau selon la revendication 5 ou 21, dans lequel un message HoTI (203) d'une procédure d'acheminement de retour est utilisé comme le premier message.

58. Procédé de gestion de réseau selon la revendication 5 ou 21, dans lequel un message HoT d'une procédure d'acheminement de retour est utilisé comme le deuxième message.

59. Appareil de gestion de réseau selon la revendication 37 ou 41, comprenant un moyen pour mettre en oeuvre une procédure d'acheminement de retour, agencé pour utiliser un message HOTI (203) de la procédure d'acheminement de retour comme le premier message et, lors de la génération de la somme de contrôle, générer la somme de contrôle en fonction d'un jeton HoK dans un message HoT (204) et un jeton CoK dans un message CoT (202) de la procédure d'acheminement de retour en plus du jeton du deuxième message (205).
